# EUROPEAN PATENT SPECIFICATION

(11) **EP 4 036 561 B1**
(45) Date of publication and mention of the grant of the patent: **23.10.2024**
(21) Application number: 20867472.1
(22) Date of filing: 02.09.2020
(51) Int. Cl.: G06N 3/09, G06N 3/045, G06N 3/084, G06V 10/774, G06V 10/82, G06N 3/047

(54) **DATA GENERATION SYSTEM, LEARNING DEVICE, DATA GENERATION DEVICE, DATA GENERATION METHOD, AND DATA GENERATION PROGRAM**
DATENERZEUGUNGSSYSTEM, LERNVORRICHTUNG, DATENERZEUGUNGSVORRICHTUNG, DATENERZEUGUNGSVERFAHREN UND DATENERZEUGUNGSPROGRAMM
SYSTÈME DE GÉNÉRATION DE DONNÉES, DISPOSITIF D'APPRENTISSAGE, DISPOSITIF DE GÉNÉRATION DE DONNÉES, PROCÉDÉ DE GÉNÉRATION DE DONNÉES ET PROGRAMME DE GÉNÉRATION DE DONNÉES

(30) Priority: 27.09.2019 JP 2019178001
(43) Date of publication of application: 03.08.2022
(73) Proprietor: OMRON Corporation, Shiokoji-dori, Shimogyo-ku Kyoto-shi Kyoto 600-8530 (JP)
(72) Inventor: OKAMOTO, Yamato, Tokyo 108-0075 (JP); YONETANI, Ryo, Tokyo 113-0033 (JP); NAKATA, Masahiro, Kyoto-shi, Kyoto 600-8530 (JP); MIYATA, Yoshiaki, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2020/033311
(87) International publication number: WO 2021/059909

(56) References cited:
- US-A1- 2018 293 734
- US-A1- 2018 293 734
- TRIPATHI SHASHANK ET AL: "Learning to Generate Synthetic Data via Compositing", 2019 IEEE/CVF CONFERENCE ON COMPUTER VISION AND PATTERN RECOGNITION (CVPR), IEEE, 15 June 2019 (2019-06-15), pages 461 - 470, XP033686642, DOI: 10.1109/CVPR.2019.00055
- TRIPATHI, SHASHANK,: "Learning to generate synthetic data via compositing", PROCEEDINGS OF THE IEEE CONFERENCE ON COMPUTER VISION AND PATTERN RECOGNITION, 20 June 2019 (2019-06-20), pages 461 - 470, XP033686642, DOI: 10.1109/CVPR.2019.00055
- MARIANI, GIOVANNI, FLORIAN SCHEIDEGGER; ROXANA ISTRATE; COSTAS BEKAS; CRISTIANO MALOSSI: "BAGAN: Data Augmentation with Balancing GAN", 5 June 2018 (2018-06-05), XP080859233, Retrieved from the Internet <URL:https://arxiv.org/pdf/1803.09655.pdf> [retrieved on 20201126]
- JADERBERG, MAX, KAREN SIMONYAN; ANDREW ZISSERMAN; KORAY KAVUKCUOGLU: "Spatial transformer networks", ADVANCES IN NEURAL INFORMATION PROCESSING SYSTEMS, 2015, XP055406872
- LEE, D. ET AL.: "Context-aware synthesis and placement of object instances", ADVANCES IN NEURAL INFORMATION PROCESSING SYSTEMS, December 2018 (2018-12-01), XP080989728
- BRAHAM, MARC; VAN DROOGENBROECK MARC: "Deep background subtraction with scene-specific convolutional neural networks", 2016 INTERNATIONAL CONFERENCE ON SYSTEMS, SIGNALS AND IMAGE PROCESSING (IWSSIP, May 2016 (2016-05-01), XP032918507, DOI: 10.1109/IWSSIP.2016.7502717

## Description

### FIELD

The present invention relates to a data generation system, a data generation method, and a data generation computer program.

### BACKGROUND

A known technique for inspecting the quality of products based on data about images of the products captured with an image capturing device is used in manufacturing products on a production line or at other sites. For example, Patent Literature 1 describes a visual inspection apparatus that performs visual inspection of an inspection object by capturing images of the appearance of the inspection object while moving a light source with an articulated robot to irradiate the inspection object with inspection light from the light source and analyzing the obtained images. For example, Patent Literature 2 describes an inspection apparatus that uses a trained first neural network to determine whether an inspection object in an image is normal or abnormal and uses a trained second neural network to classify the type of abnormality in response to determining that the inspection object is abnormal. An approach to synthetic data generation is known from "Learning to Generate Synthetic Data via Compositing", Shashank Tripathi et al., 2019 IEEE/CVF Conference on Computer Vision and Pattern Recognition (CVPR), June 15, 2019. A visual anomaly detection system is known from US 2018 / 293 734 A1, wherein the system is configured to analyze images by using one or more neural networks.

### CITATION LIST

### PATENT LITERATURE

Patent Literature 1: JP 2019-045330 A
Patent Literature 2: JP 2012-026982 A
Patent Literature 3: JP 2018-175343 A
Patent Literature 4: JP 2019-071050 A
Patent Literature 5: JP 2018-024340 A
Patent Literature 6: JP 2018-189522 A

### SUMMARY

### TECHNICAL PROBLEM

The known method uses an image obtained through image capturing for visual inspection of a product. A method using a machine learning model such as a neural network as in Patent Literature 2 uses outputs from a trained machine learning model to perform visual inspection of a product without detailed definition of image processing on an obtained image (e.g., without setting detection parameters for detecting defects). This simplifies the information processing of the visual inspection and reduces the burden of creating an inspection program. However, the inventors of the present invention have noticed that such known inspection methods have issues described below.

To perform visual inspection based on captured images, images of products including defects are collected in advance as learning data. For detecting defects with image processing, the collected learning data is used to set detection parameter values for detecting defects. For detecting defects with a machine learning model, the collected learning data is used for machine learning to train a machine learning model to detect defects in a received image. Detection of defects may be identification of the types of defects. The accuracy of visual inspection can be typically improved by the collected learning data that varies more widely, or more specifically, by the learning data that includes more widely varying defects.

However, as the types of defect and the types of background including the product appearance increase, more combinations of defect types and background types are available, thus increasing the number (and types) of samples to be collected as learning data. Collecting samples of various combinations of defect types and background types is costly.

A combination for which no sample is obtained may cause the inconvenience described below. Defect detection with image processing has difficulties in setting detection parameter values on a combination of the defect type and the background type for which no sample is obtained, and may thus lower the accuracy of detecting the defect indicated in the combination. Similarly, defect detection using a machine learning model may not reflect a combination of the defect type and the background type for which no sample is obtained on machine learning, and may thus lower the accuracy of estimation for the defect detection for the combination using a trained machine learning model.

The defect detection using a machine learning model may also cause the inconvenience described below. When combinations of defect types and background types in the samples are imbalanced, or particularly when the defect types and background types are similarly distributed in the samples, the imbalance of the samples may adversely affect the training performance of a machine learning model through machine learning. Such imbalanced combinations of defect types and background types in the samples may train, for example, the machine learning model through machine learning using the samples to identify the background type, instead of detecting defects depending on the types.

For example, two defects including a first defect and a second defect may occur in two types of products including a first product and a second product. In this example, the first defect is more likely to occur in the first product, and the second defect is more likely to occur in the second product. The obtained samples include imbalanced images, or more specifically, images of the first product including the first defect and images of the second product including the second defect. In other words, the obtained samples for machine learning lack images of the first product including the second defect and images of the second product including the first defect. Using the samples obtained in this case, a machine learning model is trained through machine learning to detect defects depending on the types. In this case, the imbalance of the obtained samples may train the machine learning model through the machine learning to identify the background type, instead of detecting defects depending on the types. More specifically, the imbalance of the samples may train the machine learning model to obtain unintended capability. The machine learning model trained to identify the background type may erroneously detect the first defect occurring in the first product when receiving an image of the first product including the second defect.

In either situation, the visual inspection performed on any combination for which no sample is obtained may have lower accuracy (or a failure in a worst case). To improve the accuracy of visual inspection, samples are to be collected thoroughly from all the combinations of defect types and background types. However, as described above, such thorough collection of samples is costly. In particular, more defect types and more background types increase specific combinations of rare defect types and background types, thus greatly increasing the costs for thoroughly collecting the samples.

This can occur in, in addition to visual inspection of products based on captured images, any situations for collecting various samples of a predetermined type of data including at least two features. In addition to the image data, examples of the predetermined types of data include sound data, numerical data, text data, and measurement data obtained with sensors. In addition to visual inspection of products based on captured images, examples of situations for collecting samples of a predetermined type of data including multiple features include estimating the state of a patient based on a medical image of organs, estimating the attribute of a movable body in a captured image, estimating the driving state of a vehicle based on measurement data obtained with an in-vehicle sensor, and estimating the state of a machine based on measurement data obtained with a sensor observing the machine state. Examples of the movable body include pedestrians and vehicles. Examples of the attributes of the movable body include the movement state (such as the speed or route) of the movable body and the density of the movable bodies (such as the degree of congestion).

More specifically, Patent Literature 3 describes detection of a lesion area based on medical images with two estimators. Patent Literature 4 describes estimation of density distribution and movement vector distribution of a person in a captured image based on the captured image with a trained neural network. Patent Literature 5 describes determination of a driver's driving behavior based on measurement data of acceleration measured while the driver is driving a vehicle. Patent Literature 6 describes a method for determining signs of defects of installations using measurement data about at least either voice or vibrations.

In either situation, estimation may be performed with lower accuracy using learning data including any combination of feature types for which no sample is obtained. To improve the accuracy of visual inspection, samples are to be collected thoroughly for all the combinations of the feature types. However, such thorough collection of samples is costly.

In response to the above issue, one or more aspects of the present invention are directed to a technique for reducing the costs for collecting various samples of a predetermined type of data including at least two features.

### SOLUTION TO PROBLEM

The system, method, and computer program according to the present invention have the structures described below.

A data generation system according to the present invention has the features of claim 1.

The data generation system with the above structure trains a first generator through machine learning using multiple first learning datasets to generate, from a first label, a pseudo sample fitting a first sample including a first feature. The data generation system trains a second generator through machine learning using multiple second learning datasets to generate, from a second label, a pseudo sample fitting a second sample including a second feature. Through each process of machine learning, the first generator is trained to generate a pseudo sample including a first feature of the type corresponding to the received input value, and the second generator is trained to generate a pseudo sample including a second feature of the type corresponding to the received input value. The data generation system with the above structure generates the first pseudo sample and the second pseudo sample using the first and second generators and synthesizes the generated first and second pseudo samples to generate a new sample of a predetermined type of data.

The data generation system with the above structure can thus control the types of the first feature and the second feature included in the generated new sample based on inputs provided to the trained first and second generators. In other words, the data generation system can generate a new sample including the first feature and the second feature of any selected combination of types using the trained first and second generators. When no sample or an insufficient number of samples are available for any combination of types of the first and second features, the data generation system can generate a new sample including the first feature and the second feature of the combination of the types as appropriate. Further, the data generation system can automatically perform a large portion of the processing of generating a new sample including the first feature and the second feature using the trained first and second generators. The data generation system with the above structure can thus automatically generate samples of various combinations as appropriate, thus reducing the costs for collecting various samples of a predetermined type of data including at least two features.

The first feature and the second feature may be selected as appropriate in each embodiment. For example, the first feature and the second feature may include components (elements) directly or indirectly appearing in data. The features directly appearing include the features directly appearing in image data. The features indirectly appearing include the features derived from image data. At least one of the first feature or the second feature may include a component to undergo any estimation process. Estimation may be referred to as inference. Estimation may include prediction. For example, estimation may be either derivation of a discrete value (e.g., a class corresponding to a specific feature) through grouping (classification or discrimination) or derivation of a set of continuous values (e.g., probability of appearance of a specific feature) through regression. Estimation may include any acknowledgement such as detection or determination based on the result of the grouping or regression. A predetermined type of data may include multiple types of data such as video data including sound data. In this case, each of the first feature and the second feature may include at least one of the multiple types of data.

The first and second generators each include a machine learning model. The machine learning model of each generator generates a pseudo sample, which models each sample of data, in response to an input of an input value corresponding to each label. The pseudo sample indicates a sample generated by each generator. The type of machine learning model of each generator may be selected as appropriate in each embodiment. For example, a neural network may be used as the machine learning model of each generator. The type of neural network may be selected as appropriate in each embodiment. The synthesized parameters and input values input into each generator may be manually determined or automatically determined in, for example, a random manner. The first and second samples used for training the first and second generators may be obtained from a real world, or artificially generated through, for example, simulation or a manual operation.

In the data generation system according to the above aspect, the predetermined type of data may include a first component and a second component different from the first component. The second component may undergo predetermined estimation. The first feature may include the first component. The second feature may include the second component. The above structure can increase the estimation accuracy by reflecting various samples collected at low costs on predetermined estimation.

In the data generation system according to the above aspect, the first learning model may further include a first discriminator. The training the first generator may include alternately performing training the first discriminator to discriminate whether an input sample input into the first discriminator is the first sample obtained from a first learning dataset of the plurality of first learning datasets or the pseudo sample generated by the first generator and training the first generator to generate the pseudo sample to lower discrimination performance of the first discriminator.

In the above structure, the first discriminator and the first generator are alternately trained to improve the discrimination performance of the first discriminator, and accordingly improve the performance of the first generator generating a pseudo sample fitting the first sample. Thus, the above structure can build the first generator trained to generate an appropriate pseudo sample including the first feature, reducing the costs for collecting various appropriate samples.

In the data generation system according to the above aspect, the second learning model may further include a second discriminator. The training the second generator may include alternately performing training the second discriminator to discriminate whether an input sample input into the second discriminator is the second sample obtained from a second learning dataset of the plurality of second learning datasets or the pseudo sample generated by the second generator and training the second generator to generate the pseudo sample to lower discrimination performance of the second discriminator.

In the above structure, the second discriminator and the second generator are alternately trained to improve the discrimination performance of the second discriminator, and accordingly improve the performance of the second generator generating a pseudo sample fitting the second sample. Thus, the above structure can build the second generator trained to generate an appropriate pseudo sample including the second feature, reducing the costs for collecting various appropriate samples.

The data generation system according to the above aspect may further include a third obtainer that obtains a plurality of third learning datasets each including a combination of a sample value of an attribute of the second feature, a reflection degree of the second feature, and the second label and a third trainer that trains a third learning model including a third generator through machine learning using the obtained plurality of third learning datasets. The training the third learning model through machine learning may include training the third generator to generate, from the reflection degree and the second label, a pseudo value of the attribute of the second feature fitting the sample value for each of the plurality of third learning datasets. The synthesizing may include generating a pseudo value of the attribute of the second feature by providing, to the trained third generator, a second input value corresponding to the second label and a third input value corresponding to the reflection degree, and converting the second pseudo sample to allow a value of the attribute of the second feature included in the second pseudo sample to fit the generated pseudo value and synthesizing the second pseudo sample with the first pseudo sample.

The above structure trains, through machine learning using multiple third learning sets, the third generator to generate a pseudo value fitting the sample value of the second feature attribute from the reflection degree and the second label. Through the machine learning, the third generator is trained to generate a pseudo value of the second feature attribute corresponding to the received input. Thus, the above structure can control the second feature attribute value included in the generated new sample based on the input provided to the trained third generator. More specifically, the trained third generator can generate a new sample including a second feature including any attribute value as appropriate. Thus, the above structure can generate various samples of a predetermined type of data including at least two features. The attribute includes, for example, classification or the degree of a characteristic of the feature such as size, (temporal or spatial) position, brightness, amplitude, or (temporal or spatial) frequency.

The data generation system according to the above aspect may further include a third obtainer that obtains a plurality of third learning datasets each including a combination of a sample value of an attribute of the second feature, a reflection degree of the second feature, and the second label and a third trainer that trains a third learning model including a third generator through machine learning using the obtained plurality of third learning datasets. The training the third learning model through machine learning may include training the third generator to generate, from the reflection degree and the second label, a pseudo value of the attribute of the second feature fitting the sample value for each of the plurality of third learning datasets. The predetermined type of data may include a first component and a second component different from the first component. The second component may undergo predetermined estimation. The first feature may include the first component. The second feature may include the second component. The predetermined estimation may include detecting the second component. The synthesizing may include generating a pseudo value of the attribute of the second feature by providing, to the trained third generator, a second input value corresponding to the second label and a third input value corresponding to the reflection degree and provided in accordance with a limit of the detection, and converting the second pseudo sample to allow a value of the attribute of the second feature included in the second pseudo sample to fit the generated pseudo value and synthesizing the second pseudo sample with the first pseudo sample. The above structure can generate various samples of a predetermined type of data including at least two features corresponding to situations having a detection limit. Further, the above structure can increase the estimation accuracy by reflecting the generated various samples on predetermined estimation.

In the data generation system according to the above aspect, the third learning model may further include a third discriminator. The training the third generator may include alternately performing training the third discriminator to discriminate whether an input value input into the third discriminator is the sample value obtained from a third learning dataset of the plurality of third learning datasets or the pseudo value generated by the third generator and training the third generator to generate the pseudo value of the attribute of the second feature to lower discrimination performance of the third discriminator.

In the above structure, the third discriminator and the third generator are alternately trained to improve the discrimination performance of the third discriminator, and accordingly improve the performance of the third generator generating a pseudo value fitting the sample value of the second feature attribute. Thus, the above structure can build the third generator trained to generate an appropriate pseudo value of the second feature attribute, reducing the costs for collecting various appropriate samples.

In the data generation system according to the above aspect, each of the plurality of third learning datasets may further include the first label. The training the third leaning model through machine learning may include training the third generator to generate, from the reflection degree, the second label, and the first label, a pseudo value of the attribute of the second feature fitting the sample value.

The above structure trains the third generator to generate a pseudo value of the second feature attribute corresponding further to the type of the first feature indicated with the first label. Thus, the trained third generator can control the second feature attribute value in accordance with the type of the first feature. More specifically, the trained third generator can generate, as appropriate, a new sample including a second feature including an attribute value appropriate for the type of the first feature. Thus, the above structure can generate various appropriate samples of a predetermined type of data including at least two features.

In the data generation system according to the above aspect, the reflection degree may include a set of continuous values. The above structure can control the second feature attribute value with a set of continuous values and generate various samples of a predetermined type of data including at least two features. The reflection degree may be different from this example, and may include a discrete value.

In the data generation system according to the above aspect, the obtaining the plurality of second learning datasets may include obtaining a plurality of third samples, estimating an estimate value, generating a third pseudo sample, and generating the second sample. The obtaining the plurality of third samples includes obtaining a plurality of third samples of the predetermined type of data each including the first feature and the second feature. The estimating the estimate value includes estimating, by providing each of the plurality of third samples to an estimator, an estimate value input into the first generator trained to generate a pseudo sample corresponding to each of the plurality of third samples. The estimator is trained to estimate, from a pseudo sample generated by the trained first generator, an input provided to the first generator to generate the pseudo sample. The generating the third pseudo sample includes generating a third pseudo sample for each of the plurality of third samples by providing the estimated estimate value to the trained first generator. The generating the second sample includes generating the second sample in each of the plurality of second learning datasets by subtracting the third pseudo sample from each of the plurality of third samples. The trained first generator typically generates a pseudo sample including the first feature without including the second feature. The above structure can thus appropriately generate a second sample including the second feature without including the first feature. The above structure can automatically generate a second sample from a third sample, reducing the costs for obtaining the second sample.

The data generation system according to the above aspect may further include a fourth obtainer that obtains a plurality of fourth learning datasets each including a combination of an input sample value to be provided to the trained first generator and a fourth pseudo sample generated by providing the input sample value to the trained first generator and a fourth trainer that builds the trained estimator by training the estimator through machine learning using the obtained plurality of fourth learning datasets. The training the estimator through machine learning may include training the estimator to estimate, from the fourth pseudo sample, an input provided to the trained first generator to obtain an estimate value fitting the sample value for each of the plurality of fourth learning datasets. The above structure can generate a trained estimator that can appropriately estimate an input value provided to the trained first generator to generate a pseudo sample corresponding to the third sample and including the first feature without including the second feature through machine learning using the multiple fourth learning datasets. Thus, the generated trained estimator can appropriately generate, from the third sample, a second sample including the second feature without including the first feature.

In the data generation system according to the above aspect, the predetermined type of data may include image data including a background and a foreground. The first feature may include the background, and the second feature may include the foreground. The above structure can reduce the costs for collecting samples including a combination of the background and the foreground of various types of image data.

In the data generation system according to the above aspect, the predetermined type of data may include image data including a product. The first feature may include a background including the product, and the second feature may include a defect of the product. The above structure can reduce the costs for collecting samples including a combination of any of various types of products and any of various types of defects. The above structure can increase the visual inspection accuracy by reflecting the generated various samples on visual inspection.

A learning apparatus may be referred to as a model generation apparatus for generating a trained machine learning model (generator), or simply, a generation apparatus. A learning method may be referred to as a model generation method for generating a trained machine learning model, or simply, a generation method. More specifically, the learning method corresponds to a method for generating (creating) a trained machine learning model.

Another implementation of the data generation system, the learning apparatus, or the data generation apparatus according to the above aspects may be an information processing method, a computer program, or a storage medium storing the computer program readable by a computer or another device or machine for implementing some or all of the components of the data generation system, the learning apparatus, or the data generation apparatus. The computer-readable storage medium includes a medium storing a program or other information in an electrical, magnetic, optical, mechanical, or chemical manner.

A data generation method according to the present invention includes the features of claim 14.

A data generation computer program according to the present invention includes the features of claim 15.

### ADVANTAGEOUS EFFECTS

The system, method, and program according to the above aspects of the present invention reduce the costs for collecting various samples of a predetermined type of data including at least two features.

### BRIEF DESCRIPTION OF THE DRAWINGS

FIG. 1 is a schematic diagram of a system, apparatuses, a method, and a program according to an embodiment of the present invention used in one situation.
FIG. 2Ais a schematic diagram of a sample including a first feature and a second feature according to the embodiment.
FIG. 2B is a schematic diagram of a sample including a first feature and a second feature according to the embodiment.
FIG. 3 is a schematic diagram of a learning apparatus according to the embodiment showing its example hardware configuration.
FIG. 4 is a schematic diagram of a data generation apparatus according to the embodiment showing its example hardware configuration.
FIG. 5 is a schematic diagram of an estimation apparatus according to the embodiment showing its example hardware configuration.
FIG. 6 is a schematic diagram of the learning apparatus according to the embodiment showing its example software configuration.
FIG. 7A is a schematic diagram describing an example process performed by the learning apparatus according to the embodiment to train a first learning model through machine learning.
FIG. 7B is a schematic diagram describing an example process performed by the learning apparatus according to the embodiment to train a second learning model through machine learning.
FIG. 7C is a schematic diagram describing an example process performed by the learning apparatus according to the embodiment to train a third learning model through machine learning.
FIG. 7D is a schematic diagram describing an example process performed by the learning apparatus according to the embodiment to train an estimator through machine learning.
FIG. 7E is a schematic diagram describing an example process performed by the learning apparatus according to the embodiment to generate a second sample.
FIG. 8 is a schematic diagram of the data generation apparatus according to the embodiment showing its example software configuration.
FIG. 9 is a schematic diagram of the estimation apparatus according to the embodiment showing its example software configuration.
FIG. 10A is a flowchart of an example procedure performed by the learning apparatus according to the embodiment to train the first learning model through machine learning.
FIG. 10B is a flowchart of an example subroutine procedure performed by the learning apparatus according to the embodiment to train the first learning model through machine learning.
FIG. 11A is a flowchart of an example procedure performed by the learning apparatus according to the embodiment to train the second learning model through machine learning.
FIG. 11B is a flowchart of an example subroutine procedure performed by the learning apparatus according to the embodiment to train the second learning model through machine learning.
FIG. 12A is a flowchart of an example procedure performed by the learning apparatus according to the embodiment to train the third learning model through machine learning.
FIG. 12B is a flowchart of an example subroutine procedure performed by the learning apparatus according to the embodiment to train the third learning model through machine learning.
FIG. 13 is a flowchart of an example procedure performed by the learning apparatus according to the embodiment to train the estimator through machine learning.
FIG. 14 is a flowchart of an example procedure performed by the learning apparatus according to the embodiment to generate the second sample.
FIG. 15 is a flowchart of an example procedure performed by the data generation apparatus according to the embodiment.
FIG. 16 is a schematic diagram of an example screen of the data generation apparatus according to the embodiment for receiving inputs of input values.
FIG. 17A is a flowchart of an example procedure performed by the estimation apparatus according to the embodiment.
FIG. 17B is a diagram describing an example process of estimating a second feature according to the embodiment.
FIG. 18Ais a diagram of an example screen for outputting data groups according to the embodiment.
FIG. 18B is a diagram of an example screen for outputting data groups according to the embodiment.
FIG. 19 is a schematic diagram of a system, apparatuses, a method, and a program according to another embodiment of the present invention used in another situation.
FIG. 20A is a schematic diagram of an inspection apparatus according to the other embodiment showing its example hardware configuration.
FIG. 20B is a schematic diagram of the inspection apparatus according to the other embodiment showing its example software configuration.
FIG. 21 is a schematic diagram of a system according to an embodiment of the present invention used in another situation.
FIG. 22 is a schematic diagram of a system according to an embodiment of the present invention used in another situation.
FIG. 23 is a schematic diagram of a system, apparatuses, a method, and a program according to another embodiment of the present invention used in another situation.
FIG. 24Ais a schematic diagram of a monitoring apparatus according to the other embodiment showing its example hardware configuration.
FIG. 24B is a schematic diagram of the monitoring apparatus according to the other embodiment showing its example software configuration.
FIG. 25 is a schematic diagram of a system, apparatuses, a method, and a program according to another embodiment of the present invention used in another situation.
FIG. 26A is a schematic diagram of an abnormality detection apparatus according to the other embodiment showing its example hardware configuration.
FIG. 26B is a schematic diagram of the abnormality detection apparatus according to the other embodiment showing its example software configuration.
FIG. 27 is a schematic diagram of a generator in another embodiment.
FIG. 28 is a schematic diagram of a system, apparatuses, a method, and a program according to another embodiment of the present invention used in another situation.
FIG. 29 is a schematic diagram of another learning apparatus according to the other embodiment showing its example hardware configuration.
FIG. 30 is a schematic diagram of the other learning apparatus according to the other embodiment showing its example software configuration.
FIG. 31 is a flowchart of an example procedure performed by the other learning apparatus according to the other embodiment.
FIG. 32A is a schematic diagram of an estimation apparatus according to the other embodiment showing its example hardware configuration.
FIG. 32B is a schematic diagram of the estimation apparatus according to the other embodiment showing its example software configuration.

### DETAILED DESCRIPTION

One or more embodiments of the present invention (hereafter, the present embodiment) will now be described with reference to the drawings.

### 1. Example Use

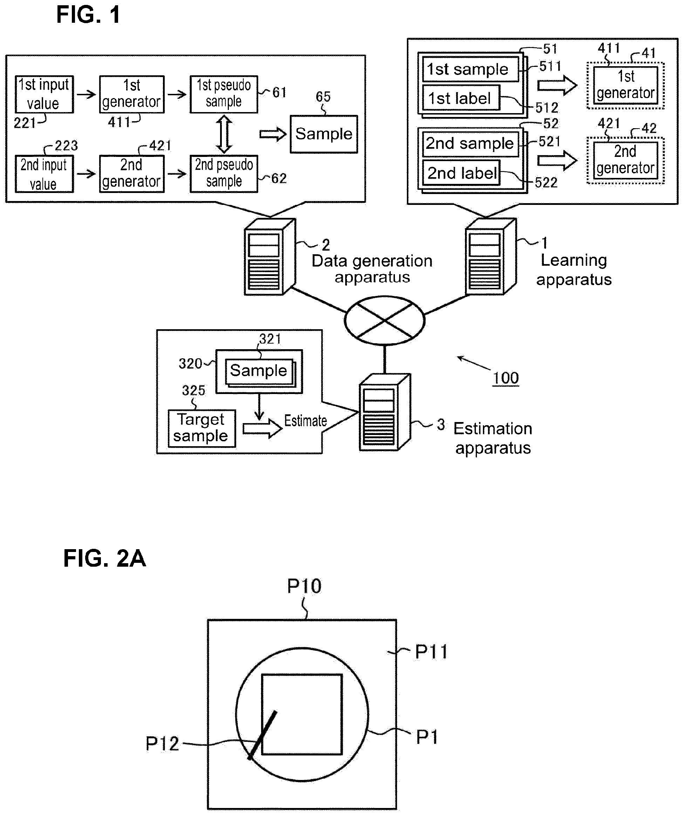

FIG. 1 is a schematic diagram of a system, apparatuses, a method, and a computer program according to an embodiment of the present invention used in one situation. As shown in FIG. 1, an estimation system 100 according to an embodiment includes a learning apparatus 1, a data generation apparatus 2, and an estimation apparatus 3. The learning apparatus 1 and the data generation apparatus 2 are included in a data generation system that generates a trained first generator 411 and a trained second generator 421 to generate a new sample 65 of a predetermined type of data using the generated trained first generator 411 and second generator 421.

The learning apparatus 1 according to the present embodiment is a computer that generates the trained first and second generators 411 and 421 through machine learning. More specifically, the learning apparatus 1 according to the present embodiment obtains multiple first learning datasets 51 each including a combination of a first sample 511 and a first label 512 of a predetermined type of data. The learning apparatus 1 according to the present embodiment also obtains multiple second learning datasets 52 each including a combination of a second sample 521 and a second label 522 of a predetermined type of data.

The predetermined type of data for each sample (511, 521) may be any type of data including any feature, and may be selected as appropriate in each embodiment. The predetermined type of data is image data. Examples of the predetermined type of data include sensing data obtained by observing an object with a sensor. Examples of the sensor include a camera, a light detection and ranging (lidar) sensor and a medical inspection apparatus. The camera may be, for example, a typical digital camera for obtaining RGB images, a depth camera for obtaining depth images, or an infrared camera for imaging the amount of infrared radiation. The medical inspection apparatus may be, for example, an X-ray apparatus, a computerized tomography (CT) scanner, or a magnetic resonance imaging (MRI) scanner.

The first sample 511 includes a first feature appearing in the predetermined type of data, and the first label 512 indicates the type of the first feature. The second sample 521 includes a second feature different from the first feature, and the second label 522 indicates the type of the second feature. The first feature and the second feature may be selected as appropriate in each embodiment. For example, the first feature and the second feature may include components (elements) directly or indirectly appearing in the predetermined type of data. Directly appearing components include components appearing in data such as in image data. Indirectly appearing components include components derived from data, for example, through estimation based on image data. At least one of the first feature or the second feature may undergo any estimation. A target sample including a target feature corresponds to the target feature appearing in the target sample.

In the present embodiment, a predetermined type of data can include a first component and a second component different from the first component. The second component serves as a target of predetermined estimation. The first feature included in each first sample 511 includes the first component, and the second feature included in each second sample 521 includes the second component. Estimation may include prediction. Examples of estimation may include derivation of a discrete value (e.g., a class corresponding to a specific feature) through grouping (classification or discrimination) and derivation of a set of continuous values (e.g., probability of appearance of a specific feature) through regression. Examples of estimation may include any certification such as detection or determination based on the result of grouping or regression. Each predetermined type of data may include multiple types of data such as video data including sound data. In this case, the first feature and the second feature may include at least one of the multiple types of data.

The learning apparatus 1 according to the present embodiment trains a first learning model 41 including the first generator 411 through machine learning using the obtained first learning datasets 51. Training the first learning model 41 through machine learning includes training the first generator 411 for each first learning dataset 51 to generate a pseudo sample that fits the first sample 511 from the first label 512. The learning apparatus 1 according to the present embodiment trains a second learning model 42 including the second generator 421 through machine learning using the obtained second learning datasets 52. Training the second learning model 42 through machine learning includes training the second generator 421 for each second learning dataset 52 to generate a pseudo sample that fits the second sample 521 from the second label 522. After the machine learning, the trained first and second generators 411 and 421 are generated.

Each generator (411, 421) includes a machine learning model. The machine learning model in each generator (411, 421) generates a pseudo sample modeling each sample (511, 521) of data in response to an input of an input value corresponding to each label (512, 522). The pseudo sample indicates a sample generated by each generator (411, 421). The machine learning model in each generator (411, 421) may be of any type selected as appropriate in each embodiment. In the present embodiment, the machine learning model in each generator (411, 421) uses a neural network. This will be described in detail later. The learning apparatus 1 according to the present embodiment may be referred to as a model generation apparatus for generating a trained machine learning model, or simply a generation apparatus.

The data generation apparatus 2 according to the present embodiment is a computer that generates a new sample 65 of a predetermined type of data using the trained first and second generators 411 and 421. More specifically, the data generation apparatus 2 according to the present embodiment provides a first input value 221 corresponding to the first label 512 to the trained first generator 411 to generate a first pseudo sample 61 including the first feature. The data generation apparatus 2 according to the present embodiment also provides a second input value 223 corresponding to the second label 522 to the trained second generator 421 to generate a second pseudo sample 62 including the second feature. The data generation apparatus 2 according to the present embodiment synthesizes the generated first and second pseudo samples 61 and 62 to generate the new sample 65 of the predetermined type of data.

The estimation apparatus 3 according to the present embodiment is a computer that performs predetermined estimation on the second feature. In the present embodiment, the predetermined estimation is to detect a second component (specifically, to detect the presence of the second feature). The estimation apparatus 3 according to the present embodiment obtains a target sample 325 and performs an operation on the obtained target sample 325 to detect the second component. Parameters in the detection process may be determined based on a data group 320. The data group 320 includes multiple samples 321 of a predetermined type of data. The multiple samples 321 may include the sample 65 generated by the data generation apparatus 2.

In the present embodiment described above, the types of the first feature and the second feature included in the generated new sample 65 can be controlled based on inputs provided to the trained first and second generators 411 and 421. In other words, the data generation apparatus 2 according to the present embodiment uses the trained first and second generators 411 and 421 to generate the new sample 65 including a combination of any types of the first and second features. The data generation apparatus 2 can generate the new sample 65 including the first feature and the second feature as appropriate in any combination of the first feature and the second feature for which no sample or an insufficient number of samples are obtained. Further, using the trained first and second generators 411 and 421 allows automation of many processes for generating the new sample 65. In the present embodiment, various combinations of samples can be automatically generated as appropriate. Thus, the data generation apparatus 2 can reduce the costs for collecting various samples of a predetermined type of data including at least two features.

In the present embodiment, adding the new sample 65 into the data group 320 can widen the range of the samples 321 included in the data group 320. In other words, the data group 320 can increase samples for the combinations for which no sample or an insufficient numbers of samples have been obtained. This can improve the estimation accuracy for such combinations. In the present embodiment, the generated new sample 65 is reflected in the estimation process performed by the estimation apparatus 3 to improve the accuracy of the estimation process.

As shown in FIG. 1, the learning apparatus 1, the data generation apparatus 2, and the estimation apparatus 3 may be connected to each other with a network. The network may be selected as appropriate from, for example, the Internet, a wireless communication network, a movable communication network, a telephone network, and a dedicated network. The method for exchanging data between the learning apparatus 1, the data generation apparatus 2, and the estimation apparatus 3 may be different from this and may be selected as appropriate in each embodiment. For example, data may be exchanged between the learning apparatus 1, the data generation apparatus 2, and the estimation apparatus 3 using a storage medium.

In the example shown in FIG. 1, the learning apparatus 1, the data generation apparatus 2, and the estimation apparatus 3 are separate computers. However, the system configuration according to the present embodiment may be different from this and may be selected as appropriate in each embodiment. For example, at least one pair of any two of the learning apparatus 1, the data generation apparatus 2, and the estimation apparatus 3 may form an integrated computer. For example, at least one of the learning apparatus 1, the data generation apparatus 2, or the estimation apparatus 3 may include multiple computers.

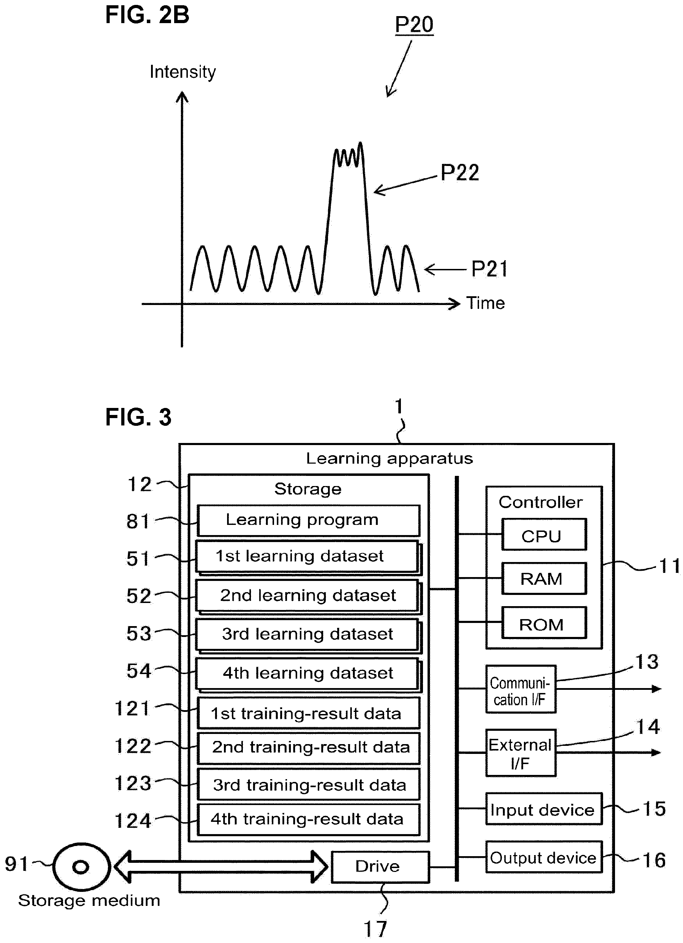

Referring also to FIGs. 2A and 2B, a predetermined type of data operable by the estimation system 100 will be described. FIG. 2A is a schematic diagram of a sample P10 including the first feature and the second feature obtained by performing visual inspection on a product P1. FIG. 2B is a schematic diagram of a sample P20 including the first feature and the second feature obtained by performing machine state inspection based on the machine operation sound.

In FIG. 2A, image data of the product P1 is the predetermined type of data. The first feature includes a background P11 including the product P1, and the second feature includes a defect P12 that can occur in the product P1. In other words, an image of the background P11 including the product P1 in the sample P10 is an example of the first component, and an image of the defect P12 is an example of the second component. In this case, the first sample 511 in each first learning dataset 51 may be a sample of the image data of the product P1, and the first label 512 in the first learning dataset 51 may indicate the type of product P1. The second sample 521 may be a sample of the image data of the defect P12, and the second label 522 may indicate the type of defect P12.

The product P1 and the defect P12 may be of any type. The product P1 may include, for example, any products transported on a production line, such as electronic devices, electronic components, automotive parts, chemicals, and food products. Electronic components may include, for example, substrates, chip capacitors, liquid crystals, and relay coils. Automotive parts may include, for example, connecting rods, shafts, engine blocks, power window switches, and panels. Chemicals may include, for example, packaged or unpackaged tablets. The product may be a final product after completion of the manufacturing process, an intermediate product during the manufacturing process, or an initial product before undergoing the manufacturing process. The defect P12 may include, for example, a scratch, a stain, a crack, a dent, a burr, uneven color, and foreign matter contamination.

In this example, the learning apparatus 1 according to the present embodiment can build the first generator 411 trained to generate a pseudo sample including a background including the product P1 of the type corresponding to the input through machine learning using the multiple first learning datasets 51. The learning apparatus 1 according to the present embodiment can also build the second generator 421 trained to generate a pseudo sample including a foreground including the defect P12 of the type corresponding to the input through machine learning using the multiple second learning datasets 52. The data generation apparatus 2 according to the present embodiment uses the trained first and second generators 411 and 421 to automate many processes for generating the new samples 65 including a combination of any types of the product P1 and the defect P12. The data generation apparatus 2 can thus reduce the costs for collecting various samples of images of the product P1 and the defect P12. Further, the estimation apparatus 3 according to the present embodiment adds the generated new sample 65 to widen the range of the samples 321 included in the data group 320 and to improve the accuracy of visual inspection on the product P1.

In FIG. 2B, sound data including the machine operation sound is an example of a predetermined type of data, useful for understanding the invention but not claimed. In this example, the first feature is an operation sound during a normal operation of the machine and includes an ambient sound P21 such as noise around the machine, and the second feature includes an abnormal sound P22 caused in an abnormal state such as aged deterioration or malfunction of the machine. More specifically, the component of the ambient sound P21 in the sample P20 is an example of the first component, and the component of the abnormal sound P22 is an example of the second component. In this case, the first sample 511 in each first learning dataset 51 may be a sample of sound data including the ambient sound P21, and the first label 512 in each first learning dataset 51 may indicate the types of the machine and ambient environment. The second sample 521 in each second learning dataset 52 may be a sample of sound data including the abnormal sound P22, and the second label 522 in each second learning dataset 52 may indicate the type of abnormality.

The types of the machine and abnormality may be selected as appropriate. The machine may be, for example, an apparatus included in a production line such as a conveyor or an industrial robot. The machine may be an entire apparatus or part of an apparatus such as a motor. The ambient environment of the machine may be classified by, for example, the location or time at which the machine is driven. The abnormality may be, for example, malfunction, foreign matter contamination, dirt adhesion, or abrasion of a component.

In this example, the learning apparatus 1 according to the present embodiment can build the first generator 411 trained to generate a pseudo sample including the ambient sound P21 in the ambient environment and the machine of the type corresponding to the input through machine learning using the multiple first learning datasets 51. The learning apparatus 1 according to the present embodiment can also build the second generator 421 trained to generate a pseudo sample including the abnormal sound P22 of the type corresponding to the input through machine learning using the multiple second learning datasets 52. The data generation apparatus 2 according to the present embodiment uses the trained first and second generators 411 and 421 to automate many processes for generating the new sample 65 including a combination of any types of the ambient sound P21 and the abnormal sound P22. The data generation apparatus 2 can thus reduce the costs for collecting various samples including the ambient sound P21 and the abnormal sound P22. Further, the estimation apparatus 3 according to the present embodiment adds the generated new sample 65 to widen the range of the samples 321 included in the data group 320 and to improve the accuracy of detecting the machine abnormality.

In the examples shown in FIGs. 2A and 2B, the feature that appears highly frequently, such as a feature appearing in both the normal and abnormal states, is selected as the first feature, and the feature that appears less frequently, such as a feature appearing in the abnormal state alone, is selected as the second feature. The feature that appears alone highly frequently may be selected as the first feature, and the feature that appears together with the first feature less frequently may be selected as the second feature. In this case, detecting the second component corresponds to detecting a phenomenon that appears less frequently such as an abnormal event.

### 2. Example Configuration

### Hardware Configuration

### Learning Apparatus

FIG. 3 is a schematic diagram of the learning apparatus 1 according to the present embodiment showing its example hardware configuration. As shown in FIG. 3, the learning apparatus 1 according to the present embodiment is a computer including a controller 11, a storage 12, a communication interface 13, an external interface 14, an input device 15, an output device 16, and a drive 17 that are electrically connected to one another. In FIG. 3, the communication interface and the external interface are abbreviated as a communication I/F and an external I/F.

The controller 11 includes, for example, a central processing unit (CPU) as a hardware processor, a random-access memory (RAM), and a read-only memory (ROM). The controller 11 performs information processing based on programs and various items of data. The storage 12, as an example of a memory, includes, for example, a hard disk drive or a solid-state drive. In the present embodiment, the storage 12 stores various items of information including a learning program 81, first to fourth learning datasets 51 to 54, and pieces of first to fourth training-result data 121 to 124.

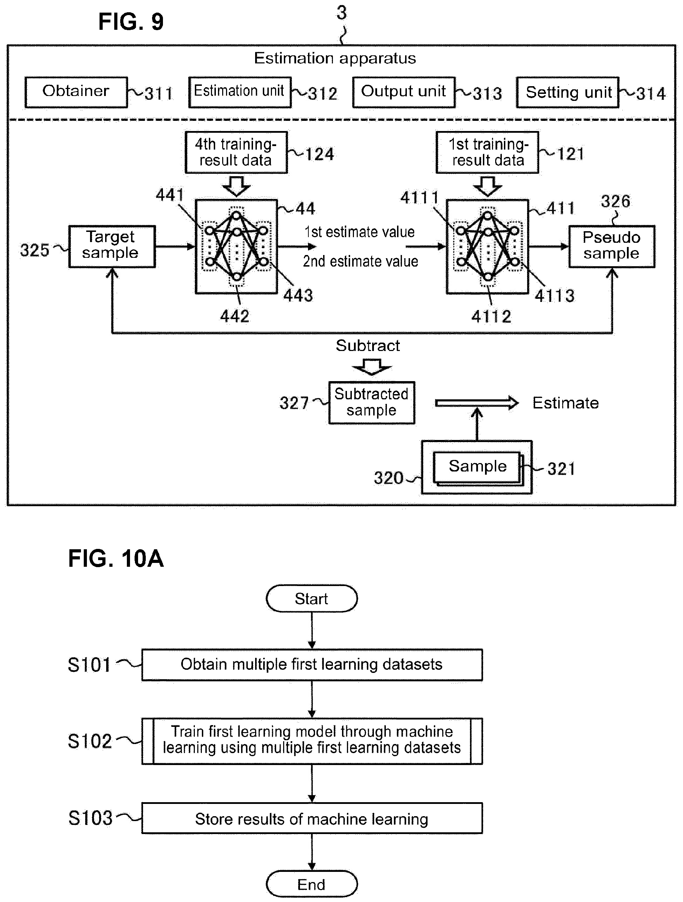

The learning program 81 causes the learning apparatus 1 to perform information processing (FIGs. 10A to 14) to generate trained models through machine learning (described later). The learning program 81 includes a series of instructions for the information processing. The learning program 81 may be referred to as a model generation program, or simply a generation program. The first to fourth learning datasets 51 to 54 are used to train the corresponding models through machine learning. The pieces of first to fourth training-result data 121 to 124 indicate information items about the corresponding trained models built through machine learning. In the present embodiment, the pieces of first to fourth training-result data 121 to 124 are generated after performing the learning program 81. This will be described in detail later.

The communication interface 13 is, for example, a wired local area network (LAN) module or a wireless LAN module for wired or wireless communication through a network. The external interface 14 is an interface for connection to an external device and may be, for example, a universal serial bus (USB) port or a dedicated port. The types and the number of the external interfaces 14 may be selected as appropriate. The learning apparatus 1 may be connected to sensors for obtaining samples such as the first sample 511 and the second sample 521 through the external interface 14.

The input device 15 includes, for example, a mouse and a keyboard. The output device 16 includes, for example, a display and a speaker. An operator such as a user may operate the learning apparatus 1 through the input device 15 and the output device 16.

The drive 17 is, for example, a compact disc (CD) drive or a digital versatile disc (DVD) drive for reading programs or other information stored in a storage medium 91. The type of the drive 17 may be selected as appropriate for the type of the storage medium 91. At least one of the learning program 81 or any one of the first to fourth learning datasets 51 to 54 may be stored in the storage medium 91.

The storage medium 91 stores programs or other information in an electrical, magnetic, optical, mechanical, or chemical manner to allow a computer or another device or machine to read the recorded programs or other information. The learning apparatus 1 may obtain at least one of the learning program 81 or any one of the first to fourth learning datasets 51 to 54 from the storage medium 91.

In FIG. 3, the storage medium 91 is a disc-type storage medium, such as a CD or a DVD. However, the storage medium 91 is not limited to a disc. One example of the storage medium other than a disc is a semiconductor memory such as a flash memory. The type of the drive 17 may be selected as appropriate for the type of the storage medium 91.

For the specific hardware configuration of the learning apparatus 1, components may be eliminated, substituted, or added as appropriate in each embodiment. For example, the controller 11 may include multiple hardware processors. Each hardware processor may include a microprocessor, a field-programmable gate array (FPGA), a digital signal processor (DSP), or other processors. The storage 12 may be the RAM and the ROM included in the controller 11. At least one of the communication interface 13, the external interface 14, the input device 15, the output device 16, or the drive 17 may be eliminated. The learning apparatus 1 may include multiple computers. In this case, each computer may have the same or a different hardware configuration. The learning apparatus 1 may be an information processing apparatus dedicated to an intended service, or may be a general-purpose server or a general-purpose personal computer (PC).

### Data Generation Apparatus

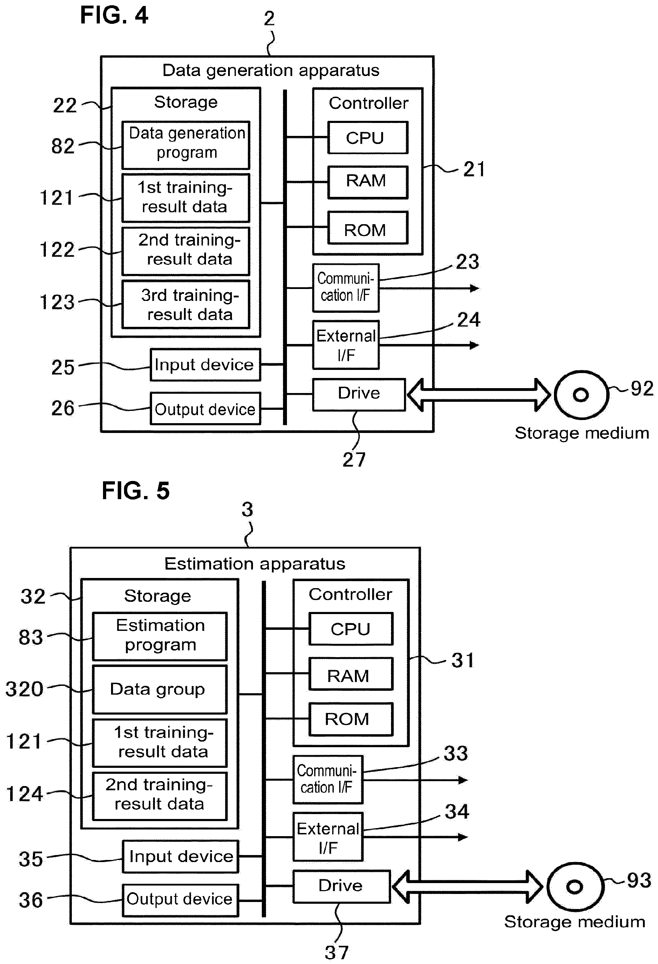

FIG. 4 is a schematic diagram of the data generation apparatus 2 according to the present embodiment showing its example hardware configuration. As shown in FIG. 4, the data generation apparatus 2 according to the present embodiment is a computer including a controller 21, a storage 22, a communication interface 23, an external interface 24, an input device 25, an output device 26, and a drive 27 that are electrically connected to one another.

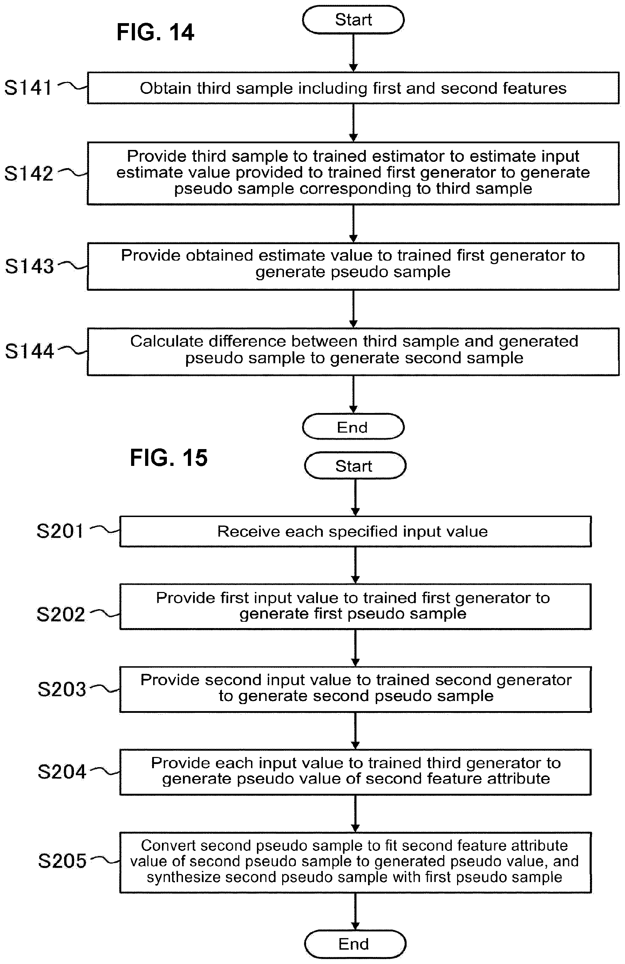

The components from the controller 21 to the drive 27 in the data generation apparatus 2 and a storage medium 92 may have the same structures as the components from the controller 11 to the drive 17 in the learning apparatus 1 and the storage medium 91. The controller 21 includes, for example, a CPU as a hardware processor, a RAM, and a ROM, and performs various items of information processing operations based on programs and data. The storage 22 includes, for example, a hard disk drive or a solid-state drive. The storage 22 stores various items of information including a data generation program 82 and the pieces of first to third training-result data 121 to 123. The data generation program 82 causes the data generation apparatus 2 to perform information processing (FIG. 15) to generate the new sample 65. The data generation program 82 includes a series of instructions for the information processing. At least one of the data generation program 82 or any of the pieces of first to third training-result data 121 to 123 may be stored in the storage medium 92. The data generation apparatus 2 may obtain at least one of the data generation program 82 or any of the pieces of first to third training-result data 121 to 123 from the storage medium 92.

For the specific hardware configuration of the data generation apparatus 2, components may be eliminated, substituted, or added as appropriate in each embodiment. For example, the controller 21 may include multiple hardware processors. Each hardware processor may include a microprocessor, an FPGA, a DSP, or other processors. The storage 22 may be the RAM and the ROM included in the controller 21. At least one of the communication interface 23, the external interface 24, the input device 25, the output device 26, or the drive 27 may be eliminated. The data generation apparatus 2 may include multiple computers. In this case, each computer may have the same or a different hardware configuration. The data generation apparatus 2 may be an information processing apparatus dedicated to an intended service, or may be a general-purpose server or a general-purpose PC.

### Estimation Apparatus

FIG. 5 is a schematic diagram of the estimation apparatus 3 according to the present embodiment showing its example hardware configuration. As shown in FIG. 5, the estimation apparatus 3 according to the present embodiment is a computer including a controller 31, a storage 32, a communication interface 33, an external interface 34, an input device 35, an output device 36, and a drive 37 that are electrically connected to one another.

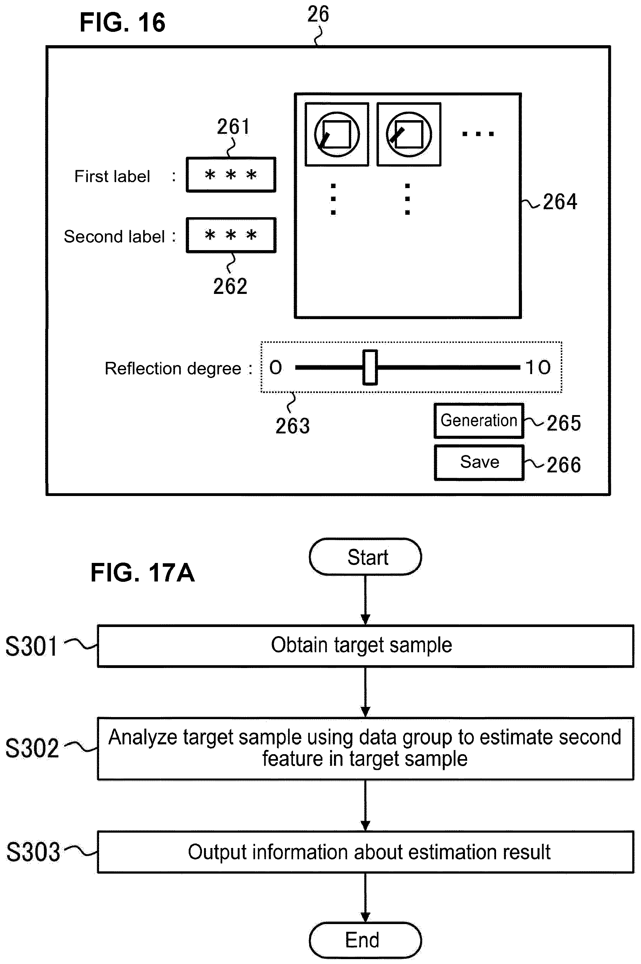

The components from the controller 31 to the drive 37 in the estimation apparatus 3 and a storage medium 93 may have the same structure as the components from the controller 11 to the drive 17 in the learning apparatus 1 and the storage medium 91. The controller 31 includes, for example, a CPU as a hardware processor, a RAM, and a ROM, and performs various items of information processing operations based on programs and data. The storage 32 includes, for example, a hard disk drive or a solid-state drive. The storage 32 stores various items of information including an estimation program 83, the data group 320, and the pieces of first and fourth training-result data (121, 124). The estimation program 83 causes the estimation apparatus 3 to perform information processing (FIG. 17A) for predetermined estimation for the second feature (described later). The estimation program 83 includes a series of instructions for the information processing. The data group 320 may be used to determine the values of parameters for a predetermined estimation (detection of a second component in the present embodiment) process. At least one of the estimation program 83, the data group 320, or any of the pieces of first and fourth training-result data (121, 124) may be stored in the storage medium 93. The estimation apparatus 3 may obtain at least one of the estimation program 83, the data group 320, or the pieces of first and fourth training-result data (121, 124) from the storage medium 93.

For the specific hardware configuration of the estimation apparatus 3, components may be eliminated, substituted, or added as appropriate in each embodiment. For example, the controller 31 may include multiple hardware processors. Each hardware processor may include a microprocessor, an FPGA, a DSP, or other processors. The storage 32 may be the RAM and the ROM included in the controller 31. At least one of the communication interface 33, the external interface 34, the input device 35, the output device 36, or the drive 37 may be eliminated. The estimation apparatus 3 may include multiple computers. In this case, each computer may have the same or a different hardware configuration. The estimation apparatus 3 may be an information processing apparatus dedicated to an intended service, or may be a general-purpose server, a general-purpose PC, or a programmable logic controller (PLC).

### Software Configuration

### Learning Apparatus

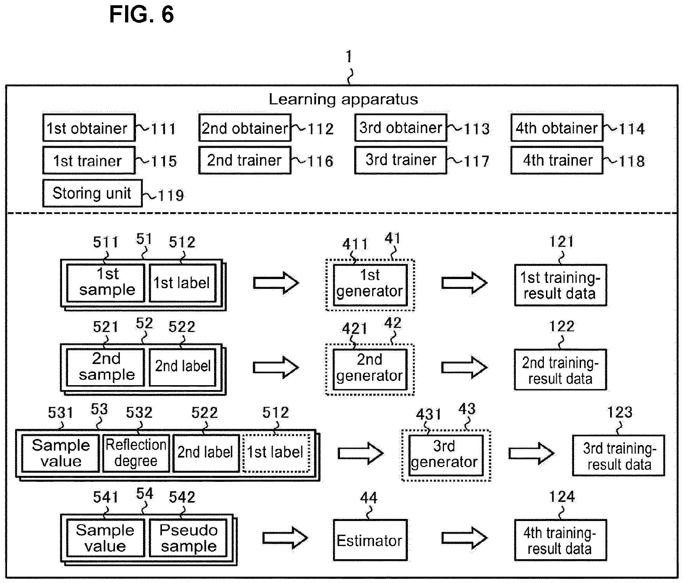

FIG. 6 is a schematic diagram of the learning apparatus 1 according to the present embodiment showing its example software configuration. The controller 11 in the learning apparatus 1 loads the learning program 81 stored in the storage 12 into the RAM. The CPU in the controller 11 then interprets and executes the instructions in the learning program 81 loaded in the RAM to control each component. As shown in FIG. 6, the learning apparatus 1 according to the present embodiment thus operates as a computer including a first obtainer 111, a second obtainer 112, a third obtainer 113, a fourth obtainer 114, a first trainer 115, a second trainer 116, a third trainer 117, a fourth trainer 118, and a storing unit 119 as software modules. In other words, in the present embodiment, each software module in the learning apparatus 1 is implemented by the controller 11 (CPU).

The first obtainer 111 obtains multiple first learning datasets 51 each including a combination of the first sample 511 of a predetermined type of data including the first feature and the first label 512 indicating the type of the first feature. The first trainer 115 trains the first learning model 41 including the first generator 411 through machine learning using the obtained first learning datasets 51. To train the first learning model 41 through machine learning, the first trainer 115 trains the first generator 411 for each first learning dataset 51 to generate, from the first label 512, a pseudo sample that fits the first sample 511.

The second obtainer 112 obtains multiple second learning datasets 52 each including a combination of the second sample 521 of a predetermined type of data including the second feature different from the first feature and the second label 522 indicating the type of the second feature. The second trainer 116 uses the obtained second learning datasets 52 to train the second learning model 42 including the second generator 421 through machine learning. To train the second learning model 42 through machine learning, the second trainer 116 trains the second generator 421 for each second learning dataset 52 to generate, from the second label 522, a pseudo sample that fits the second sample 521.

The third obtainer 113 obtains multiple third learning datasets 53 each including a combination of a sample value 531 of the second feature attribute, a reflection degree 532 indicating the degree to which the second feature is reflected, and the second label 522. The sample value 531 may be referred to as an attribute sample value. The attribute includes the degree or classification of the characteristic of the second feature such as size, (temporal or spatial) position, brightness, amplitude, or (temporal or spatial) frequency. The third trainer 117 trains a third learning model 43 including a third generator 431 through machine learning using the obtained third learning datasets 53. To train the third learning model 43 through machine learning, the third trainer 117 trains the third generator 431 for each third learning dataset 53 to generate, from the reflection degree 532 and the second label 522, a pseudo value of the second feature attribute that fits the sample value 531. Each third learning dataset 53 may also include the first label 512. In this case, to train the third learning model 43 through machine learning, the third trainer 117 may train the third generator 431 to generate, from the reflection degree 532, the second label 522, and the first label 512, a pseudo value of the second feature attribute that fits the sample value 531.

The fourth obtainer 114 obtains multiple fourth learning datasets 54 each including a combination of a sample value 541 of an input provided to the trained first generator 411 and a pseudo sample 542 generated in response to the sample value 541 being input into the trained first generator 411. The pseudo sample 542 is an example of a fourth pseudo sample in an aspect of the present invention. The fourth trainer 118 trains an estimator 44 through machine learning using the obtained fourth learning datasets 54. To train the estimator 44 through machine learning, the fourth trainer 118 trains the estimator 44 to estimate, from the pseudo sample 542, the input provided to the trained first generator 411 to obtain an estimate value fitting the sample value 541 for each fourth learning dataset 54.

The storing unit 119 generates information about each result obtained through the machine learning, and stores the generated information into a predetermined storage area. More specifically, the storing unit 119 generates information about the trained generators (411, 421, 431) and the estimator 44 as the pieces of first to fourth training-result data 121 to 124. The storing unit 119 stores the generated pieces of first to fourth training-result data 121 to 124 into a predetermined storage area. The predetermined storage area may be selected as appropriate in each embodiment. The predetermined storage area may be, for example, the RAM in the controller 11, the storage 12, the storage medium 91, an external storage, or a combination of these.

### Training of First Learning Model through Machine Learning

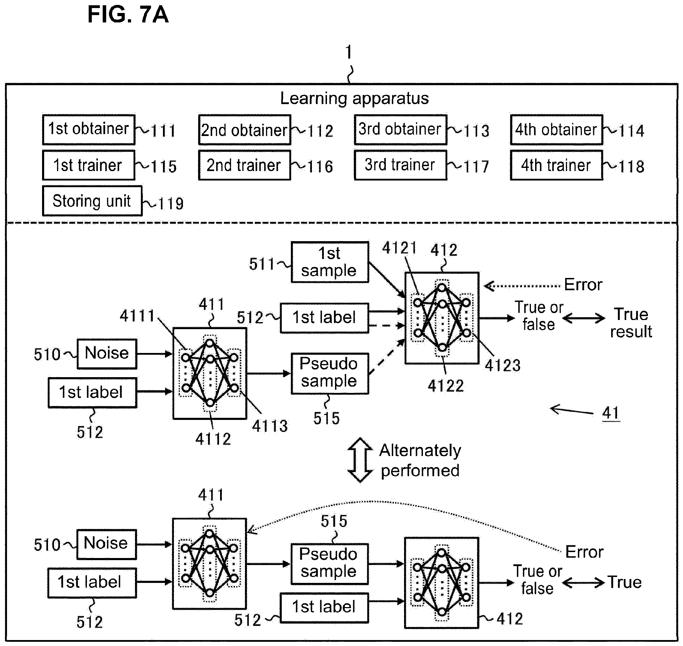

FIG. 7A is a schematic diagram describing an example process of training the first learning model 41 in the present embodiment through machine learning. The first learning model 41 may have any configuration allowing the first generator 411 to be trained to generate a pseudo sample including the first feature of the input type and may be defined as appropriate in each embodiment. In the present embodiment, the first learning model 41 also includes a first discriminator 412. The first generator 411 and the first discriminator 412 may each include a machine learning model trainable through machine learning.

In the present embodiment, the first generator 411 and the first discriminator 412 each include a multilayered neural network for deep learning. The first generator 411 and the first discriminator 412 each include an input layer (4111, 4121), an intermediate (hidden) layer (4112, 4122), and an output layer (4113, 4123). However, the configuration of the first generator 411 and the first discriminator 412 may be different from the configuration in the example and may be selected as appropriate in each embodiment. For example, the first generator 411 and the first discriminator 412 may each include two or more intermediate layers (4112, 4122) instead of a single intermediate layer. The intermediate layer (4112, 4122) may be eliminated. The first generator 411 and the first discriminator 412 may each include any number of layers for forming a neural network. The first generator 411 and the first discriminator 412 may have structures that match each other at least partially or do not match.

Each of the layers (4111 to 4113, 4121 to 4123) includes one or more neurons (nodes). Each of the layers (4111 to 4113, 4121 to 4123) may include any number of neurons (nodes) that may be determined as appropriate in each embodiment. Neurons in neighboring layers are coupled to each other as appropriate. In the example of FIG. 7A, neurons in each layer are coupled to all neurons in its adjacent layer. However, the neurons may be coupled in a manner other than in this example and may be determined as appropriate in each embodiment.

Each coupling has a preset weight (coupling weight). Each neuron has a preset threshold. An output of each neuron is determined typically depending on whether the sum of the product of each input and the corresponding weight exceeds the threshold. The threshold may be expressed using an activation function. In this case, the sum of the product of each input and the corresponding weight is input into the activation function, and the activation function is computed to determine the output of each neuron. The activation function may be of any type selected as appropriate in each embodiment. The coupling weight between neurons included in each of the layers (4111 to 4113, 4121 to 4123) and the threshold of each neuron are examples of the computational parameters of the first generator 411 and the first discriminator 412.

In the present embodiment, training the first generator 411 through machine learning includes alternately performing a first training step of training the first discriminator 412 and a second training step of training the first generator 411. In the first training step, the first trainer 115 trains the first discriminator 412 to discriminate whether a sample input into the first discriminator 412 is the first sample 511 obtained from any of the first learning datasets 51 or a pseudo sample 515 generated by the first generator 411. In other words, the first discriminator 412 is trained to discriminate whether the input sample results from any of the first learning datasets 51 (learning data) or the first generator 411. In the example shown in FIG. 7A, the input sample from the learning data is represented as being true, and the input sample from the first generator 411 is represented as being false. Being true may be substituted with 1, and being false may be substituted with 0. The source from which the input sample results may be represented in a manner different from this example and selected as appropriate in each embodiment. In the second training step, the first trainer 115 trains the first generator 411 to generate the pseudo sample 515 that lowers the discrimination performance of the first discriminator 412. More specifically, training the first learning model 41 through machine learning includes adversarial learning between the first generator 411 and the first discriminator 412.

As an example of this machine learning process, in the first training step, the first trainer 115 first extracts noise 510 (latent variable) from a predetermined probability distribution for each first learning dataset 51. The predetermined probability distribution may be of any type, for example, a known probability distribution such as a Gaussian distribution. Subsequently, the first trainer 115 provides the extracted noise 510 and the first label 512 to the first generator 411 to generate the pseudo sample 515 from the extracted noise 510 and the first label 512. More specifically, the first trainer 115 inputs the extracted noise 510 and the first label 512 into the input layer 4111 in the first generator 411 to cause the first generator 411 to perform a computational operation. Thus, the first trainer 115 obtains, from the output layer 4113 in the first generator 411, an output (specifically, the pseudo sample 515) corresponding to the pseudo sample generated from the noise 510 and the first label 512.

The first trainer 115 inputs the generated pseudo sample 515 and the corresponding first label 512 into the input layer 4121 in the first discriminator 412 and causes the first discriminator 412 to perform a computational operation. Thus, the first trainer 115 obtains, from the output layer 4123 in the first discriminator 412, an output value corresponding to the discrimination result as to whether the input sample results from the learning data or the first generator 411. In this situation, the input sample is the pseudo sample 515, for which the true result is a false discrimination performed by the first discriminator 412. The first trainer 115 calculates an error between the true result and the output value obtained from the output layer 4123 for each pseudo sample 515 generated by the first generator 411.

The first trainer 115 inputs each first learning dataset 51 (first sample 511 and first label 512) into the input layer 4121 in the first discriminator 412 and causes the first discriminator 412 to perform a computational operation. Thus, the first trainer 115 obtains, from the output layer 4123 in the first discriminator 412, an output value corresponding to the discrimination result as to whether the input sample results from the learning data or the first generator 411. In this situation, the input sample is the first sample 511, for which the true result is a true discrimination performed by the first discriminator 412. The first trainer 115 calculates an error between the true result and the output value obtained from the output layer 4123 for each first learning dataset 51.

The first trainer 115 adjusts the computational parameter values of the first discriminator 412 to reduce the sum of the calculated errors while fixing the computational parameter values of the first generator 411. Thus, the first trainer 115 can train the first discriminator 412 to be capable of discriminating whether the sample input into the first discriminator 412 is the first sample 511 obtained from any of the first learning datasets 51 or the pseudo sample 515 generated by the first generator 411.

In the second training step, the first trainer 115 first extracts noise 510 (latent variable) from a predetermined probability distribution for each first learning dataset 51. The first trainer 115 then inputs the extracted noise 510 and the first label 512 into the input layer 4111 in the first generator 411 and causes the first generator 411 to perform a computational operation. Thus, the first trainer 115 obtains, from the output layer 4113 in the first generator 411, an output (specifically, the pseudo sample 515) corresponding to the pseudo sample generated from the noise 510 and the first label 512. The process of generating the pseudo sample 515 may be shared between the first training step and the second training step. In other words, the pseudo sample 515 generated in the first training step may also be used in the second training step.

The first trainer 115 then inputs the generated pseudo sample 515 and the corresponding first label 512 into the input layer 4121 in the first discriminator 412 and causes the first discriminator 412 to perform a computational operation. Thus, the first trainer 115 obtains, from the output layer 4123 in the first discriminator 412, an output value corresponding to the discrimination result as to whether the input sample results from the learning data or the first generator 411. In training the first generator 411, the true result is the reduced discrimination performance of the first discriminator 412 (specifically, the discrimination result being an error). In other words, the true result is the output value obtained from the output layer 4123 being true. The first trainer 115 calculates an error between the true result and the output value obtained from the output layer 4123 for each pseudo sample 515.

The first trainer 115 adjusts the computational parameter values of the first generator 411 to reduce the sum of the calculated errors while fixing the computational parameter values of the first discriminator 412. Thus, the first trainer 115 can train the first generator 411 to be capable of generating the pseudo sample 515 that lowers the discrimination performance of the first discriminator 412.

The first trainer 115 alternately performs the first and second training steps to alternately improve the performance of each of the first discriminator 412 and the first generator 411. The improved discrimination performance of the first discriminator 412 improves the performance of the first generator 411 for generating the pseudo sample 515 fitting the first sample 511. Thus, the structure according to the present embodiment can build, through the machine learning, the trained first generator 411 that can generate appropriate pseudo samples including the first feature. The first and second training steps may be performed in any order.

After the machine learning process, the storing unit 119 generates information indicating the structure of the built trained first generator 411 and information indicating the computational parameters as the first training-result data 121. The storing unit 119 then stores the generated first training-result data 121 into a predetermined storage area. In another example, the first training-result data 121 may be any other data that can reproduce the trained first generator 411. When, for example, the apparatuses include the first generators 411 with the same structure, the information indicating the structure of the first generator 411 may be eliminated from the first training-result data 121. In some embodiments, the first training-result data 121 may also include information indicating the structure of the built trained first discriminator 412 and information indicating the computational parameters.

### Training of Second Learning Model through Machine Learning

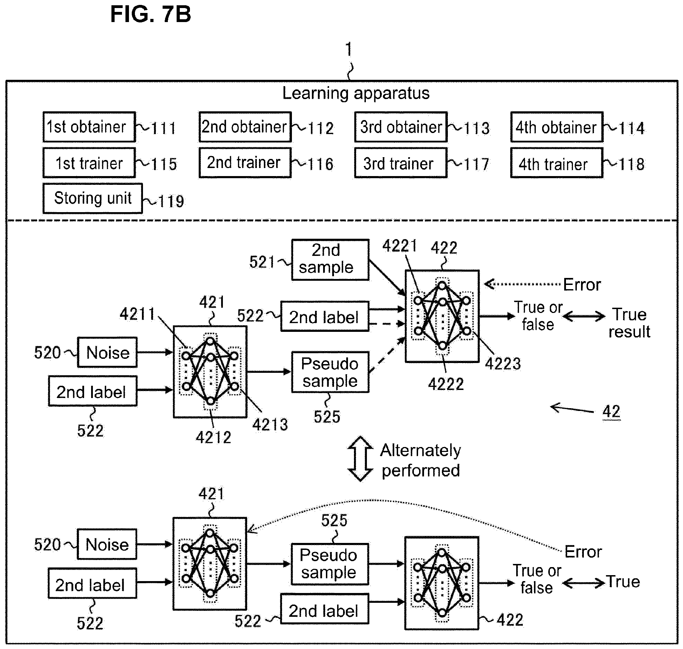

FIG. 7B is a schematic diagram describing an example process of training the second learning model 42 in the present embodiment through machine learning. The second learning model 42 may have any configuration allowing the second generator 421 to be trained to generate a pseudo sample including the second feature of the input type and may be defined as appropriate in each embodiment. In the present embodiment, the second learning model 42 also includes a second discriminator 422 as in the first learning model 41. The second generator 421 and the second discriminator 422 may each include any machine learning model trainable through machine learning.

In the present embodiment, the second generator 421 and the second discriminator 422 each include a multilayered neural network for deep learning as in, for example, the first generator 411. The second generator 421 and the second discriminator 422 each include an input layer (4211, 4221), an intermediate (hidden) layer (4212, 4222), and an output layer (4213, 4223). In the same manner as for, for example, the first generator 411, the structures of the second generator 421 and the second discriminator 422 may be different from the structures in the example and may be defined as appropriate in each embodiment. Each neural network may include any number of layers. The second generator 421 and the second discriminator 422 may have structures that match each other at least partially or do not match.

Each of the layers (4211 to 4213, 4221 to 4223) includes one or more neurons (nodes). Each of the layers (4211 to 4213, 4221 to 4223) may include any number of neurons (nodes) that may be determined as appropriate in each embodiment. Neurons in neighboring layers are coupled to each other as appropriate. In the example of FIG. 7B, neurons in each layer are coupled to all neurons in its adjacent layer. However, the neurons may be coupled in a manner other than in this example and may be determined as appropriate in each embodiment. Each coupling has a preset weight. Each neuron has a preset threshold. The threshold may be expressed using an activation function. The activation function may be of any type selected as appropriate in each embodiment. The coupling weight between neurons included in each of the layers (4211 to 4213, 4221 to 4223) and the threshold of each neuron are examples of the computational parameters of the second generator 421 and the second discriminator 422.

In the present embodiment, training the second generator 421 through machine learning includes alternately performing a third training step of training the second discriminator 422 and a fourth training step of training the second generator 421. In the third training step, the second trainer 116 trains the second discriminator 422 to discriminate whether a sample input into the second discriminator 422 is the second sample 521 obtained from any of the second learning datasets 52 or a pseudo sample 525 generated by the second generator 421. In other words, the second discriminator 422 is trained to discriminate whether the input sample results from any of the second learning datasets 52 (learning data) or the second generator 421. In the example shown in FIG. 7B, the source from which the input sample results is represented in the same manner as in FIG. 7A, but may be represented in a manner different from this example and selected as appropriate in each embodiment. In the fourth training step, the second trainer 116 trains the second generator 421 to generate the pseudo sample 525 that lowers the discrimination performance of the second discriminator 422. More specifically, training of the second learning model 42 through machine learning includes adversarial learning between the second generator 421 and the second discriminator 422.

The process of training the second learning model 42 through machine learning may be performed in the same manner as in training the first learning model 41 through machine learning except for data to be used. More specifically, in the third training step, the second trainer 116 first extracts noise 520 (latent variable) from a predetermined probability distribution (e.g., a Gaussian distribution) for each second learning dataset 52. Subsequently, the second trainer 116 inputs the extracted noise 520 and the second label 522 into the input layer 4211 in the second generator 421 to cause the second generator 421 to perform a computational operation. Thus, the second trainer 116 obtains, from the output layer 4213 in the second generator 421, an output (specifically, the pseudo sample 525) corresponding to the pseudo sample generated from the noise 520 and the second label 522.

The second trainer 116 then inputs the generated pseudo sample 525 and the corresponding second label 522 into the input layer 4221 in the second discriminator 422 and causes the second discriminator 422 to perform a computational operation. Thus, the second trainer 116 obtains an output value corresponding to the discrimination result on the input sample from the output layer 4223 in the second discriminator 422. In this situation, the input sample is the pseudo sample 525, for which the true result is a false discrimination performed by the second discriminator 422. The second trainer 116 calculates an error between the true result and the output value obtained from the output layer 4223 for each pseudo sample 525 generated by the second generator 421.

The second trainer 116 inputs each second learning dataset 52 (the second sample 521 and the second label 522) into the input layer 4221 in the second discriminator 422 and causes the second discriminator 422 to perform a computational operation. Thus, the second trainer 116 obtains an output value corresponding to the discrimination result on the input sample from the output layer 4223 in the second discriminator 422. In this situation, the input sample is the second sample 521, for which the true result is a true discrimination performed by the second discriminator 422. The second trainer 116 calculates an error between the true result and the output value obtained from the output layer 4223 for each second learning dataset 52.

The second trainer 116 adjusts the computational parameter values of the second discriminator 422 to reduce the sum of the calculated errors while fixing the computational parameter values of the second generator 421. Thus, the second trainer 116 can train the second discriminator 422 to be capable of discriminating whether a sample input into the second discriminator 422 is the second sample 521 obtained from any of the second learning datasets 52 or the pseudo sample 525 generated by the second generator 421.

In the fourth training step, the second trainer 116 first extracts noise 520 (latent variable) from a predetermined probability distribution for each second learning dataset 52. The second trainer 116 then inputs the extracted noise 520 and the second label 522 into the input layer 4211 in the second generator 421 and causes the second generator 421 to perform a computational operation. Thus, the second trainer 116 obtains, from the output layer 4213 in the second generator 421, an output (specifically, the pseudo sample 525) corresponding to the pseudo sample generated from the noise 520 and the second label 522. The process of generating the pseudo sample 525 may be shared between the third and fourth training steps. In other words, the pseudo sample 525 generated in the third training step may also be used in the fourth training step.

The second trainer 116 then inputs the generated pseudo sample 525 and the corresponding second label 522 into the input layer 4221 in the second discriminator 422 and causes the second discriminator 422 to perform a computational operation. Thus, the second trainer 116 obtains an output value corresponding to the discrimination result on the input sample from the output layer 4223 in the second discriminator 422. In training the second generator 421, the true result is the reduced discrimination performance of the second discriminator 422 (specifically, the discrimination result being an error). In other words, the true result is the output value obtained from the output layer 4223 being true. The second trainer 116 calculates an error between the true result and the output value obtained from the output layer 4223 for each pseudo sample 525.

The second trainer 116 adjusts the computational parameter values of the second generator 421 to reduce the sum of the calculated errors while fixing the computational parameter values of the second discriminator 422. Thus, the second trainer 116 can train the second generator 421 to be capable of generating the pseudo sample 525 that lowers the discrimination performance of the second discriminator 422.

The second trainer 116 alternately performs the third and fourth training steps to alternately improve the performance of each of the second discriminator 422 and the second generator 421. The improved discrimination performance of the second discriminator 422 improves the performance of the second generator 421 for generating the pseudo sample 525 fitting the second sample 521. Thus, the structure according to the present embodiment can build, through the machine learning, the trained second generator 421 that can generate appropriate pseudo samples including the second feature. The third and fourth training steps may be performed in any order.

After the machine learning process, the storing unit 119 generates information indicating the structure of the built trained second generator 421 and information indicating the computational parameters as the second training-result data 122. The storing unit 119 then stores the generated second training-result data 122 into a predetermined storage area. In another example, the second training-result data 122 may be any other data that can reproduce the trained second generator 421. When, for example, the apparatuses include the second generators 421 with the same structure, the information indicating the structure of the second generator 421 may be eliminated from the second training-result data 122. In some embodiments, the second training-result data 122 may also include information indicating the structure of the built trained second discriminator 422 and information indicating the computational parameters.

### Training of Third Learning Model through Machine Learning

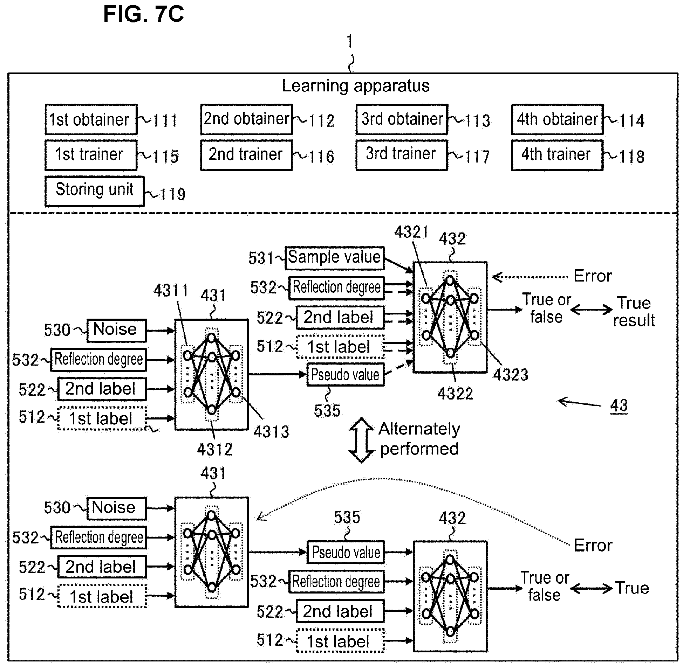

FIG. 7C is a schematic diagram describing an example process of training the third learning model 43 in the present embodiment through machine learning. The third learning model 43 may have any configuration allowing the third generator 431 to be trained to generate a pseudo value of the second feature attribute of the input type and degree (reflection degree) and may be defined as appropriate in each embodiment. In the present embodiment, the third learning model 43 also includes a third discriminator 432 as in, for example, the first learning model 41. The third generator 431 and the third discriminator 432 may each include any machine learning model trainable through machine learning.

In the present embodiment, the third generator 431 and the third discriminator 432 each include a multilayered neural network for deep learning as in, for example, the first generator 411. The third generator 431 and the third discriminator 432 each include an input layer (4311, 4321), an intermediate (hidden) layer (4312, 4322), and an output layer (4313, 4323). In the same manner as for, for example, the first generator 411, the structures of the third generator 431 and the third discriminator 432 may be different from the structures in the example and may be defined as appropriate in each embodiment. Each neural network may include any number of layers. The third generator 431 and the third discriminator 432 may have structures that match each other at least partially or do not match.

Each of the layers (4311 to 4313, 4321 to 4323) includes one or more neurons (nodes). Each of the layers (4311 to 4313, 4321 to 4323) may include any number of neurons (nodes) that may be determined as appropriate in each embodiment. Neurons in neighboring layers are coupled to each other as appropriate. In the example of FIG. 7C, neurons in each layer are coupled to all neurons in its adjacent layer. However, the neurons may be coupled in a manner other than in this example and may be determined as appropriate in each embodiment. Each coupling has a preset weight. Each neuron has a preset threshold. The threshold may be expressed using an activation function. The activation function may be of any type selected as appropriate in each embodiment. The coupling weight between neurons included in each of the layers (4311 to 4313, 4321 to 4323) and the threshold of each neuron are examples of the computational parameters of the third generator 431 and the third discriminator 432.

In the present embodiment, training the third generator 431 through machine learning includes alternately performing a fifth training step of training the third discriminator 432 and a sixth training step of training the third generator 431. In the fifth training step, the third trainer 117 trains the third discriminator 432 to discriminate whether a value input into the third discriminator 432 is a sample value 531 obtained from any of the third learning datasets 53 or a pseudo value 535 generated by the third generator 431. In other words, the third discriminator 432 is trained to discriminate whether the input value results from any of the third learning datasets 53 (learning data) or the third generator 431. In the example shown in FIG. 7C, the source from which the input value results is represented in the same manner as in, for example, FIG. 7A, but may be represented in a manner different from this example and selected as appropriate in each embodiment. In the sixth training step, the third trainer 117 trains the third generator 431 to generate the pseudo value 535 of the second feature attribute that lowers the discrimination performance of the third discriminator 432. More specifically, training of the third learning model 43 through machine learning includes adversarial learning between the third generator 431 and the third discriminator 432.

The process of training the third learning model 43 through machine learning may be performed in the same manner as in training the first learning model 41 through machine learning except for data to be used. More specifically, in the fifth training step, the third trainer 117 first extracts noise 530 (latent variable) from a predetermined probability distribution (e.g., a Gaussian distribution) for each third learning dataset 53. Subsequently, the third trainer 117 inputs the extracted noise 530, the corresponding reflection degree 532, and the corresponding second label 522 into the input layer 4311 in the third generator 431 and causes the third generator 431 to perform a computational operation. Thus, the third trainer 117 obtains, from the output layer 4313 in the third generator 431, an output (specifically, the pseudo value 535) corresponding to the pseudo value of the second feature attribute generated from the noise 530, the reflection degree 532, and the second label 522. When each third learning dataset 53 further includes the first label 512, the third trainer 117 may further input the corresponding first label 512 into the input layer 4311 in the third generator 431, and perform the above process.

The third trainer 117 then inputs the generated pseudo value 535, the corresponding reflection degree 532, and the corresponding second label 522 into the input layer 4321 in the third discriminator 432 and causes the third discriminator 432 to perform a computational operation. Thus, the third trainer 117 obtains an output value corresponding to the discrimination result on the input value from the output layer 4323 in the third discriminator 432. In this situation, the input value is the pseudo value 535, for which the true result is a false discrimination performed by the third discriminator 432. The third trainer 117 calculates an error between the true result and the output value obtained from the output layer 4323 for each pseudo value 535 generated by the third generator 431.

The third trainer 117 inputs each third learning dataset 53 (the sample value 531, the reflection degree 532, and the second label 522) into the input layer 4321 in the third discriminator 432 and causes the third discriminator 432 to perform a computational operation. Thus, the third trainer 117 obtains an output value corresponding to the discrimination result on the input value from the output layer 4323 in the third discriminator 432. In this situation, the input value is the sample value 531, for which the true result is a true discrimination performed by the third discriminator 432. The third trainer 117 calculates an error between the true result and the output value obtained from the output layer 4323 for each third learning dataset 53. When each third learning dataset 53 further includes the first label 512, the third trainer 117 may further input the corresponding first label 512 into the input layer 4321 in the third discriminator 432, and perform the above process.

The third trainer 117 adjusts the computational parameter values of the third discriminator 432 to reduce the sum of the calculated errors while fixing the computational parameter values of the third generator 431. Thus, the third trainer 117 can train the third discriminator 432 to be capable of discriminating whether a value input into the third discriminator 432 is the sample value 531 obtained from any of the third learning datasets 53 or the pseudo value 535 generated by the third generator 431.

In the sixth training step, the third trainer 117 first extracts the noise 530 (latent variable) from a predetermined probability distribution for each third learning dataset 53. The third trainer 117 then inputs the extracted noise 530, the corresponding reflection degree 532, and the corresponding second label 522 into the input layer 4311 in the third generator 431 and causes the third generator 431 to perform a computational operation. Thus, the third trainer 117 obtains, from the output layer 4313 in the third generator 431, an output (specifically, the pseudo value 535) corresponding to the pseudo value of the second feature attribute generated from the noise 530, the reflection degree 532, and the second label 522. When each third learning dataset 53 further includes the first label 512, the third trainer 117 may further input the corresponding first label 512 into the input layer 4311 in the third generator 431, and perform the above process. The process of generating the pseudo value 535 may be shared between the fifth and sixth training steps. In other words, the pseudo value 535 generated in the fifth training step may also be used in the sixth training step.

The third trainer 117 then inputs the generated pseudo value 535, the corresponding reflection degree 532, and the corresponding second label 522 into the input layer 4321 in the third discriminator 432 and causes the third discriminator 432 to perform a computational operation. Thus, the third trainer 117 obtains an output value corresponding to the discrimination result on the input value from the output layer 4323 in the third discriminator 432. In training the third generator 431, the true result is the reduced discrimination performance of the third discriminator 432 (specifically, the discrimination result being an error). In other words, the true result is the output value obtained from the output layer 4323 being true. The third trainer 117 calculates an error between the true result and the output value obtained from the output layer 4323 for each pseudo value 535. When each third learning dataset 53 further includes the first label 512, the third trainer 117 may further input the corresponding first label 512 into the input layer 4321 in the third discriminator 432, and perform the above process.

The third trainer 117 adjusts the computational parameter values of the third generator 431 to reduce the sum of the calculated errors while fixing the computational parameter values of the third discriminator 432. Thus, the third trainer 117 can train the third generator 431 to be capable of generating the pseudo value 535 that lowers the discrimination performance of the third discriminator 432.

The third trainer 117 alternately performs the fifth and sixth training steps to alternately improve the performance of each of the third discriminator 432 and the third generator 431. The improved discrimination performance of the third discriminator 432 improves the performance of the third generator 431 for generating the pseudo value 535 fitting the sample value 531. Thus, the structure according to the present embodiment can build, through the machine learning, the trained third generator 431 that can generate appropriate pseudo values of the second feature attribute in accordance with the input value and noise corresponding to the reflection degree 532 and the second label 522. In each training step, the first label 512 may further be input. In this case, the built trained third generator 431 can generate appropriate pseudo values of the second feature attribute in accordance with the noise and the input values corresponding to the reflection degree 532, the second label 522, and the first label 512. The fifth and sixth training steps may be performed in any order.

After the machine learning process, the storing unit 119 generates information indicating the structure of the built trained third generator 431 and information indicating the computational parameters as the third training-result data 123. The storing unit 119 then stores the generated third training-result data 123 into a predetermined storage area. In another example, the third training-result data 123 may be any other data that can reproduce the trained third generator 431. When, for example, the apparatuses include the third generators 431 with the same structure, the information indicating the structure of the third generator 431 may be eliminated from the third training-result data 123. In some embodiments, the third training-result data 123 may also include information indicating the structure of the built trained third discriminator 432 and information indicating the computational parameters.

### Training of Estimator through Machine Learning

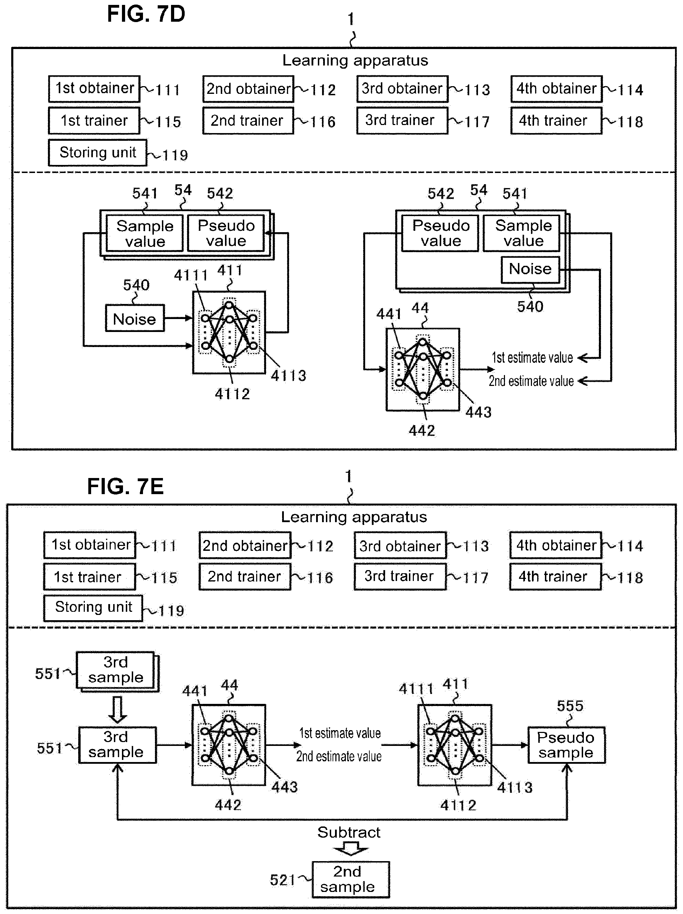

FIG. 7D is a schematic diagram describing an example process of training the estimator 44 in the present embodiment through machine learning. The estimator 44 may include any machine learning model trainable through machine learning. In the present embodiment, the estimator 44 includes a multilayered neural network for deep learning as in, for example, the first generator 411. The estimator 44 includes an input layer 441, an intermediate (hidden) layer 442, and an output layer 443. In the same manner as for, for example, the first generator 411, the structure of the estimator 44 may be different from the structure in the example and may be defined as appropriate in each embodiment. The neural network included in the estimator 44 may include any number of layers.

Each of the layers 441 to 443 includes one or more neurons (nodes). Each of the layers 441 to 443 may include any number of neurons (nodes) that may be determined as appropriate in each embodiment. Neurons in neighboring layers are coupled to each other as appropriate. In the example of FIG. 7D, neurons in each layer are coupled to all neurons in its adjacent layer. However, the neurons may be coupled in a manner other than in this example and may be determined as appropriate in each embodiment. Each coupling has a preset weight. Each neuron has a preset threshold. The threshold may be expressed using an activation function. The activation function may be of any type selected as appropriate in each embodiment. The coupling weight between neurons included in each of the layers 441 to 443 and the threshold of each neuron are examples of the computational parameters of the estimator 44.

The estimator 44 is trained through machine learning to estimate, from a pseudo sample generated by the trained first generator 411, an input provided to the trained first generator 411 to generate the pseudo sample. Each fourth learning dataset 54 used in the machine learning may be generated as appropriate using the trained first generator 411. For example, the sample value 541 provided to the trained first generator 411 is determined as appropriate. The sample value 541 may be determined manually through an operator input or automatically in, for example, a random manner. The sample value 541 corresponds to the first label 512 indicating the type of the first feature. Noise 540 (latent variable) is extracted from a predetermined probability distribution (e.g., a Gaussian distribution) corresponding to the sample value 541. The process of determining the sample value 541 and the process of extracting the noise 540 may be performed in any order. The extracted noise 540 and the sample value 541 are input into the input layer 4111 in the trained first generator 411, and the trained first generator 411 performs a computational operation. This produces an output (specifically, the pseudo sample 542), from the output layer 4113 in the trained first generator 411, corresponding to the pseudo sample generated from the noise 540 and the sample value 541. The generated pseudo sample 542 is associated with the corresponding noise 540 and the sample value 541. Thus, each fourth learning dataset 54 can be generated.

In the present embodiment, the fourth trainer 118 trains, through machine learning, the estimator 44 including the neural network using the fourth learning datasets 54. In training the estimator 44 through machine learning, the fourth trainer 118 uses the pseudo sample 542 in each fourth learning dataset 54 as training data (input data), and uses the noise 540 and the sample value 541 as true data (a supervisory signal).

More specifically, the fourth trainer 118 inputs the pseudo sample 542 into the input layer 441 in the estimator 44 and causes the estimator 44 to perform a computational operation. Thus, the fourth trainer 118 obtains, from the output layer 443 in the estimator 44, an output value corresponding to an estimate value, obtained from the pseudo sample 542, of an input provided to the trained first generator 411 to generate the pseudo sample 542. The obtained output value includes a first estimate value corresponding to the noise provided to the trained first generator 411 and a second estimate value corresponding to the sample value. The fourth trainer 118 calculates an error between each estimate value and the noise 540 or the sample value 541 for each fourth learning dataset 54.

The fourth trainer 118 adjusts the computational parameter values of the estimator 44 to reduce the sum of the calculated errors. Thus, the fourth trainer 118 can build the estimator 44 trained to be capable of estimating, from a pseudo sample 542 generated by the trained first generator 411, inputs (the noise 540 and the sample value 541) provided to the trained first generator 411 to generate the pseudo sample 542.

After the machine learning process, the storing unit 119 generates information indicating the structure of the built trained estimator 44 and information indicating the computational parameters as the fourth training-result data 124. The storing unit 119 then stores the generated fourth training-result data 124 into a predetermined storage area. In another example, the fourth training-result data 124 may be any other data that can reproduce the trained estimator 44. When, for example, the apparatuses include the estimators 44 with the same structure, the information indicating the structure of the estimator 44 may be eliminated from the fourth training-result data 124.

### Generation of Second Sample

FIG. 7E is a schematic diagram describing an example process of generating the second sample 521 in the present embodiment. In the present embodiment, the trained first generator 411 and the estimator 44 generated through the machine learning are used to generate the second sample 521 for each second learning dataset 52.

More specifically, the second obtainer 112 obtains multiple third samples 551 of a predetermined type of data each including the first and second features. Subsequently, the second obtainer 112 provides each third sample 551 to the trained estimator 44 to estimate each estimate value of an input provided to the trained first generator 411 to generate a pseudo sample corresponding to the third sample 551. The obtained estimate values (first and second estimate values) correspond to inputs (noise and an input value) to be provided to the trained first generator 411 when the trained first generator 411 generates a pseudo sample corresponding to each third sample 551.

The second obtainer 112 then provides the estimate values (first and second estimate values) to the trained first generator 411 to generate a pseudo sample 555 for each third sample 551. The pseudo sample 555 is an example of a third pseudo sample according to an aspect of the present invention. The second obtainer 112 subtracts the pseudo sample 555 from the corresponding third sample 551 to generate the second sample 521 in each second learning dataset 52.

Through the machine learning, the trained first generator 411 is capable of generating a pseudo sample including the first feature, but not capable of generating a pseudo sample including the second feature. Thus, the obtained pseudo sample 555 typically reproduces the first feature, but does not reproduce the second feature. Subtracting the pseudo sample 555 from the third sample 551 allows appropriate generation of a sample including the second feature without the first feature to be usable as the second sample 521.

### Data Generation Apparatus

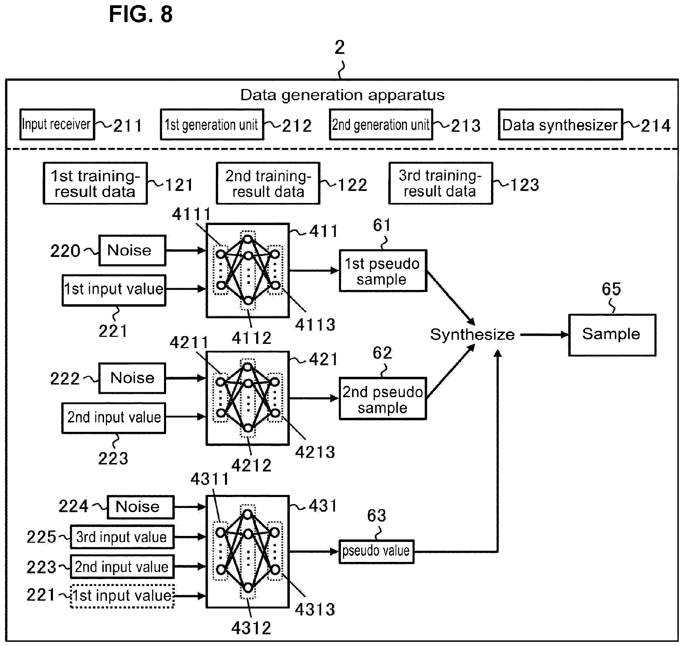

FIG. 8 is a schematic diagram of the data generation apparatus 2 according to the present embodiment showing its example software configuration. The controller 21 in the data generation apparatus 2 loads the data generation program 82 stored in the storage 22 into the RAM. The CPU in the controller 21 then interprets and executes the instructions included in the data generation program 82 loaded in the RAM to control each component. As shown in FIG. 8, the data generation apparatus 2 according to the present embodiment thus operates as a computer including an input receiver 211, a first generation unit 212, a second generation unit 213, and a data synthesizer 214 as software modules. In other words, in the present embodiment, each software module in the data generation apparatus 2 is implemented by the controller 11 (CPU) in the same manner as in the learning apparatus 1.

The input receiver 211 receives the specified first and second input values 221 and 223. The first input value 221 corresponds to the first label 512 indicating the type of the first feature, and the second input value 223 corresponds to the second label 522 indicating the type of the second feature.

The first generation unit 212 includes the trained first generator 411 stored as the first training-result data 121. The first generation unit 212 extracts noise 220 (latent variable) from a predetermined probability distribution (e.g., a Gaussian distribution). The first generation unit 212 provides the extracted noise 220 and the first input value 221 to the trained first generator 411 to generate a first pseudo sample 61 including the first feature.

The second generation unit 213 includes the trained second generator 421 stored as the second training-result data 122. The second generation unit 213 extracts noise 222 (latent variable) from a predetermined probability distribution (e.g., a Gaussian distribution). The second generation unit 213 provides the extracted noise 222 and the second input value 223 to the trained second generator 421 to generate a second pseudo sample 62 including the second feature.

The data synthesizer 214 synthesizes the generated first and second pseudo samples 61 and 62 to generate a new sample 65 of a predetermined type of data. The first pseudo sample 61 and the second pseudo sample 62 may be synthesized with any method determined as appropriate in each embodiment. In the present embodiment, the data synthesizer 214 include the trained third generator 431, stored as the third training-result data 123, that generates an attribute value of the second feature in accordance with the degree to which the second feature is reflected. Thus, the data synthesizer 214 can synthesize the first pseudo sample 61 and the second pseudo sample 62 while adjusting the degree to which the second feature is reflected.

More specifically, the input receiver 211 receives a specified third input value 225 corresponding to the reflection degree 532 indicating the degree to which the second feature is reflected. The third input value 225 may be provided in accordance with the detection limit for the second component. The data synthesizer 214 extracts noise 224 from a predetermined probability distribution (e.g., a Gaussian distribution). The data synthesizer 214 provides the extracted noise 224, the second input value 223, and the third input value 225 to the trained third generator 431 to generate a pseudo value 63 of the second feature attribute. When the first label 512 is also used in training the third learning model 43 through machine learning, the third generator 431 can also input an input value corresponding to the first label 512. In this case, the data synthesizer 214 provides the extracted noise 224, the first input value 221, the second input value 223, and the third input value 225 to the trained third generator 431 to generate the pseudo value 63 of the second feature attribute.

The data synthesizer 214 converts the second pseudo sample 62 to allow the second feature attribute value included in the second pseudo sample 62 to fit the generated pseudo value 63 and synthesizes the second pseudo sample 62 with the first pseudo sample 61. Specific processes of the conversion and synthesis may be determined as appropriate for the type of data. Thus, the data synthesizer 214 according to the present embodiment generates the new sample 65 of a predetermined type of data.

### Estimation Apparatus

FIG. 9 is a schematic diagram of the estimation apparatus 3 according to the present embodiment showing its example software configuration. The controller 31 in the estimation apparatus 3 loads the estimation program 83 stored in the storage 32 into the RAM. The CPU in the controller 31 then interprets and executes the instructions included in the estimation program 83 loaded in the RAM to control each component. As shown in FIG. 9, the estimation apparatus 3 according to the present embodiment is thus implemented as a computer including an obtainer 311, an estimation unit 312, an output unit 313, and a setting unit 314 as software modules. In other words, in the present embodiment, each software module in the estimation apparatus 3 is implemented by the controller 11 (CPU) in the same manner as in the learning apparatus 1.

The obtainer 311 obtains a target sample 325 to undergo a predetermined process of estimating the second feature. The estimation unit 312 performs a predetermined process on the obtained target sample 325. The estimation unit 312 in the present embodiment includes the trained first generator 411 and estimator 44 stored as the pieces of first and fourth training-result data (121, 124). The estimation unit 312 uses the trained first generator 411 and the estimator 44 to perform a detection process on the target sample 325 to detect a second component (specifically, to determine whether the target sample 325 includes the second feature).

More specifically, the estimation unit 312 provides the target sample 325 to the trained estimator 44 to estimate each estimate value of the input provided to the trained first generator 411 to generate a pseudo sample corresponding to the target sample 325. The obtained estimate values (first and second estimate values) correspond to the inputs (noise and an input value) to be provided to the trained first generator 411 when the trained first generator 411 generates a pseudo sample corresponding to the target sample 325. The estimation unit 312 provides the obtained estimate values to the trained first generator 411 to generate a pseudo sample 326. The estimation unit 312 subtracts the pseudo sample 326 from the target sample 325 to generate a subtracted sample 327. The estimation unit 312 detects the second component using the subtracted sample 327.

As described above, the trained first generator 411 is capable of generating a pseudo sample including the first feature, but is not capable of generating a pseudo sample including the second feature. Thus, although the target sample 325 includes both first and second features, the obtained pseudo sample 326 typically reproduces the first feature alone without the second feature. When the target sample 325 includes the second component (specifically, including the second feature), the subtracted sample 327 includes the second component. In contrast, when the target sample 325 does not include the second component (specifically, not including the second feature), the subtracted sample 327 does not include the second component, either. The estimation unit 312 can thus detect the second component based on the content of the second component included in the subtracted sample 327.

The output unit 313 outputs information about the result of estimation performed by the estimation unit 312 (in the present embodiment, a detection result of the second component). The setting unit 314 sets parameter values in the estimation process based on the samples 321 included in the data group 320. The sample including the first feature and the second feature is usable as the sample 321 in the data group 320. At least one of the samples 321 included in the data group 320 may be the sample 65 generated by the data generation apparatus 2.

### Other Considerations

The software modules for the learning apparatus 1, the data generation apparatus 2, and the estimation apparatus 3 will be described in detail later in the operation examples. In the present embodiment, the software modules for the learning apparatus 1, the data generation apparatus 2, and the estimation apparatus 3 are implemented by a general-purpose CPU. However, some or all of the software modules may be implemented by one or more dedicated processors. For the software configuration of the learning apparatus 1, the data generation apparatus 2, and the estimation apparatus 3, software modules may be eliminated, substituted, or added as appropriate in each embodiment.

### 3. Operation Examples

### Learning Apparatus

### (A) Training of First Learning Model through Machine Learning

FIG. 10A is a flowchart of an example procedure performed by the learning apparatus 1 according to the present embodiment to train the first learning model 41 through machine learning. The procedure described below is a mere example, and the steps in the procedure may be changed as appropriate. In the procedure described below, steps may be eliminated, substituted, or added as appropriate in each embodiment.

### Step S101

In step S101, the controller 11 operates as a first obtainer 111 to obtain the first learning datasets 51. Each first learning dataset 51 includes a combination of the first sample 511 including the first feature and the first label 512 indicating the type of the first feature.

Each first learning dataset 51 may be generated with any method selected as appropriate in each embodiment. For example, in a real or virtual space, the controller 11 obtains a sample including the first feature. The sample may be obtained with a method appropriate for the first feature and the type of data. When, for example, the predetermined type of data is sensing data, a sensor observes an object in a situation in which the first feature appears without the second feature appearing. The resultant sample includes the first feature without the second feature. In the example shown in FIG. 2A, an image of the product P1 without a defect is captured with a camera to obtain a sample showing the background P11 including the product P1. In the example of FIG. 2B, a normal machine operation sound is recorded using a microphone to obtain a sample including an ambient sound P21. In some embodiments, such an environment is simulated in a virtual space or undergoes data processing to obtain a sample including the first feature. The controller 11 then discriminates the type of the first feature appearing in the obtained sample, and associates information indicating the discriminated result to the sample as a label. The type of the first feature may be discriminated by an operator such as a user. In some embodiments, the type of the first feature may be discriminated by a discriminator. The discriminator may discriminate the type of the first feature through known information processing such as an image or voice analysis, or may be a machine learning model trained to discriminate the type of the first feature from the target sample. The controller 11 thus associates the information indicating the result of discriminating the type of the first feature to the sample as a label. This generates each first learning dataset 51.

Each first learning dataset 51 may be automatically generated through a computer operation or at least partially manually generated through an operation with an operator. Each first learning dataset 51 may be generated by the corresponding learning apparatus 1 or by a computer other than the corresponding learning apparatus 1. When each learning apparatus 1 generates the corresponding first learning dataset 51, the controller 11 may perform the series of generation processing steps described above automatically or in response to a manual operation performed by an operator with the input device 15 to obtain multiple first learning datasets 51. When another computer generates each first learning dataset 51, the controller 11 may obtain multiple first learning datasets 51 generated by the other computer through, for example, a network or the storage medium 91. Some of the first learning datasets 51 may be generated by each learning apparatus 1, and the remaining other first learning datasets 51 may be generated by one or more other computers.

The number of first learning datasets 51 to be obtained may be selected as appropriate in each embodiment. After obtaining the first learning datasets 51, the controller 11 advances the processing to step S102.

### Step S102

In step S102, the controller 11 operates as the first trainer 115 and trains, through machine learning, the first learning model 41 including the first generator 411 using the obtained first learning datasets 51. In training the first learning model 41 through machine learning, the controller 11 trains the first generator 411 to be capable of generating pseudo samples fitting the first sample 511 from the first label 512 for each first learning dataset 51. The training performed in this manner allows the first learning model 41 to have any configuration or to be trained through machine learning with any method selected as appropriate in each embodiment. In the present embodiment, the first learning model 41 also includes the first discriminator 412. Thus, the first learning model 41 may be trained through machine learning with the method described below.

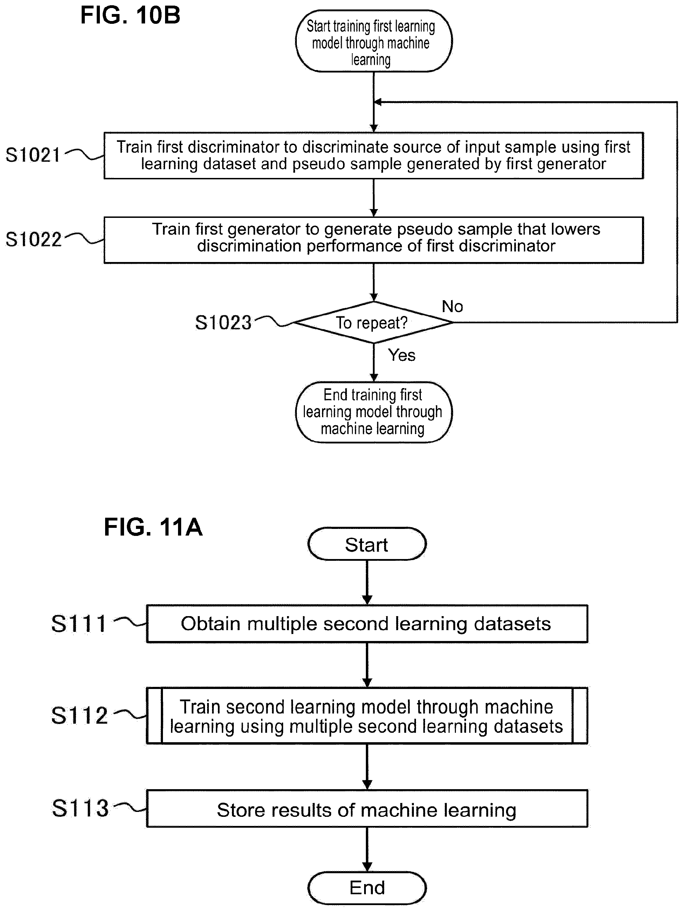

FIG. 10B is a flowchart of an example subroutine procedure of training the first learning model 41 in the present embodiment through machine learning in step S102. The processing in step S102 in the present embodiment includes the processing in steps S1021 to S1023. The procedure described below is a mere example, and each of the steps may be modified in any possible manner. In the procedure described below, steps may be eliminated, substituted, or added as appropriate in each embodiment.

A machine learning model included in the first generator 411 and the first discriminator 412 to be trained through machine learning may be prepared as appropriate. The configurations of the first generator 411 and the first discriminator 412 (specifically, the number of layers, the number of neurons in each layer, and the couplings between neurons in adjacent layers) to be prepared, the default values of the coupling weights between neurons, and the default threshold of each neuron may be preset using a template or may be input by an operator. For retraining, the controller 11 may prepare the first generator 411 and the first discriminator 412 based on training-result data previously obtained through past machine learning.

### Step S1021

In step S1021, the controller 11 uses the first learning dataset 51 and the pseudo sample 515 generated by the first generator 411 to train the first discriminator 412 to discriminate the source of the input sample. The training process through machine learning may include stochastic gradient descent and mini-batch gradient descent. The same applies to other processes of machine learning including step S1022 described below.

For example, the controller 11 first provides the noise 510 extracted from a predetermined probability distribution and the first label 512 to the first generator 411 for each first learning dataset 51 and causes the first generator 411 to perform a computational operation. The controller 11 inputs the noise 510 and the first label 512 into the input layer 4111 in the first generator 411 and then determines neuronal firing in each of the layers 4111 to 4113 sequentially from the layer on the input end (specifically, performs feedforward computations). Through the computational operation, the controller 11 obtains, from the output layer 4113, output values corresponding to the pseudo sample 515 generated from the noise 510 and the first label 512 for each first learning dataset 51.

The controller 11 then inputs the generated pseudo sample 515 and the corresponding first label 512 into the input layer 4121 in the first discriminator 412, and determines neuronal firing in each of the layers 4121 to 4123 sequentially from the layer on the input end. Thus, the controller 11 obtains output values corresponding to the results obtained from discrimination of the source of the input samples from the output layer 4123 in the first discriminator 412. In this situation, the input sample is the pseudo sample 515, for which the true result is a false discrimination performed by the first discriminator 412. The controller 11 calculates an error between the true result and the output value obtained from the output layer 4123 for each pseudo sample 515.

The controller 11 inputs each first learning dataset 51 (first sample 511 and first label 512) into the input layer 4121 in the first discriminator 412, and determines neuronal firing in each of the layers 4121 to 4123 sequentially from the layer on the input end. Thus, the controller 11 obtains, from the output layer 4123 in the first discriminator 412, output values corresponding to the results obtained from discrimination of the source of the input samples. In this situation, the input data is the first sample 511, for which the true result is a true discrimination performed by the first discriminator 412. The controller 11 calculates an error between the true result and the output value obtained from the output layer 4123 for each pseudo sample 515.

A loss function may be used to calculate each error (loss). The loss function is a function to evaluate a difference between an output from a machine learning model and a true result. An error calculated using the loss function is greater as a difference between the output value obtained from the output layer 4123 and the true result is greater. The loss function used for calculating such an error may be of any type selected as appropriate in each embodiment.

The controller 11 uses the error back propagation method to calculate an error in the value of each computational parameter (the coupling weight between neurons and the threshold of each neuron) for the first discriminator 412 using the gradient of the error in the calculated output value. The controller 11 updates the value of each computational parameter of the first discriminator 412 based on the calculated error. The values of the computational parameters may be updated by the frequency adjusted based on the learning rate. The learning rate may be provided with an indication by an operator or provided as a value preset in a program.

The controller 11 adjusts the value of each computational parameter of the first discriminator 412 to reduce the sum of the calculated errors through the above series of updating processing steps while fixing the computational parameter values of the first generator 411. For example, until the predetermined condition is satisfied, such as an operation being performed a predetermined number of times or the sum of calculated errors falling below a threshold, the controller 11 may repeatedly adjust the value of each computational parameter of the first discriminator 412 with the above series of processing steps. Thus, the controller 11 can build the first discriminator 412 trained to discriminate whether the input sample is the first sample 511 obtained from any of the first learning datasets 51 or the pseudo sample 515 generated by the first generator 411. After the process of training the first discriminator 412, the controller 11 advances the processing to step S1022.

### Step S1022

In step S1022, the controller 11 trains the first generator 411 to generate the pseudo sample 515 that lowers the discrimination performance of the first discriminator 412. In other words, the controller 11 trains the first generator 411 to generate the pseudo sample 515 discriminated by the first discriminator 412 as being true (specifically, discriminated as resulting from learning data).

For example, the controller 11 first provides the noise 510 extracted from a predetermined probability distribution and the first label 512 to the first generator 411 for each first learning dataset 51 as in step S1021 to generate the pseudo sample 515. When the pseudo sample 515 generated in step S1021 is also used in step S1022, the controller 11 may eliminate the series of processing steps for generating the pseudo sample 515 in step S1022.

The controller 11 then inputs the generated pseudo sample 515 and the corresponding first label 512 into the input layer 4121 in the first discriminator 412, and determines neuronal firing in each of the layers 4121 to 4123 sequentially from the layer on the input end. Thus, the controller 11 obtains an output value corresponding to the discrimination result of the source of the input samples from the output layer 4123 in the first discriminator 412. In this situation, the true result for the input sample is the incorrect discrimination of being true (specifically, resulting from learning data) by the first discriminator 412. The controller 11 calculates the error between the output value obtained from the output layer 4123 and the true result for each pseudo sample 515. As in the example above, a loss function may be used to calculate the error.

The controller 11 uses the error back propagation method to calculate an error in the value of each computational parameter of the first generator 411 by back propagation of the gradient of the error in the calculated output value into the computational parameters of the first generator 411 through the first discriminator 412. The controller 11 updates the value of each computational parameter of the first generator 411 based on the calculated error. In the same manner as described above, the values of the computational parameters may be updated by the frequency adjusted based on the learning rate.

The controller 11 adjusts the value of each computational parameter of the first generator 411 to reduce the sum of the calculated errors through the above series of updating processing steps while fixing the computational parameter values of the first discriminator 412. As in training the first discriminator 412, the controller 11 may repeatedly adjust the value of each computational parameter of the first generator 411 with the above series of processing steps until the predetermined condition is satisfied. Thus, the controller 11 can build the first generator 411 trained to generate the pseudo sample 515 that lowers the discrimination performance of the first discriminator 412. After the process of training the first generator 411, the controller 11 advances the processing to step S1023.

### Step S1023

In step S1023, the controller 11 determines whether to repeat the processing in steps S1021 and S1022. The criterion to determine whether the processing is to be repeated may be defined as appropriate in each embodiment. For example, the number of times may be set for the steps to be repeated. The number of times may be, for example, specified by an operator, or input as a set value in a program. In this case, the controller 11 determines whether the number of times the processing in steps S1021 and S1022 is to be performed reaches the specified number of times. When the number of times the steps are performed is determined as not reaching the specified number of times, the controller 11 returns the processing to step S1021 and performs the processing in steps S1021 and S 1022 again. When the number of times the steps are performed is determined as reaching the specified number of times, the controller 11 ends the process of training the first learning model 41 through machine learning and advances the processing to step S103.

Through the above processing, the controller 11 alternately performs the steps of training the first discriminator 412 and the first generator 411. This alternately improves the performance of each of the first discriminator 412 and the first generator 411. The controller 11 can thus build the first generator 411 trained to be capable of generating a pseudo sample (specifically, a pseudo sample including the first feature of the type corresponding to the input value) fitting the first sample 511 from the first label 512 for each first learning dataset 51.

### Step S103

Referring back to FIG. 10A, in step S103, the controller 11 operates as the storing unit 119 and generates information about the trained first generator 411 built through machine learning as the first training-result data 121. The controller 11 stores the generated first training-result data 121 in a predetermined storage area.

The predetermined storage area may be, for example, the RAM in the controller 11, the storage 12, an external storage, a storage medium, or a combination of these. The storage medium is, for example, a CD or a DVD. The controller 11 may store the first training-result data 121 into the storage medium through the drive 17. The external storage may be, for example, a data server, such as a network attached storage (NAS). In this case, the controller 11 may use the communication interface 13 to store the first training-result data 121 into a data server through a network. The external storage may be connected to the learning apparatus 1 through the external interface 14.

Upon storage of the first training-result data 121, the controller 11 ends the series of processing steps for training the first learning model 41 through machine learning.

The generated first training-result data 121 may be provided to the data generation apparatus 2 and the estimation apparatus 3 at any selected time. For example, the controller 11 may transfer the first training-result data 121 to the data generation apparatus 2 and the estimation apparatus 3 in step S103 or in a step separate from step S103. The data generation apparatus 2 and the estimation apparatus 3 may receive the transferred data to obtain the first training-result data 121. In another example, the data generation apparatus 2 and the estimation apparatus 3 may use the communication interface (23, 33) to access the learning apparatus 1 or a data server through a network and obtain the first training-result data 121. In still another example, the data generation apparatus 2 and the estimation apparatus 3 may obtain the first training-result data 121 through the storage medium (92, 93). For example, the data generation apparatus 2 and the estimation apparatus 3 may prestore the first training-result data 121.

Further, the controller 11 may update or newly generate the first training-result data 121 by regularly or irregularly repeating the processing in steps S101 to S103 above. During the repeated processes, at least one of the first learning datasets 51 may undergo changes, modifications, additions, and deletions as appropriate. The controller 11 may provide the updated or newly generated first training-result data 121 to the data generation apparatus 2 and the estimation apparatus 3 through any method to update the first training-result data 121 held by the data generation apparatus 2 and the estimation apparatus 3.

### (B) Training of Second Learning Model through Machine Learning

FIG. 11A is a flowchart of an example procedure performed by the learning apparatus 1 according to the present embodiment to train the second learning model 42 through machine learning. However, the procedure below is a mere example, and each of its steps may be modified in any possible manner. In the procedure below, steps may be eliminated, substituted, or added as appropriate in each embodiment.

### Step S111

In step S111, the controller 11 operates as the second obtainer 112 and obtains multiple second learning datasets 52. Each second learning dataset 52 includes a combination of a second sample 521 including the second feature different from the first feature and a second label 522 indicating the type of the second feature.

The methods for generating and obtaining each second learning dataset 52 may be the same as those for each first learning dataset 51. As shown in FIGs. 2A and 2B, when the feature that hardly appears by itself is selected as the second feature, obtaining a sample including the second feature alone may be impractical. In this case, a sample including the second feature alone may be generated by obtaining a sample including the first feature and the second feature and processing the obtained sample as appropriate. In the present embodiment, the second sample 521 can be generated using the trained first generator 411 and the estimator 44. Information processing will be described in detail later.

Any number of second learning datasets 52 may be obtained as appropriate in each embodiment. After obtaining multiple second learning datasets 52, the controller 11 advances the processing to subsequent step S112.

### Step S112

In step S112, the controller 11 operates as the second trainer 116 and trains the second learning model 42 including the second generator 421 through machine learning using the obtained multiple second learning datasets 52. In training the second learning model 42 through machine learning, the controller 11 trains the second generator 421 for each second learning dataset 52 to be capable of generating a pseudo sample fitting the second sample 521 from the second label 522. The training performed in this manner allows the second learning model 42 to have any configuration or to be trained through machine learning with any method selected as appropriate in each embodiment. In the present embodiment, the second learning model 42 also includes the second discriminator 422. Thus, the second learning model 42 may be trained through machine learning with the method described below.

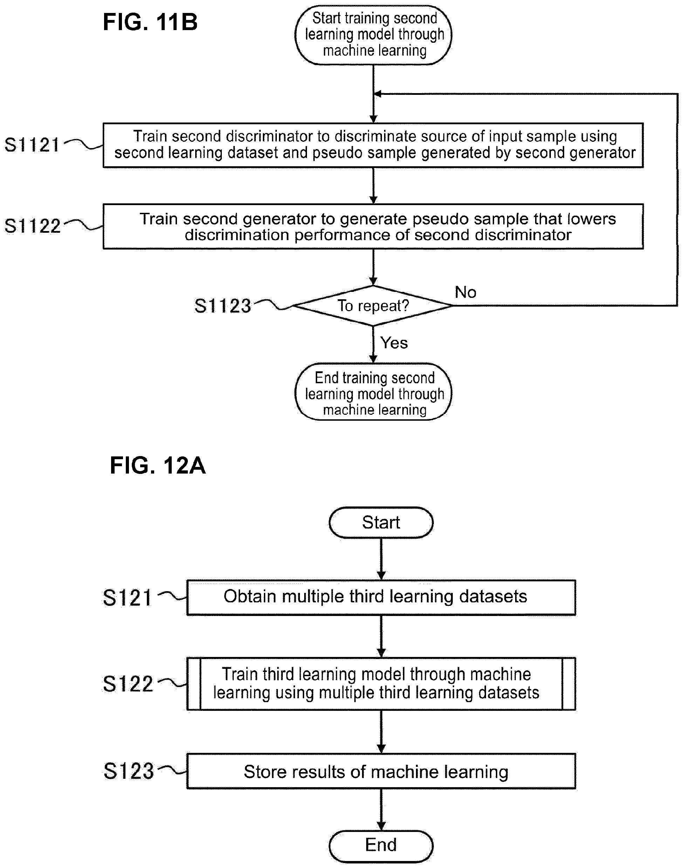

FIG. 11B is a flowchart of an example subroutine procedure of training the second learning model 42 in the present embodiment through machine learning in step S112. The processing in step S112 in the present embodiment includes the processing in steps S1121 to S1123 described below. The procedure described below is a mere example, and each of its steps may be modified in any possible manner. In the procedure described below, steps may be eliminated, substituted, or added as appropriate in each embodiment. As in the first learning model 41, machine learning models included in the second generator 421 and the second discriminator 422 that are to be trained through machine learning may be prepared as appropriate.

### Step S1121

In step S1121, the controller 11 uses the second learning dataset 52 and the pseudo sample 525 generated by the second generator 421 to train the second discriminator 422 to discriminate the source of the input sample.

Except the replacement of learning data, the processing in step S1121 may be performed in the same manner as in step S1021. More specifically, the controller 11 provides the noise 520 extracted from a predetermined probability distribution and the second label 522 to the second generator 421 for each second learning dataset 52 to generate the pseudo sample 525. The controller 11 provides the generated pseudo sample 525 and the corresponding second label 522 to the second discriminator 422, obtains an output value corresponding to the discrimination result of the source of the input sample, and calculates an error between the obtained output value and the true result. The controller 11 provides each second learning dataset 52 (the second sample 521 and the second label 522) to the second discriminator 422, obtains an output value corresponding to the discrimination result of the source of the input sample, and calculates an error between the obtained output value and the true result. The controller 11 uses the error back propagation method to calculate an error in the value of each computational parameter of the second discriminator 422 using the gradient of the error in the calculated output value. The controller 11 updates the value of each computational parameter of the second discriminator 422 based on the calculated error. The controller 11 adjusts the value of each computational parameter of the second discriminator 422 to reduce the sum of the calculated errors through the above series of updating processing steps while fixing the computational parameter values of the second generator 421. As in, for example, step S1021, the controller 11 may repeatedly adjust the value of each computational parameter of the second discriminator 422 with the above series of processing steps until the predetermined condition is satisfied.

Thus, the controller 11 can build the second discriminator 422 trained to discriminate whether the input sample is the second sample 521 obtained from any of the second learning datasets 52 or the pseudo sample 525 generated by the second generator 421. After the process of training the second discriminator 422, the controller 11 advances the processing to step S1122.

### Step S1122

In step S1122, the controller 11 trains the second generator 421 to generate the pseudo sample 525 that lowers the discrimination performance of the second discriminator 422. In other words, the controller 11 trains the second generator 421 to generate the pseudo sample 525 that is discriminated by the second discriminator 422 as being true (discriminated as resulting from learning data).

Except the replacement of learning data, the processing in step S1122 may be performed in the same manner as in, for example, step S1022. More specifically, the controller 11 provides the generated pseudo sample 525 and the corresponding second label 522 to the second discriminator 422, obtains an output value corresponding to the discrimination result of the source of the input sample, and calculates an error between the obtained output value and a true result (discriminated as resulting from the learning data). The controller 11 uses the error back propagation method to calculate an error in the value of each computational parameter of the second generator 421 by back propagation of the gradient of the error in the calculated output value into the computational parameters of the second generator 421 through the second discriminator 422. The controller 11 updates the value of each computational parameter of the second generator 421 based on the calculated error. The controller 11 adjusts the value of each computational parameter of the second generator 421 to reduce the sum of the calculated errors through the above series of updating processing steps while fixing the computational parameter values of the second discriminator 422. As in, for example, step S1021, the controller 11 may repeatedly adjust the value of each computational parameter of the second generator 421 with the above series of processing steps until the predetermined condition is satisfied.

Thus, the controller 11 can build the second generator 421 trained to generate the pseudo sample 525 that lowers the discrimination performance of the second discriminator 422. After the process of training the second generator 421, the controller 11 advances the processing to step S1123.

### Step S1123

In step S1123, the controller 11 determines whether to repeat the processing in steps S1121 and S1122. As in, for example, step S1023, the criterion to determine whether the processing is to be repeated may be determined as appropriate in each embodiment. When determining that the processing is to be repeated, the controller 11 returns the processing to step S1121 and performs the processing in steps S1121 and S1122 again. When determining that the processing is not to be repeated, the controller 11 ends the process of training the second learning model 42 through machine learning and advances the processing to step S113.

Through the above processing, the controller 11 alternately performs the steps of training the second discriminator 422 and the second generator 421. This alternately improves the performance of each of the second discriminator 422 and the second generator 421. The controller 11 can thus build the second generator 421 trained to be capable of generating a pseudo sample (specifically, a pseudo sample including the second feature of the type corresponding to the input value) fitting the second sample 521 from the second label 522 for each second learning dataset 52.

### Step S113

Referring back to FIG. 11A, in step S113, the controller 11 operates as the storing unit 119 and generates information about the trained second generator 421 built through the machine learning as the second training-result data 122. The controller 11 stores the generated second training-result data 122 into a predetermined storage area. The predetermined storage area may be, for example, the RAM in the controller 11, the storage 12, an external storage, a storage medium, or a combination of these.

After storing the second training-result data 122, the controller 11 ends the series of processing steps for training the second learning model 42 through machine learning. Similarly to the first training-result data 121, the generated second training-result data 122 may be provided to the data generation apparatus 2 at any selected time. The processing in steps S111 to S113 may be repeated regularly or irregularly. The second training-result data 122 held by the data generation apparatus 2 may be updated with the updated or newly generated second training-result data 122 provided to the data generation apparatus 2 with any selected method.

### (C) Training of Third Learning Model 43 through Machine Learning

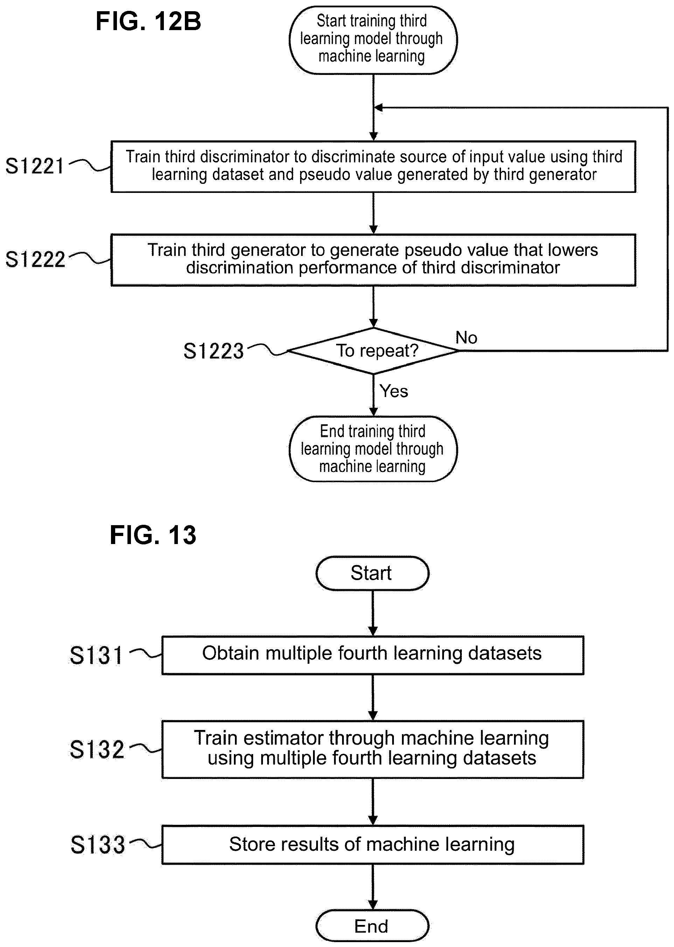

FIG. 12Ais a flowchart of an example procedure of training the third learning model 43 in the learning apparatus 1 according to the present embodiment through machine learning. The procedure described below is a mere example, and the steps in the procedure may be changed as appropriate. In the procedure described below, steps may be eliminated, substituted, or added as appropriate in each embodiment.

### Step S121

In step S121, the controller 11 operates as the third obtainer 113 and obtains multiple third learning datasets 53. Each third learning dataset 53 includes a combination of a sample value 531 of the second feature attribute, a reflection degree 532 indicating the degree to which the second feature is reflected, and the second label 522. Each third learning dataset 53 may also include the first label 512.

The methods for generating and obtaining each third learning dataset 53 may be the same as those for each first learning dataset 51. The second label 522 may be used in common with the second learning dataset 52 or may be newly generated separate from the second learning dataset 52. This also applies to the first label 512. When a sample including the second feature alone is generated from the sample including the first and second features, the information included in the source sample and indicating the type of the first feature may be included together with the corresponding second label 522 in the third learning dataset 53 as the first label 512.

The sample value 531 and the reflection degree 532 may be provided as appropriate. The sample value 531 and the reflection degree 532 may be specified using the sample including the second feature, or specified by an operator. The reflection degree 532 may be specified using the sample value 531 of the second feature attribute in accordance with an index for evaluating the attribute. The index may be provided as appropriate. In the example in FIG. 2A, when the sample value 531 of the attribute is provided in accordance with the defect size, the index may determine the reflection degree 532 in accordance with the defect size. In some embodiments, the reflection degree 532 may be set in a manner associated with a factor including the second feature. In the example shown in FIG. 2A, the reflection degree 532 may be set in a manner associated with the defect level such as the seriousness of the defect or the quality level of a product. In the example shown in FIG. 2B, the reflection degree 532 may be set in a manner associated with the abnormality level such as the seriousness of the defect or the normality of a machine. The reflection degree 532 may be indicated with either the discrete value or the continuous value. To increase the expression of the degree to which the second feature is reflected, the reflection degree 532 is to be indicated with a set of continuous values.

The number of obtained third learning datasets 53 may be selected as appropriate in each embodiment. After the third learning datasets 53 are obtained, the controller 11 advances the processing to step S122.

### Step S122

In step S122, the controller 11 operates as the third trainer 117 and trains the third learning model 43 including the third generator 431 through machine learning using the obtained third learning datasets 53. In training the third learning model 43 through machine learning, the controller 11 trains the third generator 431 for each third learning dataset 53 to be capable of generating a pseudo value of the second feature attribute fitting the sample value 531 from the reflection degree 532 and the second label 522. The training performed in this manner allows the third learning model 43 to have any configuration or to be trained through machine learning with any method selected as appropriate in each embodiment. In the present embodiment, the third learning model 43 also includes the third discriminator 432. Thus, the third learning model 43 may be trained through machine learning with the method described below.

FIG. 12B is a flowchart of an example subroutine procedure of training the third learning model 43 in the present embodiment through machine learning in step S122. The processing in step S122 in the present embodiment includes the processing in steps S1221 to S1223. The procedure described below is a mere example, and each of its steps may be modified in any possible manner. In the procedure described below, steps may be eliminated, substituted, or added as appropriate in each embodiment. As in the first learning model 41, machine learning models included in the third generator 431 and the third discriminator 432 that are to be trained through machine learning may be prepared as appropriate.

### Step S1221

In step S1221, the controller 11 uses the third learning dataset 53 and the pseudo value 535 generated by the third generator 431 to train the third discriminator 432 to discriminate the source of the input value.

Except the replacement of learning data, the processing in step S1221 may be performed in the same manner as in, for example, step S1021. More specifically, the controller 11 provides the noise 530 extracted from a predetermined probability distribution, the reflection degree 532, and the second label 522 to the third generator 431 for each third learning dataset 53 to generate the pseudo value 535 of the second feature attribute. The controller 11 provides the generated pseudo value 535, the corresponding reflection degree 532, and the corresponding second label 522 to the third discriminator 432, obtains an output value corresponding to the discrimination result of the source of the input value, and calculates an error between the obtained output value and the true result. The controller 11 provides each third learning dataset 53 (the sample value 531, the reflection degree 532, and the second label 522) to the third discriminator 432, obtains an output value corresponding to the discrimination result of the source of the input value, and calculates an error between the obtained output value and the true result. The controller 11 uses the error back propagation method to calculate an error in the value of each computational parameter of the third discriminator 432 using the gradient of the error in the calculated output value. The controller 11 updates the value of each computational parameter of the third discriminator 432 based on the calculated error. The controller 11 adjusts the value of each computational parameter of the third discriminator 432 to reduce the sum of the calculated errors through the above series of updating processing steps while fixing the computational parameter values of the third generator 431. As in, for example, step S1021, the controller 11 may repeatedly adjust the value of each computational parameter of the third discriminator 432 with the above series of processing steps until the predetermined condition is satisfied.

Thus, the controller 11 can build the third discriminator 432 trained to discriminate whether the input value is the sample value 531 obtained from any of the third learning datasets 53 or the pseudo value 535 generated by the third generator 431. After the process of training the third discriminator 432, the controller 11 advances the processing to step S1222.

### Step S1222

In step S1222, the controller 11 trains the third generator 431 to generate the pseudo value 535 that lowers the discrimination performance of the third discriminator 432. In other words, the controller 11 trains the third generator 431 to generate the pseudo value 535 discriminated by the third discriminator 432 as being true (specifically, discriminated as resulting from the learning data).

Except the replacement of learning data, the processing in step S1222 may be performed in the same manner as in, for example, step S1022. More specifically, the controller 11 provides the generated pseudo value 535, the corresponding reflection degree 532, and the corresponding second label 522 to the third discriminator 432, obtains an output value corresponding to the discrimination result of the source of the input value, and calculates an error between the obtained output value and a true result (discriminated as resulting from the learning data). The controller 11 uses the error back propagation method to calculate an error in the value of each computational parameter of the third generator 431 by back propagation of the gradient of the error in the calculated output value into the computational parameters of the third generator 431 through the third discriminator 432. The controller 11 updates the value of each computational parameter of the third generator 431 based on the calculated error. The controller 11 adjusts the value of each computational parameter of the third generator 431 to reduce the sum of the calculated errors through the above series of updating processing steps while fixing the computational parameter values of the third discriminator 432. As in, for example, step S1021, the controller 11 may repeatedly adjust the value of each computational parameter of the third generator 431 with the above series of processing steps until the predetermined condition is satisfied.

Thus, the controller 11 can build the third generator 431 trained to generate the pseudo value 535 that lowers the discrimination performance of the third discriminator 432. After the process of training the third generator 431, the controller 11 advances the processing to step S1223.

### Step S1223

In step S1223, the controller 11 determines whether to repeat the processing in steps S1221 and S1222. As in, for example, step S1023, the criterion to determine whether the processing is to be repeated may be determined as appropriate in each embodiment. When determining that the processing is to be repeated, the controller 11 returns the processing to step S1221 and performs the processing in steps S1221 and S1222 again. When determining that the processing is not to be repeated, the controller 11 ends the process of training the third learning model 43 through machine learning and advances the processing to subsequent step S123.

Through the above processing, the controller 11 alternately performs the steps of training the third discriminator 432 and the third generator 431. This alternately improves the performance of each of the third discriminator 432 and the third generator 431. The controller 11 can thus build the third generator 431 trained to be capable of generating pseudo values of the second feature attribute (specifically, pseudo values of the second feature attribute of the type and degree corresponding to the input values) fitting the sample value 531 from the reflection degree 532 and the second label 522 for each third learning dataset 53.

When each third learning dataset 53 further includes the first label 512, the first label 512 may be further added to the input into each of the third generator 431 and the third discriminator 432 in the corresponding training step. Thus, the controller 11 can build the third generator 431 trained to be capable of generating a pseudo value of the second feature attribute fitting the sample value 531 from the reflection degree 532, the first label 512, and the second label 522 for each third learning dataset 53.

### Step S123

Referring back to FIG. 12A, in step S123, the controller 11 operates as the storing unit 119 and generates information about the trained third generator 431 built through the machine learning as the third training-result data 123. The controller 11 stores the generated third training-result data 123 into a predetermined storage area. The predetermined storage area may be, for example, the RAM in the controller 11, the storage 12, an external storage, a storage medium, or a combination of these.

After storing the third training-result data 123, the controller 11 ends the series of processing steps for training the third learning model 43 through machine learning. Similarly to, for example, the first training-result data 121, the generated third training-result data 123 may be provided to the data generation apparatus 2 at any selected time. The processing in steps S121 to S123 may be repeated regularly or irregularly. The third training-result data 123 held by the data generation apparatus 2 may be updated with the updated or newly generated third training-result data 123 provided to the data generation apparatus 2 with any selected method.

### (D) Training of Estimator through Machine Learning

FIG. 13 is a flowchart of an example procedure of training the estimator 44 in the learning apparatus 1 according to the present embodiment through machine learning. The procedure described below is a mere example, and each of its steps may be modified in any possible manner. In the procedure described below, steps may be eliminated, substituted, or added as appropriate in each embodiment.

### Step S131

In step S131, the controller 11 operates as the fourth obtainer 114 and obtains multiple fourth learning datasets 54. Each fourth learning dataset 54 includes a combination of an input sample provided to the trained first generator 411 and a pseudo sample 542 generated by providing the sample to the trained first generator 411. In the present embodiment, the input sample includes the noise 540 and the sample value 541.

Each fourth learning dataset 54 may be generated as appropriate using the trained first generator 411. Similarly to, for example, the first learning dataset 51, each fourth learning dataset 54 may be generated by the learning apparatus 1 or another computer different from the learning apparatus 1. A part of each fourth learning dataset 54 may be generated by the learning apparatus 1, and the other part of the fourth learning dataset 54 may be generated by one or more other computers.

The number of fourth learning datasets 54 obtained may be selected as appropriate in each embodiment. After obtaining the fourth learning datasets 54, the controller 11 advances the processing to subsequent step S132.

### Step S132

In step S132, the controller 11 operates as the fourth trainer 118 and trains the estimator 44 through machine learning using the obtained fourth learning datasets 54. In the machine learning, the controller 11 trains the estimator 44 to estimate, from the pseudo sample 542, the inputs provided to the trained first generator 411 to obtain estimate values fitting the corresponding noise 540 and the corresponding sample value 541 for each fourth learning dataset 54.

For example, the controller 11 first inputs the pseudo sample 542 for each fourth learning dataset 54 into the input layer 441 in the estimator 44, and determines neuronal firing in each of the layers 441 to 443 sequentially from the layer on the input end. Thus, the controller 11 obtains, from the output layer 443, output values corresponding to first and second estimate values of the inputs provided to the trained first generator 411 to generate the pseudo sample 542. The controller 11 calculates an error between each estimate value and the corresponding noise 540 or the corresponding sample value 541. As in, for example, step S1021, a loss function may be used to calculate the error.

The controller 11 uses the error back propagation method to calculate an error in the value of each computational parameter of the estimator 44 using the gradient of the calculated error. The controller 11 updates the value of each computational parameter of the estimator 44 based on the calculated error. As in, for example, step S1021, the value of each computational parameter may be updated by the frequency adjusted based on the learning rate.

The controller 11 adjusts the value of each computational parameter of the estimator 44 through the above series of updating processing steps to reduce the sum of the calculated errors. As in, for example, step S1021, the controller 11 may repeatedly adjust the value of each computational parameter of the estimator 44 with the above series of processing steps until the predetermined condition is satisfied.

Thus, the controller 11 can build the estimator 44 trained to be capable of estimating, from the pseudo sample 542 generated by the trained first generator 411, inputs (the noise 540 and the sample value 541) provided to the trained first generator 411 to generate the pseudo sample 542 for each fourth learning dataset 54. After the process of training the estimator 44 through the machine learning, the controller 11 advances the processing to subsequent step S133.

### Step S133

In step S133, the controller 11 operates as the storing unit 119 and generates information about the trained estimator 44 built through machine learning as the fourth training-result data 124. The controller 11 stores the generated fourth training-result data 124 into a predetermined storage area. The predetermined storage area may be, for example, the RAM in the controller 11, the storage 12, an external storage, a storage medium, or a combination of these.

After storing the fourth training-result data 124, the controller 11 ends the series of processing steps for training the estimator 44 through machine learning. Similarly to the first training-result data 121, the generated fourth training-result data 124 may be provided to the estimation apparatus 3 at any selected time. The processing in steps S131 to S133 may be repeated regularly or irregularly. The fourth training-result data 124 held by the estimation apparatus 3 may be updated with the updated or newly generated fourth training-result data 124 provided to the estimation apparatus 3 with any selected method.

### (E) Generation of Second Sample

FIG. 14 is a flowchart of an example procedure of generating the second sample 521. The procedure described below is a mere example, and the steps in the procedure may be changed as appropriate. In the procedure described below, steps may be eliminated, substituted, or added as appropriate in each embodiment. The processing in steps S141 to S144 may be performed in step S111 described above.

### Step S141

In step S141, the controller 11 obtains multiple third samples 551 each including the first and second features.

The methods for generating and obtaining each third sample 551 may be the same as those for the first sample 511 in each first learning dataset 51. In the example shown in FIG. 2A, an image of the product P1 with a defect is captured with a camera to generate the third sample 551. In the example shown in FIG. 2B, a machine operation sound with abnormality is recorded with a microphone to generate the third sample 551.

The number of obtained third samples 551 may be selected as appropriate in each embodiment. After the third samples 551 are obtained, the controller 11 advances the processing to step S142. The controller 11 may perform the processing in step S142 for each third sample 551 obtained, or may perform the processing in step S142 below for each third sample 551 after the multiple third samples 551 are obtained.

### Step S142

In step S142, the controller 11 provides each third sample 551 to the trained estimator 44 to estimate each input estimate value provided to the first generator 411 trained to generate a pseudo sample corresponding to the third sample 551. More specifically, the controller 11 inputs each third sample 551 into the input layer 441 in the trained estimator 44, and determines neuronal firing in each of the layers 441 to 443 sequentially from the layer on the input end. The controller 11 thus obtains, from the output layer 443, an output value corresponding to an estimate value of an input that is provided to the trained first generator 411 when the trained first generator 411 generates the pseudo sample corresponding to each third sample 551. After obtaining the estimate value, the controller 11 advances the processing to step S143.

### Step S143

In step S143, the controller 11 provides each obtained estimate value to the trained first generator 411 to generate the pseudo sample 555 for the corresponding third sample 551. More specifically, the controller 11 inputs each estimate value into the input layer 4111 in the trained first generator 411, and determines neuronal firing in each of the layers 4111 to 4113 sequentially from the layer on the input end. Thus, the controller 11 obtains, from the output layer 4113, an output value corresponding to the pseudo sample 555 generated from each estimate value. After obtaining the pseudo sample 555, the controller 11 advances the processing to step S144.

### Step S144

In step S144, the controller 11 calculates a difference between the obtained pseudo sample 555 and the corresponding third sample 551. As described above, this process of calculating the difference can appropriately generate a sample usable as the second sample 521, including the second feature without the first feature. Thus, after generation of the second sample 521, the controller 11 ends the series of processing steps for generating the second sample 521. The series of processing steps allow automatic generation of the second sample 521 from the third sample 551 and thus can obtain the second sample 521 at low costs.

The machine learning procedure for the first to third learning models 41 to 43 and the procedure of generating the second sample 521 are examples of a learning method according to an aspect of the present invention. The learning method may not include all the processes described above. The processes in the procedure may be combined as appropriate. The learning method may be referred to as a model generation method for generating each trained machine learning model, or simply a generation method.

### Data Generation Apparatus

FIG. 15 is a flowchart of an example procedure performed by the data generation apparatus 2 according to the present embodiment. The procedure described below is an example of a data generation method according to the present invention. The procedure described below is a mere example, and each of its steps may be modified in any possible manner. In the procedure described below, steps may be eliminated, substituted, or added as appropriate in each embodiment.

### Step S201

In step S201, the controller 21 operates as the input receiver 211 and receives the specified first, second, and third input values 221, 223, and 225. The first, second, and third input values 221, 223, and 225 in a sample generation section respectively correspond to the first label 512, the second label 522, and the reflection degree 532 in a learning section. More specifically, the first, second, and third input values 221, 223, and 225 are specified in accordance with the type of the first feature, the type of the second feature, and the degree to which the second feature is reflected included in the sample to be generated.

FIG. 16 is a schematic diagram of an example screen for receiving specified input values (221, 223, 225) in a situation for generating the new sample 65 of image data shown in FIG. 2A. The screen for receiving specified input values is an example of a user interface for receiving inputs of the input values (221, 223, 225). When a display device such as a display is included in the output device 26, the controller 21 may output the screen for receiving specified input values to the output device 26 in step S201. Thus, the controller 21 may receive the specified input values (221, 223, 225) from the operator through the input device 25.

The screen for receiving specified input values shown in FIG. 16 includes a first entry field 261, a second entry field 262, a slide bar 263, a display area 264, a generation button 265, and a save button 266. The first entry field 261 is used to specify the first input value 221. The first entry field 261 is used to specify the type of the first feature. With the specified information, the controller 21 may obtain the first input value 221. Similarly, the second entry field 262 is used to specify the second input value 223. The second entry field 262 is used to specify the type of the second feature. With the specified information, the controller 21 may obtain the second input value 223.

The slide bar 263 is used to specify the third input value 225. Compared with the first and second input values 221 and 223 used to specify the types of the first and second features, the third input value 225 used to specify the degree to which the second feature is reflected can be changed more frequently. Thus, the user interface in a slide bar is used to specify the third input value 225 to reduce the labor of specifying the input values to generate the new sample 65. In the example shown in FIG. 16, the slide bar 263 allows setting of the degree to which the second feature is reflected within a range from 0 to 10. However, the numerical range of the degree to which the second feature is reflected may be set in a manner different from this example.

The display area 264 displays the new sample 65 generated through the processing (described later) using the specified input values (221, 223, 225). The display area 264 may have any form determined as appropriate for the type of data of the generated sample 65. The generation button 265 is used to start the processing for generating the new sample 65 using the input values (221, 223, 225) specified through the entry fields (261, 262) and the slide bar 263. The controller 21 may advance the processing to subsequent step S202 in response to the operation on the generation button 265. The storage button 266 is used to store the generated sample 65.

The user interface used to receive the inputs of the input values (221, 223, 225) may be different from this and may be defined as appropriate in each embodiment. When, for example, the predetermined type of data is sound data, a reproduction button for reproducing the generated new sample 65 may further be provided. In another example, the input values (221, 223, 225) may be specified with inputs of simple numbers. When receiving the specified input values (221, 223, 225), the controller 21 advances the processing to subsequent step S202.

### Step S202

In step S202, the controller 21 operates as the first generation unit 212 and sets the trained first generator 411 by referring to the first training-result data 121. The controller 21 extracts the noise 220 from a predetermined probability distribution. The controller 21 then inputs the extracted noise 220 and the obtained first input value 221 into the input layer 4111 in the trained first generator 411, and determines neuronal firing in each of the layers 4111 to 4113 sequentially from the layer on the input end. Thus, the controller 21 obtains, from the output layer 4113, an output value corresponding to the first pseudo sample 61 generated from the noise 220 and the first input value 221 and including the first feature of the type specified by the first input value 221. After obtaining the first pseudo sample 61, the controller 21 advances the processing to subsequent step S203.

### Step S203

In step S203, the controller 21 operates as the second generation unit 213 and sets the trained second generator 421 by referring to the second training-result data 122. The controller 21 extracts the noise 222 from a predetermined probability distribution. The controller 21 then inputs the extracted noise 222 and the obtained second input value 223 into the input layer 4211 in the trained second generator 421, and determines neuronal firing in each of the layers 4211 to 4213 sequentially from the layer on the input end. The controller 21 thus obtains, from the output layer 4213, an output value corresponding to the second pseudo sample 62 generated from the noise 222 and the second input value 223 and including the second feature of the type specified by the second input value 223. After obtaining the second pseudo sample 62, the controller 21 advances the processing to subsequent step S204.

### Step S204

In step S204, the controller 21 operates as the data synthesizer 214 and sets the trained third generator 431 by referring to the third training-result data 123. The controller 21 extracts the noise 224 from a predetermined probability distribution. The controller 21 then inputs the extracted noise 224, the obtained second input value 223, and the obtained third input value 225 into the input layer 4311 in the trained third generator 431, and determines neuronal firing in each of the layers 4311 to 4313 sequentially from the layer on the input end. The controller 21 thus obtains, from the output layer 4313, an output value corresponding to the pseudo value 63 of the second feature attribute of the type and degree specified by the second input value 223 and the third input value 225 and generated from the noise 224, the second input value 223, and the third input value 225.

When the third generator 431 is trained through machine learning by further using the first label 512, the controller 21 further inputs the obtained first input value 221 into the input layer 4311 in the trained third generator 431 and causes the trained third generator 431 to perform the computational operation described above. Thus, the controller 21 can obtain, in the first feature specified by the first input value 221, the pseudo value 63 used to reflect the second feature with the type and degree specified by the second input value 223 and the third input value 225.

After obtaining the pseudo value 63, the controller 21 advances the processing to subsequent step S205. The processing in steps S202 to S204 may be performed in any order different from this. The noise 220, the noise 222, and the noise 224 may be obtained each as common noise or separate noise. When step S204 is to be performed after step S202, the learning apparatus 1 may train the estimator 44 through machine learning between steps S202 and S204. In this case, the first pseudo sample 61 generated in step S202 may be used as the pseudo sample 542. In some embodiments, step S131 may include step S201 to use the generated pseudo sample 542 as the first pseudo sample 61 in step S202.

### Step S205

In step S205, the controller 21 operates as the data synthesizer 214, converts the second pseudo sample 62 to allow the second feature attribute value included in the second pseudo sample 62 to fit the generated pseudo value 63, and synthesizes the second pseudo sample 62 with the first pseudo sample 61. Specific processes in the conversion and synthesis may be determined as appropriate for the type of data. When the predetermined type of data is image data, the conversion may be scaling, translation, rotation, or a combination of these. When, for example, a predetermined type of data is signal data, in an example useful for understanding the invention but not claimed, the conversion may be an increase or a decrease in amplitude, a change in frequency, an increase or a decrease in appearance frequency, or a combination of these. The synthesis may be, for example, convolutional addition.

In another example, the synthesis may be performed on a sample including the first feature, a sample including the second feature, and an input second feature attribute value corresponding to the reflection degree using a machine learning model trained to be capable of outputting a result obtained by synthesizing both samples fitted to the input attribute value. The trained machine learning model may be built through machine learning using multiple learning datasets each including a combination of training data (input data) and true data (supervisory signal). The training data includes, for example, a first training sample including the first feature, a second training sample including the second feature, and a sample value of the second feature attribute corresponding to the reflection degree. The true data includes, for example, a sample of the corresponding synthesis result.

Through this synthesis, the controller 21 generates the new sample 65 of a predetermined type of data. After generation of the new sample 65, the controller 21 ends the procedure of the present operation example. After the generation process, the controller 21 may display the generated new sample 65 in the display area 264 of the screen for receiving specified input values.

In response to a change of the third input value 225 with an operation on the slide bar 263, the controller 21 may perform the above series of processing steps to generate the new sample 65 and display the generated new sample 65 in the display area 264. Thus, the operator can check the change of the state where the second feature appears in the generated sample 65 and corresponding to the adjustment of the degree to which the second feature is reflected in response to the operation on the slide bar 263.

The controller 21 may store the generated new sample 65 into a predetermined storage area in response to the operation on the storage button 266. The predetermined storage area may be, for example, the RAM in the controller 21, the storage 22, an external storage, a storage medium, or a combination of these. The generated new sample 65 may be provided to the estimation apparatus 3 at any selected time.

The controller 21 may extract multiple types of noise (220, 222, 224) for each input value (221, 223, 225). Thus, the controller 21 may generate multiple new samples 65 using each input value (221, 223, 225). The generated new samples 65 may be displayed in the display area 264 to receive selection of the sample 65 to be stored from these samples 65. In this case, the controller 21 may store, in a predetermined storage area, one or more samples 65 selected from the generated samples 65 in response to the operation on the storage button 266.

### Estimation Apparatus

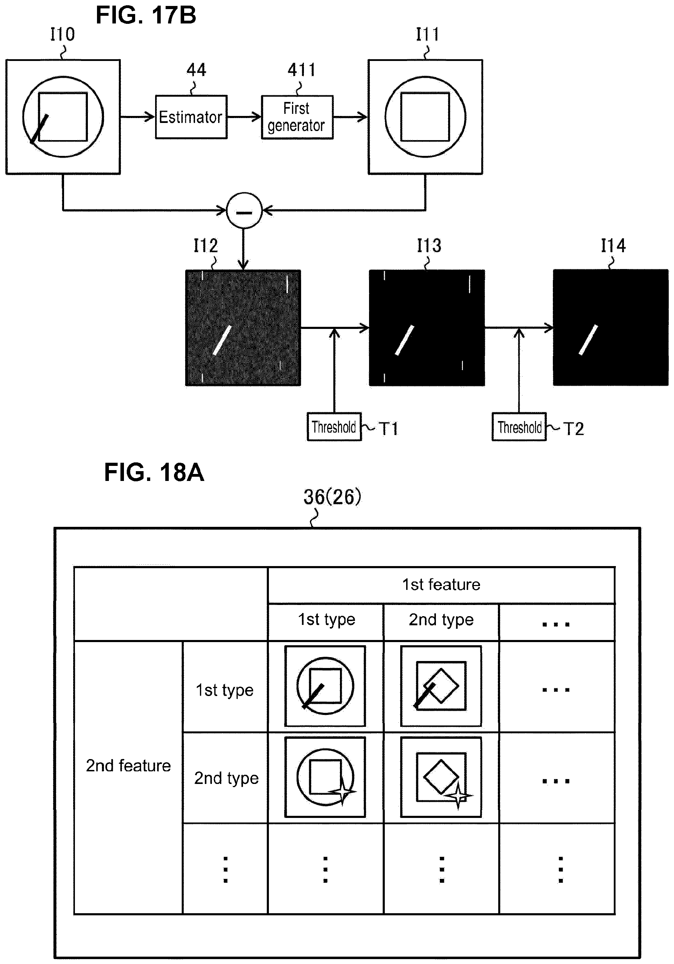

FIG. 17Ais a flowchart of an example procedure performed by the estimation apparatus 3 according to the present embodiment. The procedure described below is an example of an estimation method. The procedure described below is a mere example, and each of its steps may be modified in any possible manner. In the procedure described below, steps may be eliminated, substituted, or added as appropriate in each embodiment.

### Step S301

In step S301, the controller 31 operates as the obtainer 311 and obtains a target sample 325. The target sample 325 may be obtained with any method determined as appropriate for the type of data. When the target sample 325 is sensing data, the target sample 325 can be obtained by observing an estimation target for the second feature with a sensor. In the example in FIG. 2A, an image of an inspection target product is captured with a camera to obtain the target sample 325. In the example in FIG. 2B, a machine operation sound of an inspection target is recorded with a microphone to obtain the target sample 325. The controller 31 may directly or indirectly obtain the target sample 325 using a sensor. After obtaining the target sample 325, the controller 31 advances the processing to subsequent step S302.

### Step S302

In step S302, the controller 31 operates as the estimation unit 312 and estimates the second feature included in the target sample 325 by analyzing the target sample 325 using the data group 320. In the present embodiment, the controller 31 uses the trained first generator 411 and the estimator 44 to perform the estimation process on the target sample 325 to detect a second component.

More specifically, the controller 31 refers to the pieces of first and fourth training-result data (121, 124) to set the trained first generator 411 and the trained estimator 44. The controller 31 inputs the target sample 325 into the input layer 441 in the trained estimator 44, and determines neuronal firing in each of the layers 441 to 443 sequentially from the layer on the input end. The controller 31 thus obtains, from the output layer 443, an output value corresponding to an estimate value of an input that is provided to the trained first generator 411 when the trained first generator 411 generates the pseudo sample corresponding to the target sample 325. The controller 31 then inputs each obtained estimate value into the input layer 4111 in the trained first generator 411, and determines neuronal firing in each of the layers 4111 to 4113 sequentially from the layer on the input end. The controller 31 thus obtains, from the output layer 4113, an output value corresponding to the pseudo sample 326 generated from each estimate value.

The controller 31 then subtracts the pseudo sample 326 from the target sample 325 to generate the subtracted sample 327. Before the subtraction, the target sample 325 and the pseudo sample 326 may undergo preprocessing. When, for example, the target sample 325 and the pseudo sample 326 are time series data, and a second component is to be detected in the frequency domain, the target sample 325 and the pseudo sample 326 may undergo preprocessing of transforming the time series data into frequency data such as Fourier transformation. The controller 31 detects a second component using the generated subtracted sample 327.

With reference to FIG. 17B, an example of detecting a second component using the subtracted sample 327 will now be described. FIG. 17B is a schematic diagram of an example process of detecting the second component (specifically, defect) in the situation shown in FIG. 2A. With the above processing, the controller 31 generates a pseudo sample I11 corresponding to a target sample I10 using the trained first generator 411 and the estimator 44. The target sample I10 is an example of the target sample 325, and the pseudo sample I11 is an example of the pseudo sample 326.

The controller 31 calculates the difference between the target sample I10 and the pseudo sample I11 to generate a subtracted sample 112. The subtracted sample I12 is an example of the subtracted sample 327. As the difference between the target sample I10 and the pseudo sample I11 is greater, the value of the subtracted sample I12 is greater. As the difference between the target sample I10 and the pseudo sample I11 is smaller, the value of the subtracted sample I12 is smaller. A method for expressing the difference may be selected as appropriate for the type of data. In FIG. 17B, for example, a predetermined type of data is image data in which a pixel with a greater difference is closer to white and a pixel with a smaller difference is closer to black.

As described above, the first feature is typically reproduced in the pseudo sample I11, whereas the second feature is not reproduced. In the subtracted sample 112, the target sample I10 has a greater difference in a portion including the second component (including the second feature). The difference in the subtracted sample I12 may not result from the second component in the target sample I10. Other causes for the difference include noise during generation of the pseudo sample I11. However, the difference caused by the noise has a lower level than the difference caused by the inclusion of the second component. Thus, such differences can be differentiated based on the value of the subtracted sample 112. The controller 31 thus deletes the difference caused by the noise using a threshold T1. In the example in FIG. 17B, the controller 31 binarizes each pixel of the subtracted sample I12 using the threshold T1. The controller 31 can thus obtain the sample I13 excluding the noise.

The sample I13 can mainly show a difference caused by the second component and a difference resulting from other causes (e.g., training shortage of at least one of the first generator 411 or the estimator 44). Among these differences, the difference caused by the second component appears in a state corresponding to the second feature attribute, such as size, (temporal or spatial) position, brightness, amplitude, or (temporal or spatial) frequency. In the example shown in FIG. 2A, the defect may have an attribute about the shape, such as the area, width, height, perimeter, aspect ratio, or roundness. When a product in the target sample I10 has a defect, an area in which white pixels gather and having the attribute about the shape corresponding to the shape appears in a location corresponding to the sample I13. Thus, the second component can be detected by setting the threshold T2 to the second feature attribute.

In the example in FIG. 17B, which is a processing example, the controller 31 identifies the area in the sample I13 including the continuous white pixels as one area, and determines whether each white pixel area satisfies the threshold T2. The controller 31 deletes the area not satisfying the threshold T2 while leaving the area satisfying the threshold T2. Thus, the controller 31 can obtain the detection sample 114, which is the sample I13 excluding the value not satisfying the second feature attribute.

The controller 31 detects the second component based on the obtained detection sample I14. In the example shown in FIG. 17B, the controller 31 determines that the product in the target sample I10 has a defect when the detection sample I14 has a white pixel area. In contrast, the controller 31 determines that the product in the target sample I10 has no defect when the detection sample I14 has no white pixel area. After detection of the second component, the controller 31 advances the processing to subsequent step S303.

The thresholds (T1, T2) are examples of a parameter in the estimation process. The parameters in the estimation process may be set as appropriate for, for example, the details of estimation or the type of data. The predetermined type of data is image data, and an object in an image is to be detected through an estimation process, the thresholds (T1, T2) may be used as examples of parameters in the estimation process other than the above situation for defect detection. In another example, useful for understanding the invention but not claimed, when the predetermined type of data is signal data and a target signal included in a signal is to be detected through an estimation process, the difference in spectrum intensity may be used as a parameter in the estimation process.

The controller 31 may operate as the setting unit 314 at any selected time (e.g., before starting the processing in step S301) and set parameter values based on the samples 321 included in the data group 320. More specifically, in the present embodiment, analyzing the target sample 325 using the data group 320 corresponds to setting the parameter values that allow detection of the second component based on the samples 321 included in the data group 320. In the example shown in FIG. 17B, the controller 31 may set each threshold (T1, T2) as appropriate to detect a defect shown in the sample 321.

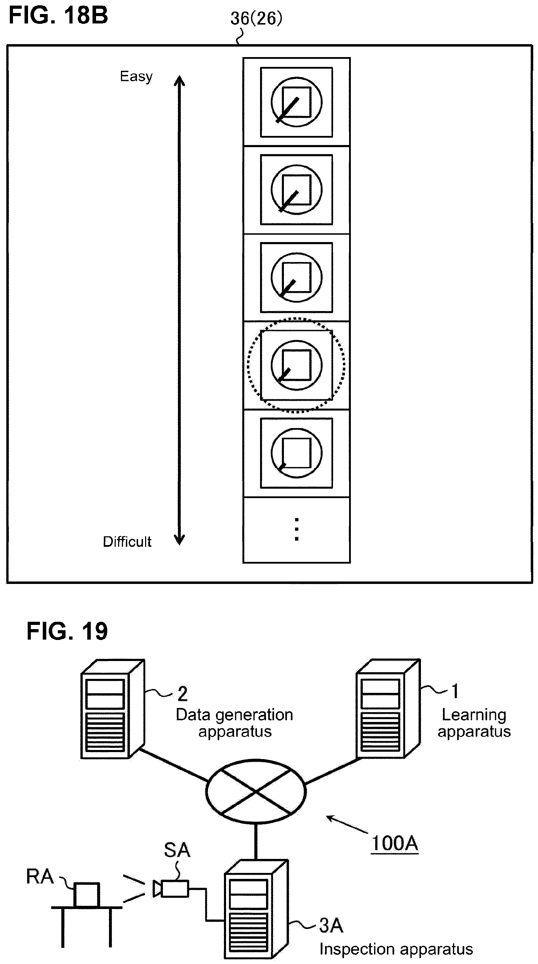

With reference to FIGs. 18A and 18B, an example method for setting parameters in the estimation process will now be described. FIGs. 18A and 18B are schematic diagrams of an example output screen to display the samples 321 included in the data group 320 in the situation shown in FIG. 2A. When the output device 36 includes a display device such as a display, the controller 31 may output the output screen to the output device 36 in response to the operation performed by the operator.

The output screen in FIG. 18A displays the samples 321 included in the data group 320 in a table format by each type of feature. The output screen allows the operator to view the combinations of (in the example in FIG. 2A, the combinations of defect and product types) the types of first and second features for each of which the sample 321 is obtained.

The data generation apparatus 2 may specify the first and second input values 221 and 223 corresponding to the types of the first feature and the second feature for which no sample 321 is obtained to generate the new sample 65 including the combination. In some embodiments, the controller 31 may receive, through the output screen shown in FIG. 18A, for example, a specified combination of the types of the first feature and the second feature for which no sample 321 is obtained. The controller 31 may cause the data generation apparatus 2 to generate the new sample 65 including the combination by notifying the specified set to the data generation apparatus 2. Thus, the new sample 65 including the combination may be generated. The generated new sample 65 may be provided to the estimation apparatus 3 with any method and added into the data group 320. Adding the new sample 65 can widen the range of the samples 321 included in the data group 320.

The output screen in FIG. 18B displays the samples 321 each including the first feature and the second feature of the target type arranged in accordance with the second feature attribute value. When the parameter values are set to allow detection of the second components with smaller degrees, the second component may be erroneously detected from the target sample 325 not actually including the second component. In the example in FIG. 17B, the defect with a larger size is detected more easily, and the defect with a smaller size is detected less easily. When the thresholds (T1, T2) are set to allow detection of a small defect, the difference resulting from other causes may be mistaken for a defect. To reduce the likelihood of such misdetection, the controller 31 may receive, through the output screen, the specified sample 321 with the detection limit for the second component.

The controller 31 may set the parameter values to detect the second component included in the sample 321 specified as the detection limit. In the example shown in FIG. 17B, the controller 31 may set the thresholds (T1, T2) to detect a defect of the sample 321 specified as the detection limit. The parameter values may be set with any method as appropriate in each embodiment. For example, multiple possible parameter values may be prepared as appropriate. The controller 31 may perform detection using the possible parameter values to specify a possible parameter value from which the second component included in the sample 321 specified as the detection limit is highly detectable and to select the specified possible parameter value as a parameter value.

In the data generation apparatus 2, the new sample 65 that can be set as the detection limit may be generated by providing the third input value 225 in accordance with the detection limit for the second component. In some embodiments, the controller 31 may appropriately receive the specified degree of the second feature intended as the detection limit through, for example, the output screen in FIG. 18B. The controller 31 may cause the data generation apparatus 2 to generate the new sample 65 by notifying the type of the first feature, the type of the second feature, and the degree of the specified second feature. Thus, the new sample 65 that can be set as the detection limit may be generated. The generated new sample 65 may be provided to the estimation apparatus 3 with any method and may be added into the data group 320. Adding the new sample 65 widens the range of the degree of the second feature that appears in the samples 321 included in the data group 320, and setting the appropriate detection limit can improve the accuracy of detecting the second component.

The data generation apparatus 2 may perform the series of processing steps for setting the parameter values. In this case, the data generation apparatus 2 may perform the above series of processing steps for generating the new sample 65 while outputting the output screen shown in FIGs. 18A and 18B to the output device 26. When the data generation apparatus 2 generates the new sample 65, the samples 321 included in the data group 320 may be browsable through each output screen. In this case, each output screen may be referred to for specifying the input values (221, 223, 225).

### Step S303

Referring back to FIG. 17A, in step S303, the controller 11 operates as the output unit 313 and outputs information about the estimation result (result of detecting the second component in the present embodiment).

The destination and the details of the output information may be determined as appropriate in each embodiment. For example, the controller 31 may output the result of the predetermined estimation performed on the target sample 325 in S302 directly to the output device 36. For example, the controller 31 may perform information processing based on the predetermined estimation result. The controller 31 may then output the processed information as information about the estimation result. The processed information being output may include, for example, a specific message being output in accordance with the estimation result, and the operation of a target device being controlled in accordance with the estimation result. The information may be output to, for example, the output device 36, an output device of another computer, or a controllable apparatus.

After output of the information about the estimation result, the controller 31 ends the procedure of the present operation example. During a predetermined period, the controller 31 may continuously repeat the series of information processing in steps S301 to S303. The processing may be repeated in any selected time. Thus, the estimation apparatus 3 may continuously perform predetermined estimation.

### Features

As described above, the learning apparatus 1 according to the present embodiment can build, with the processing in steps S101 to S103, the first generator 411 trained to be capable of generating a pseudo sample including the first feature of the type specified by an input value. With the processing in steps S111 to S113, the learning apparatus 1 according to the present embodiment can also build the second generator 421 trained to be capable of generating a pseudo sample including the second feature of the type specified by an input value. The data generation apparatus 2 according to the present embodiment can control the types of the first feature and the second feature included in the generated new sample 65 based on each input value (221, 223) provided to the corresponding trained generators (411, 421). In other words, the data generation apparatus 2 can generate the new sample 65 including combinations of different types of the first feature and the second feature as appropriate. When, for example, the data group 320 includes a combination for which no sample 321 or an insufficient number of samples 321 are obtained, the data generation apparatus 2 can generate the new sample 65 including the combination. Further, a large portion of the processing in steps S201 to S205 can be automated. In the present embodiment, samples including various sets can be automatically generated as appropriate. The structure according to the present embodiment can reduce the costs for collecting various samples of a predetermined type of data including at least two features.

The estimation apparatus 3 according to the present embodiment can widen the range of the combinations of the first feature and the second feature appearing in the samples 321 included in the data group 320 by adding the generated new sample 65 into the data group 320. More specifically, the data group 320 can receive more samples 321 for the combinations for which no sample or an insufficient number of samples are obtained. Thus, the generated new samples 65 are reflected in the estimation process performed by the estimation apparatus 3 to improve the accuracy of the estimating process on the second feature.

With the processing in steps S121 to S123, the learning apparatus 1 according to the present embodiment can also build the third generator 431 trained to be capable of generating a pseudo value of the second feature attribute of the type and degree specified by the input value. The data generation apparatus 2 according to the present embodiment can control the second feature attribute value included in the generated new sample 65 based on the input values (223, 225) provided to the trained third generator 431. More specifically, using the trained third generator 431 in addition to the trained first and second generators 411 and 421, the new sample 65 including the second feature of an intended attribute value can be generated as appropriate. Thus, various samples with a predetermined type of data including at least two features can be generated in the present embodiment.

Providing the third input value 225 in accordance with the detection limit for the second component can generate various samples corresponding to the detection limit. In the processing in steps S121 to S123, when the third generator 431 is trained through machine learning by further using the first label 512, the built trained third generator 431 can further be capable of generating a pseudo value of the second feature attribute corresponding to the type of the first feature. Thus, using the trained third generator 431, the data generation apparatus 2 according to the present embodiment can generate the new sample 65 including the second feature having an attribute value fitting the type of the first feature.

### 4. Modifications

The embodiment of the present invention described in detail above is a mere example of the present invention in all respects. The embodiment may be variously modified or altered without departing from the scope of the present invention. For example, the embodiment may be modified in the forms described below. The same components as those in the above embodiment are hereafter given the same reference numerals, and the operations that are the same as those in the above embodiment will not be described. The modifications described below may be combined as appropriate.

4.1
The learning apparatus 1, the data generation apparatus 2, and the estimation apparatus 3 according to the embodiment may be used in any situations for collecting various samples of a predetermined type of data including at least two features. For example, the above embodiment is usable in a situation for collecting various samples of sensing data obtained with a sensor observing a target object. Modifications for some situations will be described below.

### (A) Situation of Visual Inspection

FIG. 19 is a schematic diagram of an inspection system 100A according to a first modification used in one situation. In the present modification, the structure in the above embodiment is used in visual inspection of a product using image data showing the product in FIG. 2A. The inspection system 100A according to the present modification includes the learning apparatus 1, the data generation apparatus 2, and an inspection apparatus 3A. In the same manner as in the above embodiment, the learning apparatus 1, the data generation apparatus 2, and the inspection apparatus 3A may be connected to one another with a network.

The predetermined type of data used in the present modification is image data of a product RA. The image data is obtained by capturing an image of the product RA with a camera SA. The first feature includes the background including the product RA, and the second feature includes defects of the product RA. The types of the product RA and the defects may be selected as appropriate in each embodiment. As described above, the product RA may include, for example, any products transported on a production line, such as electronic devices, electronic components, automotive parts, chemicals, and food products. The defects may be, for example, a scratch, a stain, a crack, a dent, a burr, uneven color, and foreign matter contamination. The inspection system 100A according to the present modification may have the same structure as the estimation system 100 according to the above embodiment except these limitations.

### Learning Apparatus

In the present modification, the first sample 511 in the first learning dataset 51 is a sample of image data of the product RA, and the first label 512 indicates the type of product RA. With the processing in steps S101 to S103, the learning apparatus 1 can build the first generator 411 trained to be capable of generating a pseudo sample showing the background including the product RA of the type specified by an input value.

In the present modification, the second sample 521 in the second learning dataset 52 is a sample of image data showing a defect of the product RA, and the second label 522 indicates the defect type. With the processing in steps 5111 to S113, the learning apparatus 1 can build the second generator 421 trained to be capable of generating a pseudo sample showing a defect of the type specified by an input value.

In the present modification, the sample value 531 in the third learning dataset 53 may indicate the degree of the attribute of the defect. The attribute of the defect may include the shape, such as the area, width, height, perimeter, aspect ratio, or roundness. The reflection degree 532 may indicate the degree to which the defect is reflected. The reflection degree 532 may be set in a manner associated with the defect level such as the seriousness of the defect or the quality level of a product. With the processing in steps S121 to S123, the learning apparatus 1 can build the third generator 431 trained to be capable of generating a pseudo value of the attribute of the defect of the type and degree specified by an input value.

In the present modification, the learning apparatus 1 can build, with the processing in steps S131 to S133, the estimator 44 trained to be capable of estimating, from the pseudo sample 542 generated by the trained first generator 411, an input provided to the trained first generator 411 to generate the pseudo sample 542. In the present modification, the learning apparatus 1 can generate, with the processing in steps S141 to S144, the second sample 521 using the trained first generator 411 and the estimator 44 from the product RA and the third sample 551 showing a defect.

### Data Generation Apparatus

In the present modification, the first, second, and third input values 221, 223, and 225 may be specified in accordance with the type of product RAin a sample to be generated, the defect type, and the degree to which the defect is reflected. The data generation apparatus 2 performs the processing in steps S201 to S205 using each trained generator (411, 421, 431) to generate the new sample 65 showing the product RA and the defect of the specified type while controlling the degree to which the defect is reflected.

### Inspection Apparatus

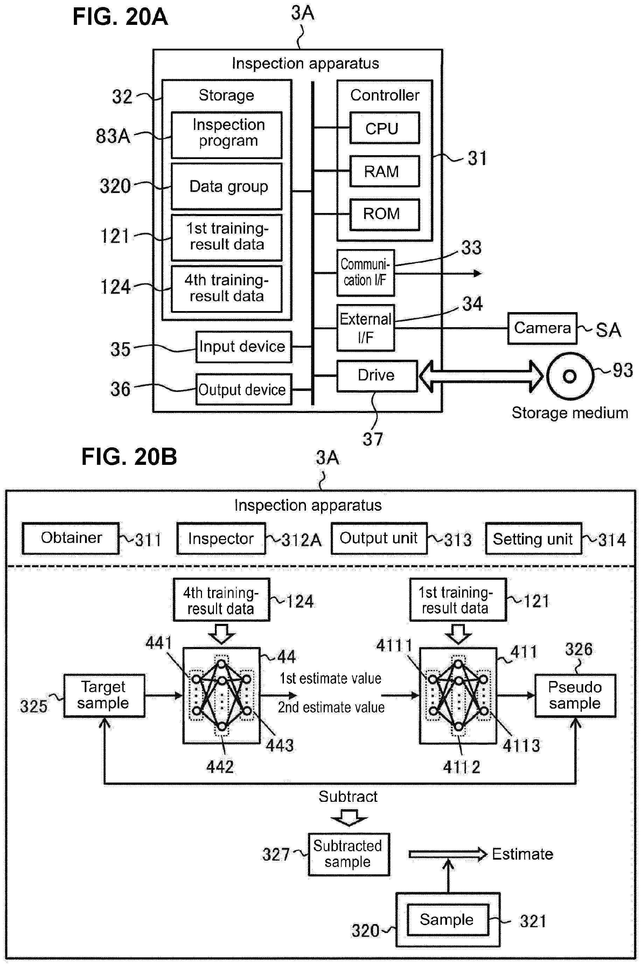

FIG. 20Ais a schematic diagram of the inspection apparatus 3A according to the present modification showing its example hardware configuration. As shown in FIG. 20A, similarly to the estimation apparatus 3, the inspection apparatus 3Ain the present modification may be a computer including the controller 31, the storage 32, the communication interface 33, the external interface 34, the input device 35, the output device 36, and the drive 37 that are electrically connected to one another.

In the present modification, the storage 32 stores various items of information including an inspection program 83A. The inspection program 83A corresponds to the estimation program 83 in the embodiment. In the present modification, the inspection apparatus 3A is connected to the camera SA with the external interface 34. The camera SA may be, for example, a common RGB camera, a depth camera, or an infrared camera. The camera SA may be located at a position appropriate for capturing images of the product RA. For example, the camera SA may be located near a conveyor that conveys the product RA.

The inspection apparatus 3A may have the hardware configuration different from the structure in the example. For the specific hardware configuration of the inspection apparatus 3A, components may be eliminated, substituted, or added as appropriate in each embodiment. The inspection apparatus 3A may be an information processing apparatus dedicated to an intended service, or may be a general-purpose server, a general-purpose PC, or a PLC.

FIG. 20B is a schematic diagram of the inspection apparatus 3A according to the present modification showing its example software configuration. In the same manner as in the above embodiment, the software configuration of the inspection apparatus 3Ais implemented by the controller 31 executing the inspection program 83A. The inspection apparatus 3A has the same software configuration as the estimation apparatus 3, except that usable data is limited to that as described above. An inspector 312A corresponds to the estimation unit 312. The inspection apparatus 3A thus performs a series of processing steps for visual inspection in the same manner as the estimation apparatus 3 performing the estimation process.

More specifically, in step S301, the controller 31 obtains, from the camera SA, the target sample 325 of the product RA to undergo inspection. In step S302, the controller 31 operates as the inspector 312Aand analyzes the target sample 325 using the data group 320 to determine whether the inspection target product RA has a defect. Each sample 321 included in the data group 320 includes the product RA and a defect. The sample 321 corresponding to the detection limit may be selected for each type of detected defect. The thresholds (T1, T2) of the detection parameters may be set based on the sample 321 selected as the detection limit. In this manner, the controller 31 estimates the state of the product RA.

In step S303, the controller 31 outputs information about the estimation result of the state of the product RA. For example, the controller 31 may output the estimation result of the state of the product RA directly to the output device 36. For example, the controller 31 may output a warning indicating any defect included in the product RAto the output device 36. When, for example, the inspection apparatus 3A is connected to a conveyor that conveys the product RA, the controller 31 may control the conveyor to separately convey defect-free products RA and defective products RA in different lines based on the estimation result of the state of each product RA.

### Features

The data generation apparatus 2 according to the present modification can automatically generate the new samples 65 showing an intended combination of the product RA and a defect as appropriate. The data generation apparatus 2 can thus reduce the costs for collecting various samples including various combinations of the product RA and the defect. Adding the generated new samples 65 into the data group 320 can reduce or eliminate combinations of the product RA and a defect for which no sample 321 is obtained. Thus, the inspection apparatus 3Acan improve the accuracy of visual inspection.

### Other Embodiments

In the above modification, each defect of the product RAis an example of the foreground. In other words, the inspection process in the modification is an example process for detecting an intended foreground from the sample of image data including the background and foreground. More specifically, the predetermined type of data to be used may be image data including the background and foreground. The first feature may include the background, and the second feature may include the foreground. Instead of the examples of the product RA and the defect, the type of background and foreground may be selected as appropriate in each embodiment.

### (A-1) Situation of Diagnostic Imaging

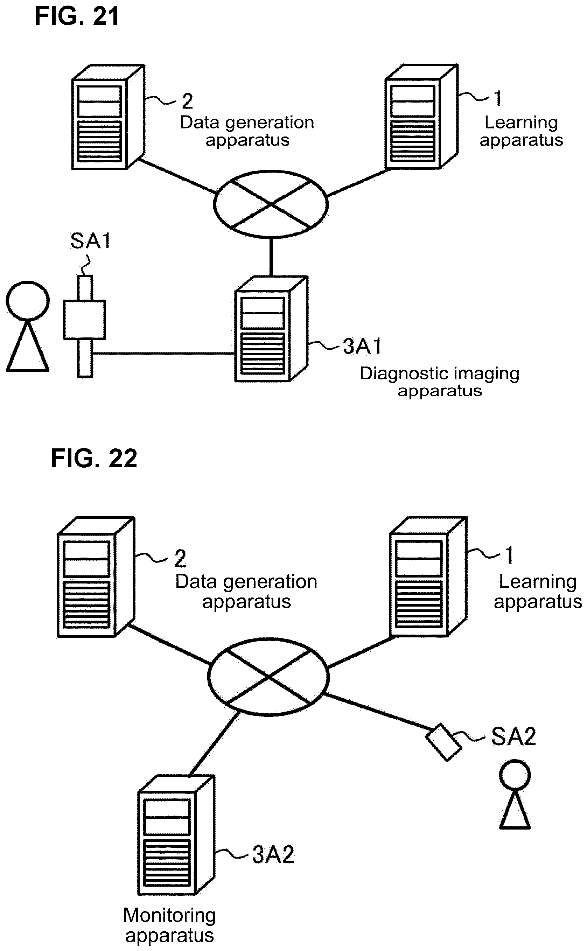

FIG. 21 is a schematic diagram of a system according to an embodiment not claimed, but useful for understanding of the present invention used in another situation in which the foreground is detected from image data. The diagnostic system shown in FIG. 21 includes the learning apparatus 1, the data generation apparatus 2, and a diagnostic imaging apparatus 3A1. The diagnostic imaging apparatus 3A1 corresponds to the inspection apparatus 3A. The diagnostic imaging apparatus 3A1 may have the same structure as the inspection apparatus 3A. A predetermined type of data used in the example in FIG. 21 may be medical image data (hereafter, a medical image) including an organ. Examples of the organ include the digestive system, the circulatory system, the respiratory system, the urinary system, the reproductive system, the endocrine system, the sensory system, the nervous system, and the locomotor system (bones, joints, ligaments, and muscles).

A medical inspection apparatus SA1 may be used to obtain a medical image. The medical inspection apparatus SA1 is an example of a sensor. The medical inspection apparatus SA1 may be, for example, an X-ray apparatus, a CT scanner, or an MRI scanner. Thus, the obtained medical image may be, for example, an X-ray image, a CT image, or an MRI image. In the example in FIG. 21, the diagnostic imaging apparatus 3A1 is connected to the medical inspection apparatus SA1 and thus can obtain the target sample 325 of the medical image.

The first feature may include an organ, and the second feature may include a pathological change (e.g., a shadow caused by a disease). An image of an organ is an example of the background, and an image of a pathological change is an example of the foreground. The attribute of the pathological change may include the shape of a shadow shown in a medical image. The reflection degree 532 may be set, for example, in accordance with the state of a disease such as the severity of the disease or a progression index. The diagnostic imaging apparatus 3A1 can detect a pathological change from the target sample 325 of a medical image in the same manner as the inspection apparatus 3A. When detecting a pathological change, the diagnostic imaging apparatus 3A1 may output the diagnosis including the type or position of the pathological change in step S303.

### (A-2) Situation of Monitoring Road Conditions

FIG. 22 is a schematic diagram of a system according to an embodiment not claimed, but useful for understanding of the present invention used in another situation in which the foreground is detected from image data. A monitoring system shown in FIG. 22 includes the learning apparatus 1, the data generation apparatus 2, and a monitoring apparatus 3A2. The monitoring apparatus 3A2 corresponds to the inspection apparatus 3A. The monitoring apparatus 3A2 may have the same structure as the inspection apparatus 3A. A predetermined type of data used in the example in FIG. 22 may be image data (hereafter, a monitoring image) including a road to be monitored.

To obtain monitoring images, a camera SA2 located to capture images of a target road may be used. The monitoring apparatus 3A2 may be connected to the camera SA2 with, for example, a network as appropriate. Thus, the monitoring apparatus 3A2 can obtain a target sample 325 of a monitoring image.

The first feature may include the background such as a road or a building, and the second feature may include the road condition. The road condition may be, for example, the congestion level of movable bodies or the crime possibility. The movable bodies may be, for example, pedestrians or vehicles. The crime possibility may be set high for an image of a dark road with few pedestrians and set low for an image of a bright road with many pedestrians. The attribute of the road conditions may be, for example, the attribute of the movable bodies or the environmental attributes. The attribute of the movable bodies may be, for example, the position, the number, or speed. When the movable body is a human, the attribute of the movable body may be, for example, a gender or a physical feature. The environmental attribute may be, for example, a brightness factor, such as time, a season, or existence of streetlights. An image of the road conditions is an example of the foreground. The reflection degree 532 may be set in accordance with the road conditions. In this case, the monitoring apparatus 3A2 can estimate the road conditions (e.g., the congestion level of the movable bodies or a crime possibility) of a target object from the target sample 325 of the monitoring image in the same manner as the inspection apparatus 3A.

The data generation apparatus 2 in each of the above embodiment and modifications can automatically generate the new sample 65 including any combination of the background and the foreground as appropriate. In the situation of the above diagnostic imaging, various medical images showing various disease states can be obtained based on images of organs and pathological changes obtained from many people. In the situation of monitoring the road conditions, various monitoring images showing various conditions of the road can be obtained based on images under different conditions (such as location and time). Thus, the data generation apparatus 2 can reduce the costs for collecting various samples including various combinations of the background and the foreground. Adding the generated new samples 65 into the data group 320 reduces or eliminates combinations of the background and the foreground for which no sample 321 is obtained. The data generation apparatus 2 can thus improve the accuracy of detecting the foreground.

### (B) Situation of Monitoring Driving State

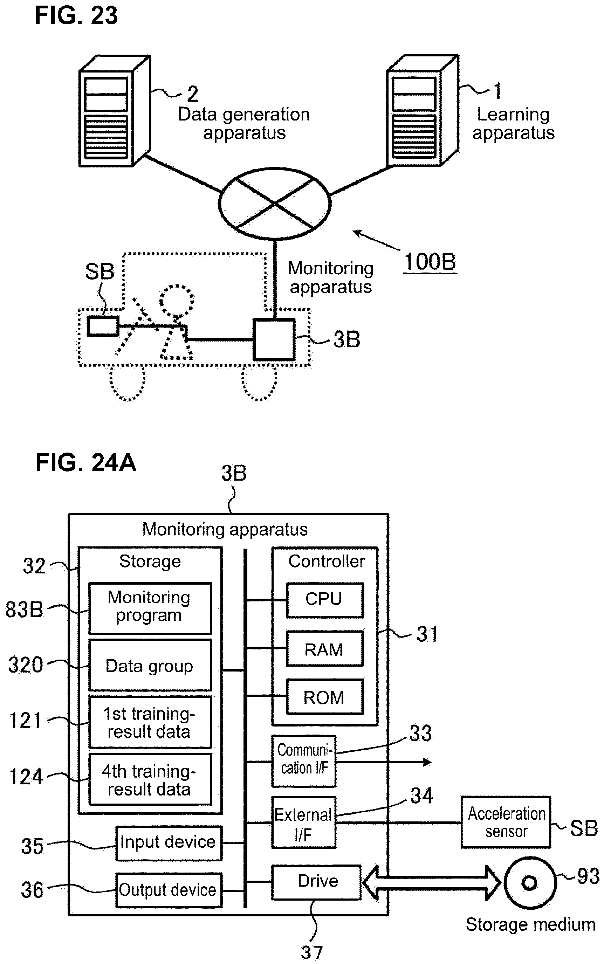

FIG. 23 is a schematic diagram of a monitoring system 100B according to a second modification used in one situation. In the present modification, the structure in the above embodiment not claimed, but useful for understanding the invention, is used in the situation for monitoring the state of a driver driving a vehicle using sensing data obtained from an in-vehicle sensor on the vehicle. The monitoring system 100B according to the present modification includes the learning apparatus 1, the data generation apparatus 2, and a monitoring apparatus 3B. In the same manner as in the above embodiment, the learning apparatus 1, the data generation apparatus 2, and the monitoring apparatus 3B may be connected to one another with a network.

A predetermined type of data used in the present modification is vehicle acceleration data (sensing data) obtained with an acceleration sensor SB. The first feature includes a change in acceleration during normal driving, and the second feature includes a change in acceleration resulting from an unexpected event such as sudden appearance of someone into a street. Except for these limitations, the monitoring system 100B according to the present modification may have the same structure as the estimation system 100 according to the embodiment.

### Learning Apparatus

In the present modification, the first sample 511 in the first learning dataset 51 may be an acceleration data sample including a change in acceleration during normal driving, and the first label 512 may indicate the type of a factor (hereafter, an influencing factor) that affects normal driving such as a driver type or a vehicle type. The driver type may be set in accordance with the character shown in driving such as being careful or rough. With the processing in steps S101 to S103, the learning apparatus 1 can build the first generator 411 trained to be capable of generating a pseudo sample including a change in acceleration during normal driving serving as an influencing factor of the type specified by an input value.

In the present modification, the second sample 521 in the second learning dataset 52 may be an acceleration data sample including a change in acceleration resulting from an unexpected event, and the second label 522 may indicate the type of unexpected event. With the processing in steps S111 to S113, the learning apparatus 1 can build the second generator 421 trained to be capable of generating a pseudo sample including a change in acceleration resulting from an event of the type specified by an input value.

In the present modification, the sample value 531 in the third learning dataset 53 may indicate the degree of the change in acceleration. The change in acceleration may be expressed with, for example, amplitude or frequency. The reflection degree 532 may indicate the degree to which the change in acceleration is reflected. The reflection degree 532 may be set in a manner associated with the likelihood of an accident such as the severity of an unexpected event. With the processing in steps S121 to S123, the learning apparatus 1 can build the third generator 431 trained to be capable of generating a pseudo value of the degree of a change in acceleration of an event and the degree of the type specified by an input value.

In the present modification, the learning apparatus 1 can build, with the processing in steps S131 to S133, the estimator 44 trained to be capable of estimating, from the pseudo sample 542 generated by the trained first generator 411, an input provided to the trained first generator 411 to generate the pseudo sample 542. In the present modification, the learning apparatus 1 can generate, with the processing in steps S141 to S144, the second sample 521 from the third sample 551 including changes in acceleration during normal driving and changes in acceleration resulting from an unexpected event using the trained first generator 411 and the estimator 44. Data Generation Apparatus

In the present modification, the first, second, and third input values 221, 223, and 225 may be specified in accordance with the type of influencing factor of a sample to be generated, the type of an unexpected event, and the degree to which the unexpected event is reflected. With the processing in steps S201 to S205, the data generation apparatus 2 can generate the new sample 65 including changes in acceleration during normal driving and changes in acceleration resulting from an unexpected event using each of the trained generators (411, 421, 431) while controlling the degree to which the unexpected event is reflected.

### Monitoring Apparatus

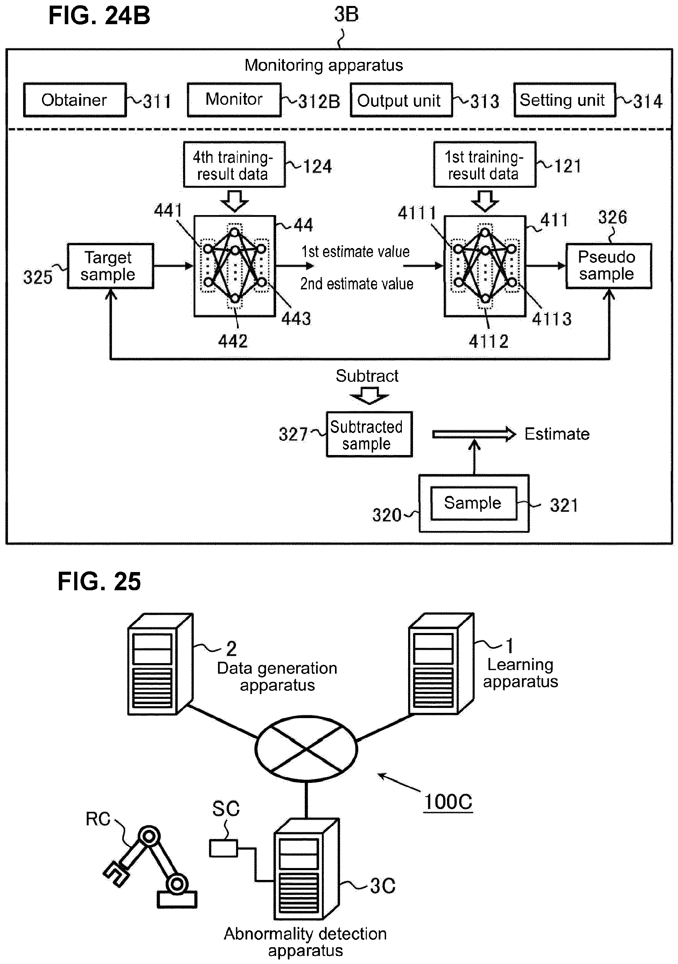

FIG. 24Ais a schematic diagram of the monitoring apparatus 3B according to the present modification showing its example hardware configuration. As shown in FIG. 24A, the monitoring apparatus 3B according to the present modification may be a computer including, similarly to the estimation apparatus 3, the controller 31, the storage 32, the communication interface 33, the external interface 34, the input device 35, the output device 36, and the drive 37 that are electrically connected to one another.

In the present modification, the storage 32 stores various items of information including a monitoring program 83B. The monitoring program 83B corresponds to the estimation program 83 in the embodiment. In the present modification, the monitoring apparatus 3B is connected to the acceleration sensor SB with the external interface 34. The acceleration sensor SB may be located at a position appropriate for measuring the acceleration during vehicle driving.

The monitoring apparatus 3B may have any other hardware configuration. For the specific hardware configuration of the monitoring apparatus 3B, components may be eliminated, substituted, or added as appropriate in each embodiment. The monitoring apparatus 3B may be an information processing apparatus dedicated to an intended service, or may be a general-purpose computer, a mobile phone including a smartphone, or an in-vehicle apparatus.

FIG. 24B is a schematic diagram of the monitoring apparatus 3B according to the present modification showing its example software configuration. In the same manner as in the above embodiment, the software configuration of the monitoring apparatus 3B is implemented by the controller 31 executing the monitoring program 83B. Except that usable data is limited to that as described above, the monitoring apparatus 3B has the same software configuration as the estimation apparatus 3. A monitor 312B corresponds to the estimation unit 312. The monitoring apparatus 3B thus performs a series of processing steps for monitoring the driving state of the driver in the same manner as the estimation apparatus 3 performing the estimation process.

More specifically, in step S301, the controller 31 obtains the target sample 325 of the acceleration data including a change in acceleration of an estimation target from the acceleration sensor SB. In step S302, the controller 31 operates as the monitor 312B and analyzes the target sample 325 using the data group 320 to detect a change in acceleration resulting from an unexpected event from the target sample 325. The samples 321 included in the data group 320 include changes in acceleration during normal driving and changes in acceleration resulting from an unexpected event. The sample 321 corresponding to the detection limit may be selected for each unexpected event detected. Detection parameters may be set based on the sample 321 selected as the detection limit. Thus, the controller 31 can estimate the driving state of the driver. The driving state may be estimated in real time or estimated to evaluate the driving state in the past.

In step S303, the controller 31 outputs information about the result of estimating the driving state of the driver. For example, the controller 31 may create the history about the change in acceleration resulting from the unexpected event, and store the created history in a predetermined storage area. In the history, the change in acceleration obtained in step S302 may be directly indicated, or a result obtained with any information processing on the obtained change in acceleration may be indicated. For example, the controller 31 may evaluate the likelihood of an accident based on the change in acceleration resulting from the unexpected event, and create the history of the evaluation. In another example, the controller 31 may discriminate the driver's behavior, such as sudden braking, sudden acceleration, or sudden turn of the steering wheel based on the change in acceleration resulting from the unexpected event, and create the history of the discrimination. The index for discriminating the behavior may be set as appropriate. The monitoring apparatus 3B can continuously monitor the driving state of the driver by repeating the processing in steps S301 to S303 while the driver is driving the vehicle.

### Features

The data generation apparatus 2 according to the present modification can automatically generate the new sample 65 including a change in acceleration resulting from any combination of the type of influencing factor and the unexpected event as appropriate. The data generation apparatus 2 can thus reduce the costs for collecting various samples including various combinations of the type of influencing factor and the unexpected event. Adding the generated new sample 65 into the data group 320 can reduce or eliminate combinations of the type of influencing factor and the unexpected event for which no sample 321 is obtained. Thus, the monitoring apparatus 3B can improve the accuracy of estimating the driving state of the driver.

### Other Embodiments

The acceleration sensor SB is an example of an in-vehicle sensor. Instead of the acceleration sensor SB, for example, a camera, a lidar sensor, a millimeter-wave radar, or an ultrasonic sensor may be used as the in-vehicle sensor. Instead of or in addition to the driving state of the driver, the state outside the vehicle may be estimated. In the same manner as described above, the first feature may include various types of change during normal driving, and the second feature may include various types of change resulting from the unexpected events. The type of the first feature may be indicated by the type of influencing factor for normal driving, and the type of the second feature may be indicated by the type of unexpected event.

### (C) Situation of Detecting Machine Abnormality

FIG. 25 is a schematic diagram of a detection system 100C according to a third modification used in another situation. In the present modification, the structure in the above embodiment not claimed, but useful for understanding the invention, is used in detecting machine abnormality using sound data including a machine operation sound shown in FIG. 2B. The detection system 100C according to the present modification includes the learning apparatus 1, the data generation apparatus 2, and an abnormality detection apparatus 3C. In the same manner as in the above embodiment, the learning apparatus 1, the data generation apparatus 2, and the abnormality detection apparatus 3C may be connected to one another other with a network.

The predetermined type of data used in the present modification is sound data including an operation sound of a machine RC. The sound data may be obtained by recording the operation sound of the machine RC with a microphone SC. The first feature includes an ambient sound such as an operation sound during a normal operation of the machine RC and noise around the machine RC, and the second feature includes an abnormal sound resulting from abnormality such as aging degradation or malfunction of the machine RC. The type of machine RC and the type of abnormality may be selected as appropriate in each embodiment. As described above, the machine RC may be an apparatus used in a production line, such as a conveyor or an industrial robot. The machine RC may be the entire apparatus or a component of the apparatus such as a motor. The abnormality may be, for example, malfunction, foreign matter contamination, dirt adhesion, or abrasion of a component. Except for these limitations, the detection system 100C according to the present modification may have the same structure as the estimation system 100 according to the above embodiment.

### Learning Apparatus

In the present modification, the first sample 511 in the first learning dataset 51 may be a sample of sound data including an ambient sound, and the first label 512 may indicate the type of machine RC and the type of ambient environment. As described above, the ambient environment of the machine RC may be discriminated by, for example, the location or time at which the machine RC is driven. With the processing in steps S101 to S103, the learning apparatus 1 can build the first generator 411 trained to be capable of generating a pseudo sample including the machine RC of the type specified by an input value and the ambient sound of the ambient environment.

In the present modification, the second sample 521 in the second learning dataset 52 may be a sample of sound data including an abnormal sound, and the second label 522 may indicate the type of abnormality. With the processing in steps S111 to S113, the learning apparatus 1 can build the second generator 421 trained to be capable of generating a pseudo sample including an abnormal sound resulting from abnormality of the type specified by an input value.

In the present modification, the sample value 531 in the third learning dataset 53 may indicate the degree of the attribute of the abnormal sound. The attribute of the abnormal sound may be expressed with, for example, amplitude or frequency. The reflection degree 532 may indicate the degree to which the abnormal sound is reflected. The reflection degree 532 may be set in a manner associated with the degree of abnormality such as the severity of abnormality or the normality of the machine RC. With the processing in steps S121 to S123, the learning apparatus 1 can build the third generator 431 trained to be capable of generating a pseudo value of the attribute of the abnormal sound of the type and degree specified by an input value.

In the present modification, the learning apparatus 1 can build, with the processing in steps S131 to S133, the estimator 44 trained to be capable of estimating, from the pseudo sample 542 generated by the trained first generator 411, an input provided to the trained first generator 411 to generate the pseudo sample 542. In the present modification, the learning apparatus 1 can generate, with the processing in steps S141 to S144, the second sample 521 from the third sample 551 including the ambient sound and abnormal sound using the trained first generator 411 and the estimator 44.

### Data Generation Apparatus

In the present modification, the first, second, and third input values 221, 223, and 225 may be specified in accordance with the types of the machine and the ambient environment in a sample to be generated, the type of abnormality, and the degree to which the abnormal sound is reflected. With the processing in steps S201 to S205, the data generation apparatus 2 can generate the new sample 65 including the ambient sound and abnormal sound of the specified type using each of the trained generators (411, 421, 431) while controlling the degree to which the abnormal sound is reflected.

### Abnormality Detection Apparatus

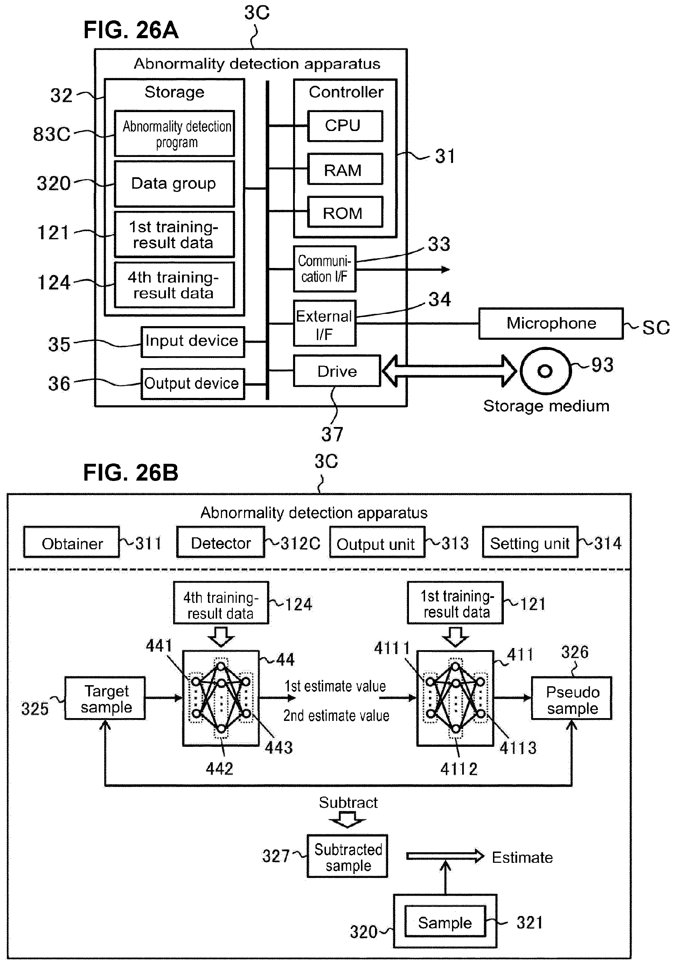

FIG. 26Ais a schematic diagram of the abnormality detection apparatus 3C according to the present modification showing its example hardware configuration. As shown in FIG. 26A, similarly to the estimation apparatus 3, the abnormality detection apparatus 3C according to the present modification may be a computer including the controller 31, the storage 32, the communication interface 33, the external interface 34, the input device 35, the output device 36, and the drive 37 that are electrically connected to one another.

The storage 32 in the present modification stores various items of information including an abnormality detection program 83C. The abnormality detection program 83C corresponds to the estimation program 83 in the embodiment. In the present modification, the abnormality detection apparatus 3C is connected to the microphone SC with the external interface 34. The microphone SC may be located at a position appropriate for recording the operation sound of the machine RC.

The abnormality detection apparatus 3C may have the hardware configuration different from the configuration in the example. For the specific hardware configuration of the abnormality detection apparatus 3C, components may be eliminated, substituted, or added as appropriate in each embodiment. The abnormality detection apparatus 3C may be an information processing apparatus dedicated to an intended service, or may be a general-purpose server, a general-purpose PC, or a PLC.

FIG. 26B is a schematic diagram of the abnormality detection apparatus 3C according to the present modification showing its example software configuration. In the same manner as in the above embodiment, the software configuration of the abnormality detection apparatus 3C is implemented by the controller 31 executing the abnormality detection program 83C. The abnormality detection apparatus 3C has the same software configuration as the estimation apparatus 3, except that the usable data is limited to that as described above. A detector 312C corresponds to the estimation unit 312. The abnormality detection apparatus 3C thus performs a series of processing steps for detecting abnormality in the machine RC in the same manner as the estimation apparatus 3 performing the estimation process.

More specifically, in step S301, the controller 31 obtains, from the microphone SC, the target sample 325 including the operation sound of the inspection target machine RC. In step S302, the controller 31 operates as the detector 312C and analyzes the target sample 325 using the data group 320 to determine whether the inspection target machine RC has abnormality. Each sample 321 included in the data group 320 includes the ambient sound and the abnormal sound. The sample 321 corresponding to the detection limit may be selected for each type of detected abnormality. The detection parameters may be set based on the sample 321 selected as the detection limit. In this manner, the controller 31 estimates the operation state of the machine RC. When abnormality occurs in the operation of the machine RC, the controller 31 can detect the abnormality.

In step S303, the controller 31 outputs information about the estimation result of the operation state of the machine RC. For example, the controller 31 may output the result of estimating the operation state of the machine RC directly to the output device 36. For example, the controller 31 may output a warning to the output device 36 to inform an occurrence of abnormality when detecting an occurrence of abnormality in the processing in step S302. When the abnormality detection apparatus 3C can control the operation of the machine RC, the controller 31 may stop the operation of the machine RC in response to the detection of the occurrence of abnormality. Further, the controller 31 may output, to the output device 36, information about the type of abnormality occurring in the machine RC and a maintenance method for responding to the abnormality. Information about the maintenance method for responding to the abnormality may be stored in a predetermined storage area such as the storage 32, the storage medium 93, an external storage, or a storage medium. The controller 31 may obtain the information about the maintenance method for responding to the abnormality from a predetermined storage area as appropriate.

### Features

The data generation apparatus 2 according to the present modification can automatically generate the new samples 65 including a combination of the ambient sound and the abnormal sound of any type as appropriate. The data generation apparatus 2 can thus reduce the costs for collecting various samples including various combinations of the ambient sound and the abnormal sound. Adding the generated new samples 65 into the data group 320 can reduce or eliminate combinations of the ambient sound and the abnormal sound for which no sample 321 is obtained. Thus, the abnormality detection apparatus 3C can improve the accuracy of detecting abnormality in the machine RC.

### Other Embodiments

The microphone SC is an example of a sensor for monitoring the state of the machine RC. A method for detecting abnormality of the machine RC with sensing data may be different from the method using the sound data including the operation sound of the machine RC. In addition to the microphone SC, for example, a sensor that measures vibrations of the machine such as an acceleration sensor or a vibration sensor may be used to detect abnormality of the machine RC. In this case, sound (aerial vibrations) is simply replaced with physical vibrations of the machine RC. The abnormality of the machine RC can thus be detected with the same method as described above.

4.2
In the above embodiment, a fully connected neural network is used for each of the generators (411, 421, 431), each of the discriminators (412, 422, 432), and the estimator 44. However, the neural network included in each of the generators (411, 421, 431), each of the discriminators (412, 422, 432), and the estimator 44 may be of any other type selected as appropriate in each embodiment. For example, a convolutional neural network or a recurrent neural network may be used for each of the generators (411, 421, 431), each of the discriminators (412, 422, 432), and the estimator 44.

In the above embodiment, the type of a machine learning model included in each of the generators (411, 421, 431), each of the discriminators (412, 422, 432), and the estimator 44 may be different from a neural network. Instead of a neural network, for example, a support vector machine, a regression model, or a decision tree model may be used for each of the discriminators (412, 422, 432) and the estimator 44. The machine learning method may be selected as appropriate for the type of machine learning model.

In the above embodiment, each of the generators (411, 421, 431), each of the discriminators (412, 422, 432), and the estimator 44 may perform input and output with any method determined as appropriate in each embodiment. For example, the first generator 411 may further receive inputs of information other than the noise and the type of the first feature. For example, the first generator 411 may output information other than a pseudo sample. The same applies to other devices.

4.3
In the above embodiment, each of the learning models 41 to 43 includes the corresponding one of the generators (411, 421, 431) and the corresponding one of the discriminators (412, 422, 432). However, when allowing each generator (411, 421, 431) to be trained to be capable of generating corresponding pseudo data, each of the learning models 41 to 43 may have a different structure determined as appropriate in each embodiment.

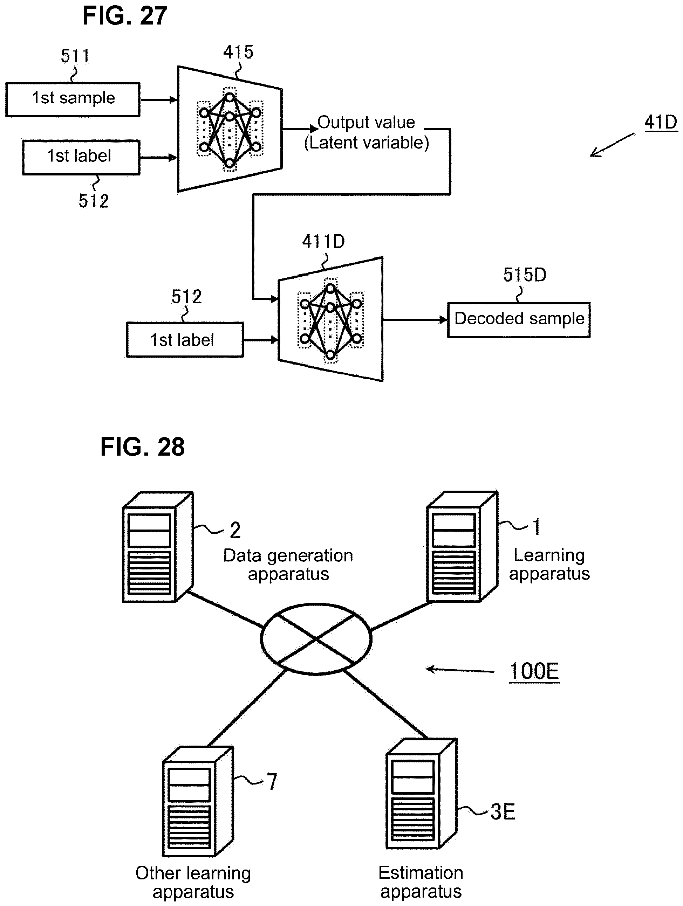

FIG. 27 is a schematic diagram of a first learning model 41D in the present modification. The first learning model 41D in the present modification includes an encoder 415 and a decoder 411D. The encoder 415 converts information indicating the sample including the first feature and the type of the first feature into the feature quantity. The decoder 411D decodes the sample including the feature quantity obtained with the encoder 415 and the first feature corresponding to the information indicating the type of the first feature. In the present modification, the decoder 411D corresponds to the first generator 411. The feature quantity obtained with the encoder 415 corresponds to the noise (latent variable) in the above embodiment.

The encoder 415 and the decoder 411D each include a machine learning model. The type of machine learning model included in each of the encoder 415 and the decoder 411D may be selected as appropriate in each embodiment. In the same manner as in the above embodiment, the machine learning model included in each of the encoder 415 and the decoder 411D may include, for example, a neural network. When each of the encoder 415 and the decoder 411D includes a neural network, the learning apparatus 1 can train the first learning model 41D through machine learning in step S102 as described below.

More specifically, the controller 11 inputs the first sample 511 and the first label 512 in each first learning dataset 51 into the encoder 415 and causes the encoder 415 to perform a computational operation. The controller 11 thus obtains, from the encoder 415, an output value corresponding to the result obtained by converting the first sample 511 and the first label 512 into the feature quantity.

The controller 11 then inputs the feature quantity obtained from the encoder 415 and the corresponding first label 512 into the decoder 411D and causes the decoder 411D to perform a computational operation. Thus, the controller 11 obtains, from the decoder 411D, an output value corresponding to a decoded sample 515D, decoded from the feature quantity and the first label 512.

The controller 11 calculates an error between the obtained decoded sample 515D and the first sample 511 for each first learning dataset 51. The controller 11 uses the error back propagation method to calculate an error in the value of each computational parameter of the encoder 415 and the decoder 411D using the gradient of the calculated error. The controller 11 updates the values of the computational parameters of the encoder 415 and the decoder 411D based on the calculated error. The controller 11 adjusts the values of the computational parameters of the encoder 415 and the decoder 411D through the above series of updating processing steps to reduce the sum of the calculated errors.

Instead of the above updating process, the controller 11 may calculate an error between the feature quantity obtained from the encoder 415 and a value obtained from a predetermined probability distribution (e.g., a Gaussian distribution), and further adjust the computational parameter values of the encoder 415 to reduce the sum of the calculated errors. The controller 11 may thus normalize the output value of the encoder 415.

Through the above machine learning, the controller 11 can build the encoder 415 trained to be capable of converting information indicating the sample including the first feature and the type of the first feature into an appropriate feature quantity. The controller 11 can also build the decoder 411D trained to be capable of generating, from the information indicating the feature quantity and the type of the first feature, a sample including the corresponding first feature.

The feature quantity corresponds to the noise. Thus, the trained decoder 411D can process the feature quantity in the same manner as the trained first generator 411. The data generation apparatus 2 can generate the first pseudo sample 61 using the trained decoder 411D through the same procedure as described in the above embodiment. The learning apparatus 1 can generate the second sample 521 from the third sample 551 using the trained decoder 411D and the estimator 44 through the same procedure as described in the above embodiment. The second learning model 42 and the third learning model 43 may also have the same configuration as the first learning model 41D in the present modification.

4.4
The above embodiment may eliminate the third learning model 43. In this case, the third obtainer 113 and the third trainer 117 may be eliminated from the software configuration of the learning apparatus 1. The processing in steps S121 to S123 may be eliminated from the procedure of the learning apparatus 1. The processing in step S204 may be eliminated from the procedure of the data generation apparatus 2. The controller 21 may appropriately synthesize the first pseudo sample 61 and the second pseudo sample 62 in step S205. The controller 21 may synthesize the first pseudo sample 61 and the second pseudo sample 62 by, for example, directly adding the first pseudo sample 61 and the second pseudo sample 62 in a convolutional manner. In some embodiments, the synthesized parameters may be specified as appropriate with, for example, an input from the operator. The controller 21 may synthesize the first pseudo sample 61 and the second pseudo sample 62 based on the specified parameters.

4.5
In the above embodiment, the estimator 44 may be trained through machine learning by a computer different from the learning apparatus 1. In some embodiments, the second sample 521 may be generated with a method other than the method in the embodiment such as data processing performed with an operation of the operator. For example, the controller 11 may generate the second sample 521 by calculating the difference between the third sample 551 and a sample including a first feature alone provided in advance. In these cases, the fourth obtainer 114 and the fourth trainer 118 may be eliminated from the software configuration of the learning apparatus 1. The processing in steps S131 to S133 and S141 to S144 may be eliminated from the procedure of the learning apparatus 1.

4.6
The estimation apparatus 3 according to the embodiment uses the trained first generator 411 and the estimator 44 to perform the process of estimating the second feature in step S302. However, the process of estimating the second feature may be different from the process in the example. For example, a sample including the first feature corresponding to the target sample 325 may be provided in advance. The estimation apparatus 3 may use the sample provided in advance instead of the pseudo sample 326. In some embodiments, for example, the estimation apparatus 3 may generate a sample including the first feature corresponding to the target sample 325 from the target sample 325 using another model generated with, for example, a subspace method. As described in these examples, when the trained first generator 411 and the estimator 44 are not used to perform the estimation process, the first training-result data 121 and the fourth training-result data 124 may be eliminated from information held by the estimation apparatus 3.

In the above embodiment, the process of estimating the second feature is performed with data analysis on the subtracted sample 327. The new sample 65 can be reflected on the parameters in the data analysis. However, the new sample 65 may be reflected on the parameters in the estimation process in a manner different from the manner in this example. In another example, the process of estimating the second feature may be performed using a machine learning model trained to be capable of performing the estimation process. The new sample 65 may be reflected on the computational parameter values of the trained machine learning model when used for training the machine learning model through machine learning. In this modification, the computational parameters of the trained machine learning model correspond to the parameters in the estimation process.

FIG. 28 is a schematic diagram of an estimation system 100E according to the present modification used in another situation. The structure in the present modification uses the trained machine learning model in the estimation process. The estimation system 100E according to the present modification includes the learning apparatus 1, the data generation apparatus 2, an estimation apparatus 3E, and another learning apparatus 7. The estimation apparatus 3E corresponds to the estimation apparatus 3 according to the embodiment. The other learning apparatus 7 is a computer that generates a trained machine learning model usable in the process of estimating the second feature. In the same manner as in the above embodiment, the learning apparatus 1, the data generation apparatus 2, the estimation apparatus 3E, and the other learning apparatus 7 may be connected to one another with a network. A pair of any two of the learning apparatus 1, the data generation apparatus 2, the estimation apparatus 3E, and the other learning apparatus 7 may be an integrated computer.

### Other Learning Apparatus

### Hardware Configuration

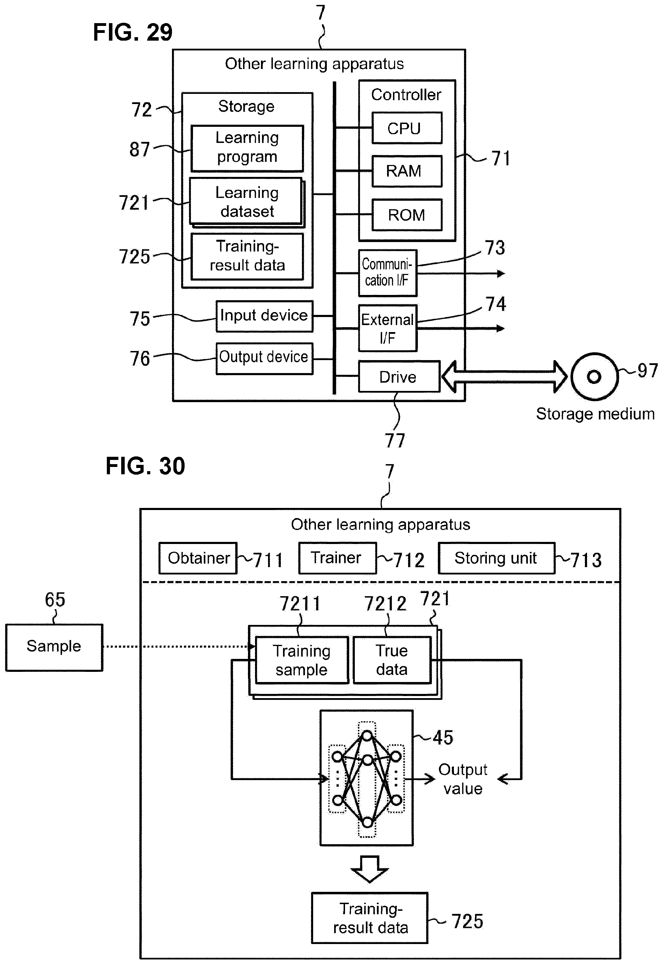

FIG. 29 is a schematic diagram of the other learning apparatus 7 according to the present modification showing its example hardware configuration. As shown in FIG. 29, the other learning apparatus 7 according to the present modification is a computer including a controller 71, a storage 72, a communication interface 73, an external interface 74, an input device 75, an output device 76, and a drive 77 that are electrically connected to one another. The components from the controller 71 to the drive 77 in the other learning apparatus 7 and a storage medium 97 may have the same structures as the components from the controller 11 to the drive 17 in the learning apparatus 1 and the storage medium 91.

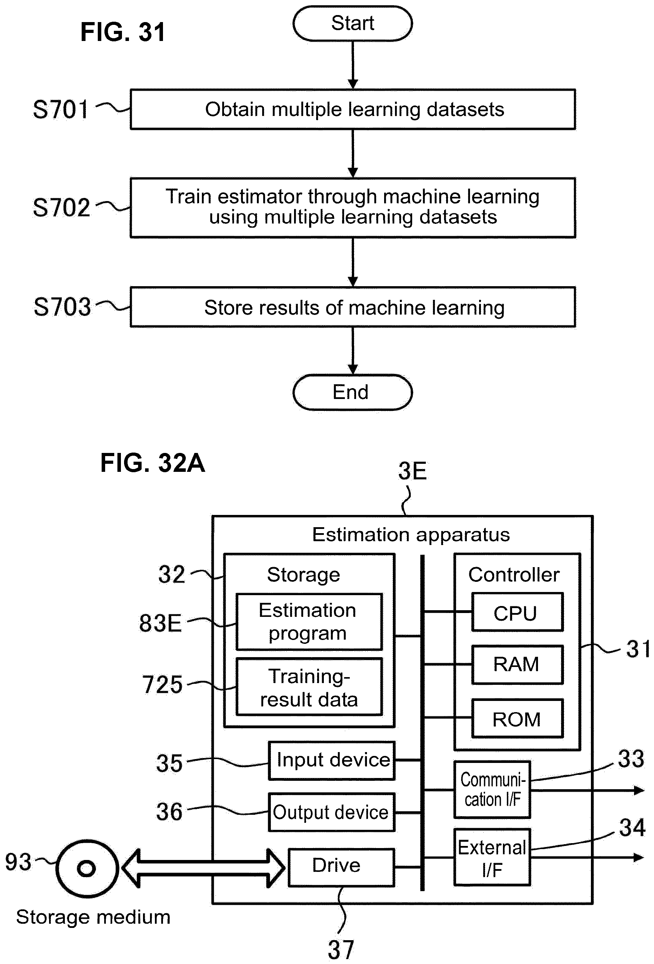

The storage 72 in the present modification stores various items of information such as a learning program 87, multiple learning datasets 721, and training-result data 725. The learning program 87 causes the other learning apparatus 7 to perform information processing (FIG. 31) (described later) for generating a trained machine learning model usable in the estimation process. The learning program 87 includes a series of commands for the information processing. In the same manner as the learning program 81, the learning program 87 may be referred to as a model generation program or simply a generation program. The multiple learning datasets 721 are used to train a machine learning model through machine learning. The training-result data 725 indicates information about the trained machine learning model built through machine learning. The training-result data 725 is generated by executing the learning program 87. At least one of the learning program 87 or the learning datasets 721 may be stored in the storage medium 97. The other learning apparatus 7 may obtain, from the storage medium 97, at least one of the learning program 87 or the learning datasets 721.

For the specific hardware configuration of the other learning apparatus 7, components may be eliminated, substituted, or added as appropriate in each embodiment. For example, the controller 71 may include multiple hardware processors. Each hardware processor may be a microprocessor, an FPGA, a DSP, and other processors. The storage 72 may be the RAM and the ROM included in the controller 71. At least one of the communication interface 73, the external interface 74, the input device 75, the output device 76, or the drive 77 may be eliminated. The other learning apparatus 7 may include multiple computers, each of which may have the same or a different hardware configuration. The other learning apparatus 7 may also be an information processing apparatus dedicated to an intended service, or may be a general-purpose server or a PC.

### Software Configuration

FIG. 30 is a schematic diagram of the other learning apparatus 7 according to the present embodiment showing its example software configuration. In the same manner as in the learning apparatus 1, the controller 71 executes the learning program 87. The other learning apparatus 7 thus operates as a computer including an obtainer 711, a trainer 712, and a storing unit 713 as software modules. In other words, in the present modification, each software module in the other learning apparatus 7 is implemented by the controller 71 (CPU).

The obtainer 711 obtains multiple learning datasets 721 each including a combination of a training sample 7211 and true data 7212. The training sample 7211 includes a first feature. The training sample 7211 may or may not include a second feature. The new sample 65 may be used as the training sample 7211. The true data 7212 indicates the result (true result) obtained by performing a predetermined operation of estimating the second feature on the training sample 7211.

The trainer 712 trains a machine learning model 45 through machine learning using the obtained multiple learning datasets 721. In machine learning, the trainer 712 trains the machine learning model 45 to output, in response to an input of the training sample 7211 in each learning dataset 721, an output value fitting the true data 7212. Thus, the other learning apparatus 7 can generate the machine learning model 45 trained to be capable of performing the process of estimating the second feature. The storing unit 713 generates information about the trained machine learning model 45 as the training-result data 725, and stores the generated training-result data 725 into a predetermined storage area.

The type of the machine learning model 45 may be selected as appropriate in each embodiment. The machine learning method may be selected as appropriate for the type of the machine learning model 45. Similarly to, for example, the first generator 411, the machine learning model 45 may include, for example, a neural network. In the modification described below, for ease of explanation, the machine learning model 45 is a neural network.

In the present modification, in the same manner as in the learning apparatus 1, each software module in the other learning apparatus 7 is implemented by a general-purpose CPU. However, some or all of the software modules may be implemented by one or more dedicated processors. For the software configuration of the other learning apparatus 7, software modules may be eliminated, substituted, or added as appropriate in each embodiment.

### Operation Examples

FIG. 31 is a flowchart of an example procedure performed by the other learning apparatus 7 according to the present modification to train the machine learning model 45 through machine learning. The procedure described below is a mere example, and the steps in the procedure may be changed as appropriate. In the procedure described below, steps may be eliminated, substituted, or added as appropriate in each embodiment.

In step S701, the controller 71 operates as the obtainer 711 and obtains multiple learning datasets 721. Each learning dataset 721 may be generated as appropriate. For example, the controller 71 obtains the training sample 7211 as appropriate. The training sample 7211 may be obtained in the same manner as the first sample 511 or the third sample 551. Predetermined estimation for the second feature is then performed on the obtained training sample 7211. In this situation, the predetermined estimation may be manually performed by, for example, an operator. The result (true result) obtained by performing the predetermined estimation on the training sample 7211 is associated with the training sample 7211. Thus, the controller 71 can generate each learning dataset 721. Similarly to the first training-result data 51, each learning dataset 721 may be generated automatically with the operation of a computer or manually with the operation performed by an operator. Each learning dataset 721 may be generated by the other learning apparatus 7 or a computer different from the other learning apparatus 7. The controller 71 may obtain each generated learning dataset 721 as appropriate.

The new sample 65 may be used as the training sample 7211. When, for example, an insufficient number of learning datasets 721 are available, the controller 71 may request generation of the new sample 65 in the same manner as in the estimation apparatus 3. In this case, the input values (221, 223, 225) may be specified by the other learning apparatus 7. In some embodiments, the data generation apparatus 2 may generate the new sample 65 without receiving a request from the other learning apparatus 7. Thus, the generated new sample 65 may be provided to the other learning apparatus 7 with any method, and the other learning apparatus 7 may obtain the provided new sample 65 as the training sample 7211. The true data 7212 may be provided with the second and third input values 223 and 225 specified to generate the new sample 65.

Any number of learning datasets 721 may be obtained. The number of learning datasets 721 may be selected as appropriate in each embodiment. After obtaining the multiple learning datasets 721, the controller 71 advances the processing to subsequent step S702.

In step S702, the controller 71 operates as the trainer 712 and trains the machine learning model 45 through machine learning using the obtained multiple learning datasets 721. For example, the controller 71 inputs a training sample 7211 in each learning dataset 721 into the machine learning model 45 and causes the machine learning model 45 to perform a computational operation. Thus, the controller 71 obtains, from the machine learning model 45, an output value corresponding to the result of the predetermined process of estimating the second feature performed on the training sample 7211. The controller 71 calculates an error between the obtained output value and the true data 7212 in each learning dataset 721. The controller 71 uses the error back propagation method to calculate an error in the value of each computational parameter of the machine learning model 45 using the gradient of the calculated error. The controller 71 updates the value of each computational parameter of the machine learning model 45 based on the calculated error. The controller 71 adjusts the value of each computational parameter of the machine learning model 45 through the above series of updating processing steps to reduce the sum of the calculated errors. Thus, the controller 71 can generate the machine learning model 45 trained to be capable of performing the process of estimating the second feature. The new sample 65 generated by the data generation apparatus 2 is used for this machine learning to be reflected on the computational parameter values of the trained machine learning model 45. After training the machine learning model 45 through machine learning, the controller 71 advances the processing to subsequent step S703.

In the same manner as in the above embodiment in which the sample 321 corresponding to the detection limit is selected, the learning dataset 721 that has priority in the machine learning may be selected in the present modification. The learning dataset 721 that has priority may be selected from the datasets including the new sample 65 generated by the data generation apparatus 2. In the example in FIG. 2A, the operator may select, from the multiple learning datasets, a learning dataset including a sample including a defect intended to have fewer detection errors to be used for training through machine learning with higher priority. In this case, the sampling rate or learning rate of the selected learning dataset 721 may be set higher than that of the other learning datasets 721 in the above series of updating processing steps. Thus, the selected learning dataset 721 is used for training through the machine learning with high priority. Thus, the trained machine learning model 45 can improve the accuracy of the process of estimating the second feature (defect detection in the example in FIG. 2A) of the training sample 7211 in the selected learning dataset 721.

In step S703, the controller 71 generates information about the trained machine learning model 45 as the training-result data 725 and stores the generated training-result data 725 in a predetermined storage area. The predetermined storage area may be, for example, the RAM in the controller 71, the storage 72, the storage medium 97, an external storage, or a combination of these. After storing the training-result data 725, the controller 71 ends the procedure of the present operation example.

### Estimation Apparatus

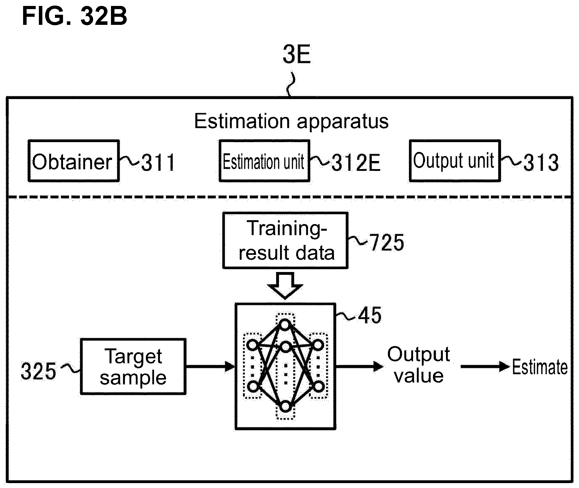

The estimation apparatus 3E according to the present modification will be described with reference to FIGs. 32A and 32B. FIG. 32Ais a schematic diagram of the estimation apparatus 3E according to the present modification showing its example hardware configuration. FIG. 32B is a schematic diagram of the estimation apparatus 3E according to the present modification showing its example software configuration.

As shown in FIG. 32A, similarly to the estimation apparatus 3, the estimation apparatus 3E according to the present modification may be a computer including the controller 31, the storage 32, the communication interface 33, the external interface 34, the input device 35, the output device 36, and the drive 37 that are electrically connected to one another.

In the present modification, the storage 32 stores various items of information including an estimation program 83E and training-result data 725. The estimation program 83E corresponds to the estimation program 83 in the embodiment. At least one of the estimation program 83E or the training-result data 725 may be stored in the storage medium 93. The estimation apparatus 3E may obtain, from the storage medium 93, at least one of the estimation program 83E or the training-result data 725.

Similarly to the first training-result data 121, the training-result data 725 generated by the other learning apparatus 7 may be used in the estimation apparatus 3E at any selected time. The processing in steps S701 to S703 may be repeated regularly or irregularly. The training-result data 725 held by the estimation apparatus 3E may be updated with the updated or newly generated training-result data 725 provided to the estimation apparatus 3E with any selected method.

As shown in FIG. 32B, in the same manner as in the above embodiment, the software configuration of the estimation apparatus 3E is implemented by the controller 31 executing the estimation program 83E. The estimation apparatus 3E has the same software configuration as the estimation apparatus 3, except that the setting unit 314 is eliminated, with the parameter values in the estimation process being determined through the machine learning. An estimation unit 312E corresponds to the estimation unit 312. In the present modification, the estimation unit 312E holding the training-result data 725 includes the trained machine learning model 45. Thus, the estimation apparatus 3E can estimate the second feature in the target sample 325 through the same procedure as described in the above embodiment except that the trained machine learning model 45 is used in step S302.

In step S302, the controller 31 operates as the estimation unit 312E and sets the trained machine learning model 45 by referring to the training-result data 725. The controller 31 inputs the obtained target sample 325 into the trained machine learning model 45 and causes the trained machine learning model 45 to perform a computational operation. Thus, the controller 31 can obtain, from the trained machine learning model 45, an output value corresponding to the result obtained by estimating the second feature in the target sample 325. In the example shown in FIG. 2A, the controller 31 can obtain, from the trained machine learning model 45, an output value corresponding to the determination as to whether a defect is included in the product included in the target sample 325. The present modification can thus perform the process of estimating the second feature with this processing.

4.7
In the above embodiment, two or more first features and two or more second features may be synthesized in the new sample 65 generated by the data generation apparatus 2, instead of one first feature and one second feature. In step S205, for example, the controller 21 may synthesize two or more second pseudo samples 62 including the second feature of different types with one first pseudo sample 61. Thus, the controller 21 can generate a new sample 65 including two or more second features. In the example shown in FIG. 2A, a new sample 65 corresponding to the product P1 with two or more defects P12 can be generated.

4.8
In the above embodiment, each of the learning models 41 to 43 and the estimator 44 may be generated by separate computers. When, for example, the pieces of training-result data 121 to 124 are not to be stored, or more specifically, for example, each of the trained generators (411, 421, 431) and the estimator 44 is temporarily generated, the processing in steps S103, S113, S123, and S133 may be eliminated. In this case, the storing unit 119 may be eliminated from the software configuration of the learning apparatus 1.

In the above embodiment, the data generation apparatus 2 receives the specified input values (221, 223, 225) in the processing in step S201. However, the input values (221, 223, 225) may be specified with another method. For example, the input values (221, 223, 225) may be mechanically determined randomly or by other methods. In this case, the processing in step S201 may be eliminated from the procedure of the data generation apparatus 2. The input receiver 211 may be eliminated from the software configuration of the data generation apparatus 2.

### LIST OF REFERENCE NUMERALS

1 learning apparatus
11 controller
12 storage
13 communication interface
14 external interface
15 input device
16 output device
17 drive
91 storage medium
81 learning program
111 first obtainer
112 second obtainer
113 third obtainer
114 fourth obtainer
115 first trainer
116 second trainer
117 third trainer
118 fourth trainer
119 storing unit
121 first training-result data
122 second training-result data
123 third training-result data
124 fourth training-result data
2 data generation apparatus
21 controller
22 storage
23 communication interface
24 external interface
25 input device
26 output device
27 drive
92 storage medium
82 data generation program
211 input receiver
212 first generation unit
213 second generation unit
214 data synthesizer
220, 222, 224 noise
221 first input value
223 second input value
225 third input value
3 estimation apparatus
31 controller
32 storage
33 communication interface
34 external interface
35 input device
36 output device
37 drive
93 storage medium
83 estimation program
311 obtainer
312 estimation unit
313 output unit
314 setting unit
320 data group
321 sample
325 target sample
326 pseudo sample
327 subtracted sample
41 first learning model
411 first generator
412 first discriminator
42 second learning model
421 second generator
422 second discriminator
43 third learning model
431 third generator
432 third discriminator
44 estimator
51 first learning dataset
511 first sample
512 first label
52 second learning dataset
521 second sample
522 second label
53 third learning dataset
531 sample value
532 reflection degree
54 fourth learning dataset
541 sample value
542 pseudo sample (fourth pseudo sample)
551 third sample
555 pseudo sample (third pseudo sample)
61 first pseudo sample
62 second pseudo sample
63 pseudo value

## Claims

1. A data generation system (100), comprising:
a first obtainer (111) configured to obtain a plurality of first learning datasets (51), each of the plurality of first learning datasets (51) including a combination of a first sample (511) of image data including a first feature and a first label (512) indicating a type of the first feature;
a second obtainer (112) configured to obtain a plurality of second learning datasets (52), each of the plurality of second learning datasets (52) including a combination of a second sample (521) of the image data including a second feature different from the first feature and a second label (522) indicating a type of the second feature;
a first trainer (115) configured to train a first learning model (41) including a first generator (411) through machine learning using the obtained plurality of first learning datasets (51), the training the first learning model (41) through machine learning including training the first generator (411) to generate, from the first label (512), a pseudo sample (515) fitting the first sample (511) for each of the plurality of first learning datasets (51), wherein the first label (512) indicates a type of a product (RA);
a second trainer (116) configured to train a second learning model (42) including a second generator (421) through machine learning using the obtained plurality of second learning datasets (52), the training the second learning model (42) through machine learning including training the second generator (421) to generate, from the second label (522), a pseudo sample (525) fitting the second sample (521) for each of the plurality of second learning datasets (52), wherein the second label indicates a defect type;
a first generation unit (212) configured to generate a first pseudo sample (61) including the first feature by providing a first input value (221) corresponding to the first label (512) to the trained first generator (411);
a second generation unit (213) configured to generate a second pseudo sample (62) including the second feature by providing a second input value (223) corresponding to the second label (522) to the trained second generator (421); and
a data synthesizer (214) configured to generate a new sample (65) of the image data by synthesizing the generated second pseudo sample (62) with the generated first pseudo sample (61), the new sample (65) showing the product (RA) and a defect of the specified type;
wherein the new sample (65) is used as a training sample to train a machine learning model for detecting a defect in a product image captured with a camera.

2. The data generation system (100) according to claim 1, wherein
the image data includes a first component and a second component different from the first component, and the second component is to undergo predetermined estimation,
the first feature includes the first component, and
the second feature includes the second component.

3. The data generation system (100) according to claim 1 or claim 2, wherein
the first learning model (41) further includes a first discriminator (412), and
the training the first generator (411) includes alternately performing
training the first discriminator (412) to discriminate whether an input sample input into the first discriminator (412) is the first sample (511) obtained from a first learning dataset (51) of the plurality of first learning datasets (51) or the pseudo sample (515) generated by the first generator (411), and
training the first generator (411) to generate the pseudo sample (515) to lower discrimination performance of the first discriminator (412).

4. The data generation system (100) according to any one of claims 1 to 3, wherein
the second learning model (42) further includes a second discriminator (422), and
the training the second generator (421) includes alternately performing
training the second discriminator (422) to discriminate whether an input sample input into the second discriminator (422) is the second sample (521) obtained from a second learning dataset (52) of the plurality of second learning datasets (52) or the pseudo sample (525) generated by the second generator (421), and
training the second generator (421) to generate the pseudo sample (525) to lower discrimination performance of the second discriminator (422).

5. The data generation system (100) according to any one of claims 1 to 4, further comprising:
a third obtainer (113) configured to obtain a plurality of third learning datasets (53), each of the plurality of third learning datasets (53) including a combination of a sample value (531) of an attribute of the second feature, a reflection degree (532) of the second feature, and the second label (522); and
a third trainer (117) configured to train a third learning model (43) including a third generator (431) through machine learning using the obtained plurality of third learning datasets (53), the training the third learning model (43) through machine learning including training the third generator (431) to generate, from the reflection degree (532) and the second label (522), a pseudo value (535) of the attribute of the second feature fitting the sample value (531) for each of the plurality of third learning datasets (53),
wherein the synthesizing includes
generating a pseudo value (63) of the attribute of the second feature by providing, to the trained third generator (431), a second input value (223) corresponding to the second label (522) and a third input value (225) corresponding to the reflection degree (532), and
converting the second pseudo sample (62) to allow a value of the attribute of the second feature included in the second pseudo sample (62) to fit the generated pseudo value (63) and synthesizing the second pseudo sample (62) with the first pseudo sample (61).

6. The data generation system (100) according to claim 1, further comprising:
a third obtainer (113) configured to obtain a plurality of third learning datasets (53), each of the third learning datasets (53) including a combination of a sample value (531) of an attribute of the second feature, a reflection degree (532) of the second feature, and the second label (522); and
a third trainer (117) configured to train a third learning model (43) including a third generator (431) through machine learning using the obtained plurality of third learning datasets (53), the training the third learning model (43) through machine learning including training the third generator (431) to generate, from the reflection degree (532) and the second label (522), a pseudo value (535) of the attribute of the second feature fitting the sample value (531) for each of the plurality of third learning datasets (53),
wherein the image data includes a first component and a second component different from the first component, and the second component is to undergo predetermined estimation,
the first feature includes the first component,
the second feature includes the second component,
the predetermined estimation includes detecting the second component, and
the synthesizing includes
generating a pseudo value (63) of the attribute of the second feature by providing, to the trained third generator (431), a second input value (223) corresponding to the second label (522) and a third input value (225) corresponding to the reflection degree (532) and provided in accordance with a limit of the detection, and
converting the second pseudo sample (62) to allow a value of the attribute of the second feature included in the second pseudo sample (62) to fit the generated pseudo value (63) and synthesizing the second pseudo sample (62) with the first pseudo sample (61).

7. The data generation system (100) according to claim 5 or claim 6, wherein
the third learning model (43) further includes a third discriminator (432), and
the training the third generator (431) includes alternately performing
training the third discriminator (432) to discriminate whether an input value input into the third discriminator (432) is the sample value (531) obtained from a third learning dataset of the plurality of third learning datasets (53) or the pseudo value (535) generated by the third generator (431), and
training the third generator (431) to generate the pseudo value (535) of the attribute of the second feature to lower discrimination performance of the third discriminator (432).

8. The data generation system (100) according to any one of claims 5 to 7, wherein
each of the plurality of third learning datasets (53) further includes the first label (512), and
the training the third learning model (43) through machine learning includes training the third generator (431) to generate, from the reflection degree (532), the second label (522), and the first label (512), a pseudo value (535) of the attribute of the second feature fitting the sample value (531).

9. The data generation system (100) according to any one of claims 5 to 8, wherein
the reflection degree (532) includes a set of continuous values.

10. The data generation system (100) according to any one of claims 1 to 9, wherein
the obtaining the plurality of second learning datasets (52) includes
obtaining a plurality of third samples (551) of the image data, each of the plurality of third samples (551) including the first feature and the second feature,
estimating, by providing each of the plurality of third samples (551) to an estimator (44), an estimate value input into the first generator (411) trained to generate a pseudo sample corresponding to each of the plurality of third samples (551), the estimator (44) being trained to estimate, from a pseudo sample generated by the trained first generator (411), an input provided to the first generator (411) to generate the pseudo sample,
generating a third pseudo sample (555) for each of the plurality of third samples (551) by providing the estimated estimate value to the trained first generator (411), and
generating the second sample (521) in each of the plurality of second learning datasets (52) by subtracting the third pseudo sample (555) from each of the plurality of third samples (551).

11. The data generation system (100) according to claim 10, further comprising:
a fourth obtainer (114) configured to obtain a plurality of fourth learning datasets (54), each of the plurality of fourth learning datasets (54) including a combination of an input sample value (541) to be provided to the trained first generator (411) and a fourth pseudo sample (542) generated by providing the input sample value (541) to the trained first generator (411); and
a fourth trainer (118) configured to build the trained estimator (44) by training the estimator (44) through machine learning using the obtained plurality of fourth learning datasets (54), the training the estimator (44) through machine learning including training the estimator (44) to estimate, from the fourth pseudo sample (542), an input provided to the trained first generator (411) to obtain an estimate value fitting the sample value (541) for each of the plurality of fourth learning datasets (54).

12. The data generation system (100) according to any one of claims 1 to 11, wherein
the image data includes a background and a foreground,
the first feature includes the background, and
the second feature includes the foreground.

13. The data generation system (100) according to any one of claims 1 to 11, wherein
the image data includes a product,
the first feature includes a background including the product, and
the second feature includes a defect of the product.

14. A data generation method, comprising:
generating, with a computer, a first pseudo sample (61) including a first feature using a trained first generator (411),
the trained first generator (411) being built through machine learning using a plurality of first learning datasets (51), each of the plurality of first learning datasets (51) including a combination of a first sample (511) of image data including a first feature and a first label (512) indicating a type of the first feature,
the trained first generator (411) being trained through the machine learning to generate, from the first label (512), a pseudo sample (515) fitting the first sample (511) for each of the plurality of first learning datasets (51), wherein the first label (512) indicates a type of a product (RA),
the computer being configured to generate the first pseudo sample (61) including the first feature by providing a first input value (221) corresponding to the first label (512) to the trained first generator (411);
generating, with the computer, a second pseudo sample (62) including a second feature using a trained second generator (421),
the trained second generator (421) being built through machine learning using a plurality of second learning datasets (52), each of the plurality of second learning datasets (52) including a combination of a second sample (521) of the image data including a second feature different from the first feature and a second label (522) indicating a type of the second feature,
the trained second generator (421) being trained through the machine learning to generate, from the second label (522), a pseudo sample (525) fitting the second sample (521) for each of the plurality of second learning datasets (52), wherein the second label indicates a defect type,
the computer being configured to generate the second pseudo sample (62) including the second feature by providing a second input value (223) corresponding to the second label (522) to the trained second generator (421); and
generating, with the computer, a new sample (65) of the image data by synthesizing the generated second pseudo sample (62) with the generated first pseudo sample (61), the new sample (65) showing the product (RA) and a defect of the specified type;
wherein the new sample (65) is used as a training sample to train a machine learning model for detecting a defect in a product image captured with a camera.

15. A data generation computer program comprising instructions which, when the program is executed by a computer, cause the computer to carry out the operations comprising:
generating a first pseudo sample (61) including a first feature using a trained first generator (411),
the trained first generator (411) being built through machine learning using a plurality of first learning datasets (51), each of the plurality of first learning datasets (51) including a combination of a first sample (511) of image data including a first feature and a first label (512) indicating a type of the first feature,
the trained first generator (411) being trained through the machine learning to generate, from the first label (512), a pseudo sample (515) fitting the first sample (511) for each of the plurality of first learning datasets (51), wherein the first label (512) indicates a type of a product (RA),
the computer being configured to generate the first pseudo sample (61) including the first feature by providing a first input value (221) corresponding to the first label (512) to the trained first generator (411);
generating a second pseudo sample (62) including a second feature using a trained second generator (421),
the trained second generator (421) being built through machine learning using a plurality of second learning datasets (52), each of the plurality of second learning datasets (52) including a combination of a second sample (521) of the image data including a second feature different from the first feature and a second label (522) indicating a type of the second feature, wherein the second label indicates a defect type,
the trained second generator (421) being trained through the machine learning to generate, from the second label (522), a pseudo sample (525) fitting the second sample (521) for each of the plurality of second learning datasets (52),
the computer being configured to generate the second pseudo sample (62) including the second feature by providing a second input value (223) corresponding to the second label (522) to the trained second generator (421); and
generating a new sample (65) of the image data by synthesizing the generated second pseudo sample (62) with the generated first pseudo sample (61) , the new sample (65) showing the product (RA) and a defect of the specified type;
wherein the new sample (65) is used as a training sample to train a machine learning model for detecting a defect in a product image captured with a camera.

## Patentansprüche

1. Datenerzeugungssystem (100), aufweisend:
einen ersten Erlangungseinrichtung (111), die eingerichtet ist, mehrere erste Lern-Datensätzen (51) zu erlangen, wobei jeder mehreren ersten Lern-Datensätzen (51) eine Kombination aus einer ersten Probe (511) von Bilddaten, die ein erstes Merkmal enthalten, und einer ersten Kennzeichnung (512), die einen Typ des ersten Merkmals angibt, enthält;
eine zweite Erlangungseinrichtung (112), die eingerichtet ist, mehrere zweite Lern-Datensätzen (52) zu erlangen, wobei jeder der mehreren zweiten Lern-Datensätzen (52) eine Kombination aus einer zweiten Probe (521) der Bilddaten, die ein zweites Merkmal enthalten, das sich von dem ersten Merkmal unterscheidet, und einer zweiten Kennzeichnung (522), die einen Typ des zweiten Merkmals angibt, enthält;
eine erste Trainingseinrichtung (115), die eingerichtet ist, ein erstes Lern-Modell (41), das einen ersten Generator (411) enthält, durch maschinelles Lernen unter Verwendung der erlangten mehreren ersten Lern-Datensätzen (51) zu trainieren, wobei das Trainieren des ersten Lern-Modells (41) durch maschinelles Lernen das Trainieren des ersten Generators (411) enthält, um aus der ersten Kennzeichnung (512) eine Pseudoprobe (515) zu erzeugen, die zu der ersten Probe (511) für jeden der mehreren ersten Lern-Datensätzen (51) passt, wobei die erste Kennzeichnung (512) einen Typ eines Produkts (RA) angibt;
eine zweite Trainingseinrichtung (116), die eingerichtet ist, ein zweites Lern-Modell (42), das einen zweiten Generator (421) enthält, durch maschinelles Lernen unter Verwendung der erlangten mehreren zweiten Lern-Datensätzen (52) zu trainieren, wobei das Trainieren des zweiten Lern-Modells (42) durch maschinelles Lernen das Trainieren des zweiten Generators (421) enthält, um aus der zweiten Kennzeichnung (522) eine Pseudoprobe (525) zu erzeugen, die zu der zweiten Probe (521) für jeden der mehreren zweiten Lern-Datensätzen (52) passt, wobei die zweite Kennzeichnung einen Defekttyp angibt;
eine erste Erzeugungseinheit (212), die eingerichtet ist, eine erste Pseudoprobe (61), die das erste Merkmal enthält, durch Bereitstellen eines ersten Eingabewerts (221), der der ersten Kennzeichnung (512) entspricht, für den trainierten ersten Generator (411) zu erzeugen;
eine zweite Erzeugungseinheit (213), die eingerichtet ist, eine zweite Pseudoprobe (62), die das zweite Merkmal enthält, durch Bereitstellen eines zweiten Eingabewerts (223), der der zweiten Kennzeichnung (522) entspricht, für den trainierten zweiten Generator (421) zu erzeugen; und
eine Datensynthetisiereinrichtung (214), die eingerichtet ist, eine neue Probe (65) der Bilddaten durch Synthetisieren der erzeugten zweiten Pseudoprobe (62) mit der erzeugten ersten Pseudoprobe (61) zu erzeugen, wobei die neue Probe (65) das Produkt (RA) und einen Defekt des spezifizierten Typs zeigt;
wobei die neue Probe (65) als eine Trainingsprobe verwendet wird, um ein maschinelles Lern-Modell zum Detektieren eines Defekts in einem Produktbild, das mit einer Kamera aufgenommen wird, zu trainieren.

2. Datenerzeugungssystem (100) nach Anspruch 1, wobei
die Bilddaten eine erste Komponente und eine zweite Komponente, die sich von der ersten Komponente unterscheidet, enthalten und die zweite Komponente einer vorbestimmten Schätzung unterzogen werden soll,
das erste Merkmal die erste Komponente enthält und
das zweite Merkmal die zweite Komponente enthält.

3. Datenerzeugungssystem (100) nach Anspruch 1 oder Anspruch 2, wobei
das erste Lern-Modell (41) ferner einen ersten Diskriminator (412) enthält und
das Trainieren des ersten Generators (411) abwechselndes Durchführen von
Trainieren des ersten Diskriminators (412), um zu unterscheiden, ob eine Eingabeprobe, die in den ersten Diskriminator (412) eingegeben wird, die erste Probe (511), die aus einem ersten Lern-Datensatz (51) der mehreren ersten Lern-Datensätzen (51) erhalten wird, oder die Pseudoprobe (515), die durch den ersten Generator (411) erzeugt wird, ist, und
Trainieren des ersten Generators (411), um die Pseudoprobe (515) zu erzeugen, und die Unterscheidungsleistung des ersten Diskriminators (412) zu verringern.

4. Datenerzeugungssystem (100) nach einem der Ansprüche 1 bis 3, wobei
das zweite Lern-Modell (42) ferner einen zweiten Diskriminator (422) enthält und
das Trainieren des zweiten Generators (421) abwechselndes Durchführen von
Trainieren des zweiten Diskriminators (422), um zu unterscheiden, ob eine Eingabeprobe, die in den zweiten Diskriminator (422) eingegeben wird, die zweite Probe (521), die aus einem zweiten Lern-Datensatz (52) der mehreren zweiten Lern-Datensätzen (52) erhalten wird, oder die Pseudoprobe (525), die durch den zweiten Generator (421) erzeugt wird, ist, und
Trainieren des zweiten Generators (421), um die Pseudoprobe (525) zu erzeugen, und die Unterscheidungsleistung des zweiten Diskriminators (422) zu verringern, umfasst.

5. Datenerzeugungssystem (100) nach einem der Ansprüche 1 bis 4, ferner aufweisend:
eine dritte Erlangungseinrichtung (113), die eingerichtet ist, mehrere dritte Lern-Datensätze (53) zu erlangen, wobei jeder der mehreren dritten Lern-Datensätze (53) eine Kombination aus einem Probenwert (531) eines Attributs des zweiten Merkmals, einem Reflexionsgrad (532) des zweiten Merkmals und der zweiten Kennzeichnung (522) enthält; und
eine dritte Trainingseinrichtung (117), die eingerichtet ist, ein drittes Lern-Modell (43), das einen dritten Generator (431) enthält, durch maschinelles Lernen unter Verwendung der erlangten mehreren dritten Lern-Datensätze (53) zu trainieren, wobei das Trainieren des dritten Lern-Modells (43) durch maschinelles Lernen das Trainieren des dritten Generators (431) enthält, um aus dem Reflexionsgrad (532) und der zweiten Kennzeichnung (522) einen Pseudowert (535) des Attributs des zweiten Merkmals zu erzeugen, der zu dem Probenwert (531) für jeden der mehreren dritten Lern-Datensätze (53) passt,
wobei das Synthetisieren Folgendes enthält:
Erzeugen eines Pseudowerts (63) des Attributs des zweiten Merkmals durch Bereitstellen, für den trainierten dritten Generator (431), eines zweiten Eingabewerts (223), der der zweiten Kennzeichnung (522) entspricht, und eines dritten Eingabewerts (225), der dem Reflexionsgrad (532) entspricht, und
Umwandeln der zweiten Pseudoprobe (62), um zu ermöglichen, dass ein Wert des Attributs des zweiten Merkmals, das in der zweiten Pseudoprobe (62) enthalten ist, zu dem erzeugten Pseudowert (63) passt, und Synthetisieren der zweiten Pseudoprobe (62) mit der ersten Pseudoprobe (61).

6. Datenerzeugungssystem (100) nach Anspruch 1, ferner aufweisend:
eine dritte Erlangungseinrichtung (113), die eingerichtet ist, mehrere dritte Lern-Datensätze (53) zu erlangen, wobei jeder der dritten Lern-Datensätze (53) eine Kombination aus einem Probenwert (531) eines Attributs des zweiten Merkmals, einem Reflexionsgrad (532) des zweiten Merkmals und der zweiten Kennzeichnung (522) enthält; und
eine dritte Trainingseinrichtung (117), die eingerichtet ist, ein drittes Lern-Modell (43), das einen dritten Generator (431) enthält, durch maschinelles Lernen unter Verwendung der erlangten mehreren dritten Lern-Datensätze (53) zu trainieren, wobei das Trainieren des dritten Lern-Modells (43) durch maschinelles Lernen das Trainieren des dritten Generators (431) enthält, um aus dem Reflexionsgrad (532) und der zweiten Kennzeichnung (522) einen Pseudowert (535) des Attributs des zweiten Merkmals zu erzeugen, der zu dem Probenwert (531) für jeden der mehreren dritten Lern-Datensätze (53) passt,
wobei die Bilddaten eine erste Komponente und eine zweite Komponente, die sich von der ersten Komponente unterscheidet, enthalten und die zweite Komponente einer vorbestimmten Schätzung unterzogen werden soll,
das erste Merkmal die erste Komponente enthält,
das zweite Merkmal die zweite Komponente enthält,
die vorbestimmte Schätzung das Detektieren der zweiten Komponente enthält und
das Synthetisieren Folgendes enthält:
Erzeugen eines Pseudowerts (63) des Attributs des zweiten Merkmals durch Bereitstellen, für den trainierten dritten Generator (431), eines zweiten Eingabewerts (223), der der zweiten Kennzeichnung (522) entspricht, und eines dritten Eingabewerts (225), der dem Reflexionsgrad (532) entspricht und gemäß einer Grenze der Detektion bereitgestellt wird, und
Umwandeln der zweiten Pseudoprobe (62), um zu ermöglichen, dass ein Wert des Attributs des zweiten Merkmals, das in der zweiten Pseudoprobe (62) enthalten ist, zu dem erzeugten Pseudowert (63) passt, und Synthetisieren der zweiten Pseudoprobe (62) mit der ersten Pseudoprobe (61).

7. Datenerzeugungssystem (100) nach Anspruch 5 oder Anspruch 6, wobei
das dritte Lern-Modell (43) ferner einen dritten Diskriminator (432) enthält und
das Trainieren des dritten Generators (431) abwechselndes Durchführen von
Trainieren des dritten Diskriminators (432), um zu unterscheiden, ob ein Eingabewert, der in den dritten Diskriminator (432) eingegeben wird, der Probenwert (531), der aus einem dritten Lern-Datensatz der mehreren dritten Lern-Datensätzen (53) erhalten wird, oder der Pseudowert (535), der durch den dritten Generator (431) erzeugt wird, ist, und
Trainieren des dritten Generators (431), um den Pseudowert (535) des Attributs des zweiten Merkmals zu erzeugen, und die Unterscheidungsleistung des dritten Diskriminators (432) zu verringern, umfasst.

8. Datenerzeugungssystem (100) nach einem der Ansprüche 5 bis 7, wobei
jeder der mehreren dritten Lern-Datensätze (53) ferner die erste Kennzeichnung (512) enthält, und
das Trainieren des dritten Lern-Modells (43) durch maschinelles Lernen das Trainieren des dritten Generators (431) enthält, um aus dem Reflexionsgrad (532), der zweiten Kennzeichnung (522) und der ersten Kennzeichnung (512) einen Pseudowert (535) des Attributs des zweiten Merkmals zu erzeugen, der zu dem Probenwert (531) passt.

9. Datenerzeugungssystem (100) nach einem der Ansprüche 5 bis 8, wobei
der Reflexionsgrad (532) einen Satz von kontinuierlichen Werten enthält.

10. Datenerzeugungssystem (100) nach einem der Ansprüche 1 bis 9, wobei
das Erlangen der mehreren zweiten Lern-Datensätze (52) enthält:
Erlangen mehrerer dritter Proben (551) der Bilddaten, wobei jede der mehreren dritten Proben (551) das erste Merkmal und das zweite Merkmal enthält,
Schätzen, durch Bereitstellen jeder der mehreren dritten Proben (551) für einen Schätzer (44), eines Schätzwerts, der in den ersten Generator (411) eingegeben wird, der trainiert ist, eine Pseudoprobe, die jeder der mehreren dritten Proben (551) entspricht, zu erzeugen, wobei der Schätzer (44) trainiert ist, aus einer Pseudoprobe, die durch den trainierten ersten Generator (411) erzeugt wird, eine Eingabe, die für den ersten Generator (411) bereitgestellt wird, zu schätzen, um die Pseudoprobe zu erzeugen,
Erzeugen einer dritten Pseudoprobe (555) für jede der mehreren dritten Proben (551) durch Bereitstellen des geschätzten Schätzwerts für den trainierten ersten Generator (411), und
Erzeugen der zweiten Probe (521) in jedem der mehreren zweiten Lern-Datensätze (52) durch Subtrahieren der dritten Pseudoprobe (555) von jeder der mehreren dritten Proben (551).

11. Datenerzeugungssystem (100) nach Anspruch 10, ferner aufweisend:
eine vierte Erlangungseinrichtung (114), die eingerichtet ist, mehrere vierte Lern-Datensätze (54) zu erlangen, wobei jeder der mehreren vierten Lern-Datensätze (54) eine Kombination aus einem Eingabeprobenwert (541), der für den trainierten ersten Generator (411) bereitzustellen ist, und einer vierten Pseudoprobe (542), die durch Bereitstellen des Eingabeprobenwerts (541) für den trainierten ersten Generator (411) erzeugt wird, enthält; und
eine vierte Trainingseinrichtung (118), die eingerichtet ist, den trainierten Schätzer (44) durch Trainieren des Schätzers (44) durch maschinelles Lernen unter Verwendung der erlangten mehreren vierten Lern-Datensätze (54) aufzubauen, wobei das Trainieren des Schätzers (44) durch maschinelles Lernen das Trainieren des Schätzers (44) enthält, aus der vierten Pseudoprobe (542) eine Eingabe, die für den trainierten ersten Generator (411) bereitgestellt wird, zu schätzen, um einen Schätzwert zu erlangen, der zu dem Probenwert (541) für jeden der mehreren vierten Lern-Datensätze (54) passt.

12. Datenerzeugungssystem (100) nach einem der Ansprüche 1 bis 11, wobei
die Bilddaten einen Hintergrund und einen Vordergrund enthalten,
das erste Merkmal den Hintergrund enthält und
das zweite Merkmal den Vordergrund enthält.

13. Datenerzeugungssystem (100) nach einem der Ansprüche 1 bis 11, wobei
die Bilddaten ein Produkt enthalten,
das erste Merkmal einen Hintergrund enthält, der das Produkt enthält, und
das zweite Merkmal einen Defekt des Produkts enthält.

14. Datenerzeugungsverfahren, aufweisend:
Erzeugen, mit einem Computer, einer ersten Pseudoprobe (61), die ein erstes Merkmal enthält, unter Verwendung eines trainierten ersten Generators (411),
wobei der trainierte erste Generator (411) durch maschinelles Lernen unter Verwendung mehrerer erster Lern-Datensätzen (51) aufgebaut wird, wobei jeder der mehreren ersten Lern-Datensätzen (51) eine Kombination aus einer ersten Probe (511) von Bilddaten, die ein erstes Merkmal enthalten, und einer ersten Kennzeichnung (512), die einen Typ des ersten Merkmals angibt, enthält,
wobei der trainierte erste Generator (411) durch das maschinelle Lernen trainiert wird, um aus der ersten Kennzeichnung (512) eine Pseudoprobe (515) zu erzeugen, die zu der ersten Probe (511) für jeden der mehreren ersten Lern-Datensätzen (51) passt, wobei die erste Kennzeichnung (512) einen Typ eines Produkts (RA) angibt,
wobei der Computer eingerichtet ist, die erste Pseudoprobe (61), die das erste Merkmal enthält, durch Bereitstellen eines ersten Eingabewerts (221), der der ersten Kennzeichnung (512) entspricht, für den trainierten ersten Generator (411) zu erzeugen;
Erzeugen, mit dem Computer, einer zweiten Pseudoprobe (62), die ein zweites Merkmal enthält, unter Verwendung eines trainierten zweiten Generators (421),
wobei der trainierte zweite Generator (421) durch maschinelles Lernen unter Verwendung mehrerer zweiter Lern-Datensätzen (52) aufgebaut wird, wobei jeder der mehreren zweiten Lern-Datensätzen (52) eine Kombination aus einer zweiten Probe (521) der Bilddaten, die ein zweites Merkmal enthalten, das sich von dem ersten Merkmal unterscheidet, und einer zweiten Kennzeichnung (522), die einen Typ des zweiten Merkmals angibt, enthält,
wobei der trainierte zweite Generator (421) durch das maschinelle Lernen trainiert wird, um aus der zweiten Kennzeichnung (522) eine Pseudoprobe (525) zu erzeugen, die zu der zweiten Probe (521) für jeden der mehreren zweiten Lern-Datensätzen (52) passt, wobei die zweite Kennzeichnung einen Defekttyp angibt,
wobei der Computer eingerichtet ist, die zweite Pseudoprobe (62), die das zweite Merkmal enthält, durch Bereitstellen eines zweiten Eingabewerts (223), der der zweiten Kennzeichnung (522) entspricht, für den trainierten zweiten Generator (421) zu erzeugen; und
Erzeugen, mit dem Computer, einer neuen Probe (65) der Bilddaten durch Synthetisieren der erzeugten zweiten Pseudoprobe (62) mit der erzeugten ersten Pseudoprobe (61), wobei die neue Probe (65) das Produkt (RA) und einen Defekt des spezifizierten Typs zeigt;
wobei die neue Probe (65) als eine Trainingsprobe verwendet wird, um ein maschinelles Lern-Modell zum Detektieren eines Defekts in einem Produktbild, das mit einer Kamera aufgenommen wird, zu trainieren.

15. Datenerzeugungs-Computerprogramm, aufweisend Anweisungen, die, wenn das Programm von einem Computer ausgeführt wird, den Computer veranlassen, die Operationen auszuführen, aufweisend:
Erzeugen einer ersten Pseudoprobe (61), die ein erstes Merkmal enthält, unter Verwendung eines trainierten ersten Generators (411),
wobei der trainierte erste Generator (411) durch maschinelles Lernen unter Verwendung mehrerer erster Lern-Datensätzen (51) aufgebaut wird, wobei jeder der mehreren ersten Lern-Datensätzen (51) eine Kombination aus einer ersten Probe (511) von Bilddaten, die ein erstes Merkmal enthalten, und einer ersten Kennzeichnung (512), die einen Typ des ersten Merkmals angibt, enthält,
wobei der trainierte erste Generator (411) durch das maschinelle Lernen trainiert wird, um aus der ersten Kennzeichnung (512) eine Pseudoprobe (515) zu erzeugen, die zu der ersten Probe (511) für jeden der mehreren ersten Lern-Datensätzen (51) passt, wobei die erste Kennzeichnung (512) einen Typ eines Produkts (RA) angibt,
wobei der Computer eingerichtet ist, die erste Pseudoprobe (61), die das erste Merkmal enthält, durch Bereitstellen eines ersten Eingabewerts (221), der der ersten Kennzeichnung (512) entspricht, für den trainierten ersten Generator (411) zu erzeugen;
Erzeugen einer zweiten Pseudoprobe (62), die ein zweites Merkmal enthält, unter Verwendung eines trainierten zweiten Generators (421),
wobei der trainierte zweite Generator (421) durch maschinelles Lernen unter Verwendung mehrerer zweiter Lern-Datensätzen (52) aufgebaut wird, wobei jeder der mehreren zweiten Lern-Datensätzen (52) eine Kombination aus einer zweiten Probe (521) der Bilddaten, die ein zweites Merkmal enthält, das sich von dem ersten Merkmal unterscheidet, und einer zweiten Kennzeichnung (522), die einen Typ des zweiten Merkmals angibt, enthält, wobei die zweite Kennzeichnung einen Defekttyp angibt,
wobei der trainierte zweite Generator (421) durch das maschinelle Lernen trainiert wird, um aus der zweiten Kennzeichnung (522) eine Pseudoprobe (525) zu erzeugen, die zu der zweiten Probe (521) für jeden der mehreren zweiten Lern-Datensätzen (52) passt,
wobei der Computer eingerichtet ist, die zweite Pseudoprobe (62), die das zweite Merkmal enthält, durch Bereitstellen eines zweiten Eingabewerts (223), der der zweiten Kennzeichnung (522) entspricht, für den trainierten zweiten Generator (421) zu erzeugen; und
Erzeugen einer neuen Probe (65) der Bilddaten durch Synthetisieren der erzeugten zweiten Pseudoprobe (62) mit der erzeugten ersten Pseudoprobe (61), wobei die neue Probe (65) das Produkt (RA) und einen Defekt des spezifizierten Typs zeigt;
wobei die neue Probe (65) als eine Trainingsprobe verwendet wird, um ein maschinelles Lern-Modell zum Detektieren eines Defekts in einem Produktbild, das mit einer Kamera aufgenommen wird, zu trainieren.

## Revendications

1. Système de génération de données (100), comprenant :
un premier dispositif d'obtention (111) configuré pour obtenir une pluralité de premiers ensembles de données d'apprentissage (51), chacun de la pluralité de premiers ensembles de données d'apprentissage (51) incluant une combinaison d'un premier échantillon (511) de données d'image incluant une première caractéristique et une première étiquette (512) indiquant un type de la première caractéristique ;
un second dispositif d'obtention (112) configuré pour obtenir une pluralité de seconds ensembles de données d'apprentissage (52), chacun de la pluralité de seconds ensembles de données d'apprentissage (52) incluant une combinaison d'un second échantillon (521) des données d'image incluant une seconde caractéristique différente de la première caractéristique et une seconde étiquette (522) indiquant un type de la seconde caractéristique ;
un premier dispositif d'entraînement (115) configuré pour entraîner un premier modèle d'apprentissage (41) incluant un premier générateur (411) par l'intermédiaire d'un apprentissage machine en utilisant la pluralité obtenue de premiers ensembles de données d'apprentissage (51), l'entraînement du premier modèle d'apprentissage (41) par l'intermédiaire d'un apprentissage machine incluant l'entraînement du premier générateur (411) pour générer, à partir de la première étiquette (512), un pseudo-échantillon (515) correspondant au premier échantillon (511) pour chacun de la pluralité de premiers ensembles de données d'apprentissage (51), dans lequel la première étiquette (512) indique un type d'un produit (RA) ;
un second dispositif d'entraînement (116) configuré pour entraîner un second modèle d'apprentissage (42) incluant un second générateur (421) par l'intermédiaire d'un apprentissage machine en utilisant la pluralité obtenue de seconds ensembles de données d'apprentissage (52), l'entraînement du second modèle d'apprentissage (42) par l'intermédiaire d'un apprentissage machine incluant l'entraînement du second générateur (421) pour générer, à partir de la seconde étiquette (522), un pseudo-échantillon (525) correspondant au second échantillon (521) pour chacun de la pluralité de seconds ensembles de données d'apprentissage (52), dans lequel la seconde étiquette indique un type de défaut ;
une première unité de génération (212) configurée pour générer un premier pseudo-échantillon (61) incluant la première caractéristique en fournissant une première valeur d'entrée (221) correspondant à la première étiquette (512) au premier générateur entraîné (411) ;
une seconde unité de génération (213) configurée pour générer un second pseudo-échantillon (62) incluant la seconde caractéristique en fournissant une seconde valeur d'entrée (223) correspondant à la seconde étiquette (522) au second générateur entraîné (421) ; et
un synthétiseur de données (214) configuré pour générer un nouvel échantillon (65) des données d'image en synthétisant le second pseudo-échantillon généré (62) avec le premier pseudo-échantillon généré (61), le nouvel échantillon (65) montrant le produit (RA) et un défaut du type spécifié ;
dans lequel le nouvel échantillon (65) est utilisé comme un échantillon d'entraînement pour entraîner un modèle d'apprentissage machine pour détecter un défaut dans une image de produit capturée avec une caméra.

2. Système de génération de données (100) selon la revendication 1, dans lequel
les données d'image incluent une première composante et une seconde composante différente de la première composante, et la seconde composante doit subir une estimation prédéterminée,
la première caractéristique inclut la première composante, et
la seconde caractéristique inclut la seconde composante.

3. Système de génération de données (100) selon la revendication 1 ou la revendication 2, dans lequel
le premier modèle d'apprentissage (41) inclut en outre un premier discriminateur (412), et
l'entraînement du premier générateur (411) inclut l'exécution en alternance
de l'entraînement du premier discriminateur (412) pour discriminer si un échantillon d'entrée entré dans le premier discriminateur (412) est le premier échantillon (511) obtenu à partir d'un premier ensemble de données d'apprentissage (51) de la pluralité de premiers ensembles de données d'apprentissage (51) ou le pseudo-échantillon (515) généré par le premier générateur (411), et
de l'entraînement du premier générateur (411) pour générer le pseudo-échantillon (515) afin de réduire les performances de discrimination du premier discriminateur (412).

4. Système de génération de données (100) selon l'une quelconque des revendications 1 à 3, dans lequel
le second modèle d'apprentissage (42) inclut en outre un second discriminateur (422), et
l'entraînement du second générateur (421) inclut l'exécution en alternance
de l'entraînement du second discriminateur (422) pour discriminer si un échantillon d'entrée entré dans le second discriminateur (422) est le second échantillon (521) obtenu à partir d'un second ensemble de données d'apprentissage (52) de la pluralité de seconds ensembles de données d'apprentissage (52) ou le pseudo-échantillon (525) généré par le second générateur (421), et
de l'entraînement du second générateur (421) pour générer le pseudo-échantillon (525) afin de réduire les performances de discrimination du second discriminateur (422).

5. Système de génération de données (100) selon l'une quelconque des revendications 1 à 4, comprenant en outre :
un troisième dispositif d'obtention (113) configuré pour obtenir une pluralité de troisièmes ensembles de données d'apprentissage (53), chacun de la pluralité de troisièmes ensembles de données d'apprentissage (53) incluant une combinaison d'une valeur d'échantillon (531) d'un attribut de la seconde caractéristique, d'un degré de réflexion (532) de la seconde caractéristique, et de la seconde étiquette (522) ; et
un troisième dispositif d'entraînement (117) configuré pour entraîner un troisième modèle d'apprentissage (43) incluant un troisième générateur (431) par l'intermédiaire d'un apprentissage machine en utilisant la pluralité obtenue de troisièmes ensembles de données d'apprentissage (53), l'entraînement du troisième modèle d'apprentissage (43) par l'intermédiaire d'un apprentissage machine incluant l'entraînement du troisième générateur (431) pour générer, à partir du degré de réflexion (532) et de la seconde étiquette (522), une pseudo-valeur (535) de l'attribut de la seconde caractéristique correspondant à la valeur d'échantillon (531) pour chacun de la pluralité de troisièmes ensembles de données d'apprentissage (53),
dans lequel la synthétisation inclut
la génération d'une pseudo-valeur (63) de l'attribut de la seconde caractéristique en fournissant, au troisième générateur entraîné (431), une deuxième valeur d'entrée (223) correspondant à la seconde étiquette (522) et une troisième valeur d'entrée (225) correspondant au degré de réflexion (532), et
la conversion du second pseudo-échantillon (62) pour permettre à une valeur de l'attribut de la seconde caractéristique incluse dans le second pseudo-échantillon (62) de correspondre à la pseudo-valeur générée (63) et la synthétisation du second pseudo-échantillon (62) avec le premier pseudo-échantillon (61).

6. Système de génération de données (100) selon la revendication 1, comprenant en outre :
un troisième dispositif d'obtention (113) configuré pour obtenir une pluralité de troisièmes ensembles de données d'apprentissage (53), chacun des troisièmes ensembles de données d'apprentissage (53) incluant une combinaison d'une valeur d'échantillon (531) d'un attribut de la seconde caractéristique, d'un degré de réflexion (532) de la seconde caractéristique, et de la seconde étiquette (522) ; et
un troisième dispositif d'entraînement (117) configuré pour entraîner un troisième modèle d'apprentissage (43) incluant un troisième générateur (431) par l'intermédiaire d'un apprentissage machine en utilisant la pluralité obtenue de troisièmes ensembles de données d'apprentissage (53), l'entraînement du troisième modèle d'apprentissage (43) par l'intermédiaire d'un apprentissage machine incluant l'entraînement du troisième générateur (431) pour générer, à partir du degré de réflexion (532) et de la seconde étiquette (522), une pseudo-valeur (535) de l'attribut de la seconde caractéristique correspondant à la valeur d'échantillon (531) pour chacun de la pluralité de troisièmes ensembles de données d'apprentissage (53),
dans lequel les données d'image incluent une première composante et une seconde composante différente de la première composante, et la seconde composante doit subir une estimation prédéterminée,
la première caractéristique inclut la première composante,
la seconde caractéristique inclut la seconde composante,
l'estimation prédéterminée inclut la détection de la seconde composante, et
la synthétisation inclut
la génération d'une pseudo-valeur (63) de l'attribut de la seconde caractéristique en fournissant, au troisième générateur entraîné (431), une deuxième valeur d'entrée (223) correspondant à la seconde étiquette (522) et une troisième valeur d'entrée (225) correspondant au degré de réflexion (532) et fournie conformément à une limite de la détection, et
la conversion du second pseudo-échantillon (62) pour permettre à une valeur de l'attribut de la seconde caractéristique incluse dans le second pseudo-échantillon (62) de correspondre à la pseudo-valeur générée (63) et la synthétisation du second pseudo-échantillon (62) avec le premier pseudo-échantillon (61).

7. Système de génération de données (100) selon la revendication 5 ou la revendication 6, dans lequel
le troisième modèle d'apprentissage (43) inclut en outre un troisième discriminateur (432), et
l'entraînement du troisième générateur (431) inclut l'exécution en alternance
de l'entraînement du troisième discriminateur (432) pour discriminer si une valeur d'entrée entrée dans le troisième discriminateur (432) est la valeur d'échantillon (531) obtenue à partir d'un troisième ensemble de données d'apprentissage de la pluralité de troisièmes ensembles de données d'apprentissage (53) ou la pseudo-valeur (535) générée par le troisième générateur (431), et
de l'entraînement du troisième générateur (431) pour générer la pseudo-valeur (535) de l'attribut de la seconde caractéristique afin de réduire les performances de discrimination du troisième discriminateur (432).

8. Système de génération de données (100) selon l'une quelconque des revendications 5 à 7, dans lequel
chacun de la pluralité de troisièmes ensembles de données d'apprentissage (53) inclut en outre la première étiquette (512), et
l'entraînement du troisième modèle d'apprentissage (43) par l'intermédiaire d'un apprentissage machine inclut l'entraînement du troisième générateur (431) pour générer, à partir du degré de réflexion (532), de la seconde étiquette (522), et de la première étiquette (512), une pseudo-valeur (535) de l'attribut de la seconde caractéristique correspondant à la valeur d'échantillon (531).

9. Système de génération de données (100) selon l'une quelconque des revendications 5 à 8, dans lequel
le degré de réflexion (532) inclut un ensemble de valeurs continues.

10. Système de génération de données (100) selon l'une quelconque des revendications 1 à 9, dans lequel
l'obtention de la pluralité de deuxièmes ensembles de données d'apprentissage (52) inclut
l'obtention d'une pluralité de troisièmes échantillons (551) des données d'image, chacun de la pluralité de troisièmes échantillons (551) incluant la première caractéristique et la seconde caractéristique,
l'estimation, en fournissant chacun de la pluralité de troisièmes échantillons (551) à un estimateur (44), d'une valeur d'estimation entrée dans le premier générateur (411) entraîné pour générer un pseudo-échantillon correspondant à chacun de la pluralité de troisièmes échantillons (551), l'estimateur (44) étant entraîné pour estimer, à partir d'un pseudo-échantillon généré par le premier générateur entraîné (411), une entrée fournie au premier générateur (411) pour générer le pseudo-échantillon,
la génération d'un troisième pseudo-échantillon (555) pour chacun de la pluralité de troisièmes échantillons (551) en fournissant la valeur d'estimation estimée au premier générateur entraîné (411), et
la génération du second échantillon (521) dans chacun de la pluralité de seconds ensembles de données d'apprentissage (52) en soustrayant le troisième pseudo-échantillon (555) de chacun de la pluralité de troisièmes échantillons (551).

11. Système de génération de données (100) selon la revendication 10, comprenant en outre :
un quatrième dispositif d'obtention (114) configuré pour obtenir une pluralité de quatrièmes ensembles de données d'apprentissage (54), chacun de la pluralité de quatrièmes ensembles de données d'apprentissage (54) incluant une combinaison d'une valeur d'échantillon d'entrée (541) à fournir au premier générateur entraîné (411) et d'un quatrième pseudo-échantillon (542) généré en fournissant la valeur d'échantillon d'entrée (541) au premier générateur entraîné (411) ; et
un quatrième dispositif d'entraînement (118) configuré pour construire l'estimateur entraîné (44) en entraînant l'estimateur (44) par apprentissage machine en utilisant la pluralité obtenue de quatrièmes ensembles de données d'apprentissage (54), l'entraînement de l'estimateur (44) par apprentissage machine incluant l'entraînement de l'estimateur (44) pour estimer, à partir du quatrième pseudo-échantillon (542), une entrée fournie au premier générateur entraîné (411) pour obtenir une valeur d'estimation ajustée à la valeur d'échantillon (541) pour chacun de la pluralité de quatrièmes ensembles de données d'apprentissage (54).

12. Système de génération de données (100) selon l'une quelconque des revendications 1 à 11, dans lequel
les données d'image incluent un arrière-plan et un premier plan,
la première caractéristique inclut l'arrière-plan, et
la seconde caractéristique inclut le premier plan.

13. Système de génération de données (100) selon l'une quelconque des revendications 1 à 11, dans lequel
les données d'image incluent un produit,
la première caractéristique inclut un arrière-plan incluant le produit, et
la seconde caractéristique inclut un défaut du produit.

14. Procédé de génération de données, comprenant :
la génération, avec un ordinateur, d'un premier pseudo-échantillon (61) incluant une première caractéristique en utilisant un premier générateur entraîné (411),
le premier générateur entraîné (411) étant construit par l'intermédiaire d'un apprentissage machine en utilisant une pluralité de premiers ensembles de données d'apprentissage (51), chacun de la pluralité de premiers ensembles de données d'apprentissage (51) incluant une combinaison d'un premier échantillon (511) de données d'image incluant une première caractéristique et une première étiquette (512) indiquant un type de la première caractéristique,
le premier générateur entraîné (411) étant entraîné par l'intermédiaire de l'apprentissage machine pour générer, à partir de la première étiquette (512), un pseudo-échantillon (515) correspondant au premier échantillon (511) pour chacun de la pluralité de premiers ensembles de données d'apprentissage (51), dans lequel la première étiquette (512) indique un type d'un produit (RA),
l'ordinateur étant configuré pour générer le premier pseudo-échantillon (61) incluant la première caractéristique en fournissant une première valeur d'entrée (221) correspondant à la première étiquette (512) au premier générateur entraîné (411) ;
la génération, avec l'ordinateur, d'un second pseudo-échantillon (62) incluant une seconde caractéristique en utilisant un second générateur entraîné (421),
le second générateur entraîné (421) étant construit par l'intermédiaire d'un apprentissage machine en utilisant une pluralité de seconds ensembles de données d'apprentissage (52), chacun de la pluralité de seconds ensembles de données d'apprentissage (52) incluant une combinaison d'un second échantillon (521) des données d'image incluant une seconde caractéristique différente de la première caractéristique et une seconde étiquette (522) indiquant un type de la seconde caractéristique,
le second générateur entraîné (421) étant entraîné par l'intermédiaire de l'apprentissage machine pour générer, à partir de la seconde étiquette (522), un pseudo-échantillon (525) correspondant au second échantillon (521) pour chacun de la pluralité de seconds ensembles de données d'apprentissage (52), dans lequel la seconde étiquette indique un type de défaut,
l'ordinateur étant configuré pour générer le second pseudo-échantillon (62) incluant la seconde caractéristique en fournissant une seconde valeur d'entrée (223) correspondant à la seconde étiquette (522) au second générateur entraîné (421) ; et
la génération, avec l'ordinateur, d'un nouvel échantillon (65) des données d'image en synthétisant le second pseudo-échantillon généré (62) avec le premier pseudo-échantillon généré (61), le nouvel échantillon (65) montrant le produit (RA) et un défaut du type spécifié ;
dans lequel le nouvel échantillon (65) est utilisé comme un échantillon d'entraînement pour entraîner un modèle d'apprentissage machine pour détecter un défaut dans une image de produit capturée avec une caméra.

15. Programme informatique de génération de données comprenant des instructions qui, lorsque le programme est exécuté par un ordinateur, amènent l'ordinateur à effectuer les opérations comprenant :
la génération d'un premier pseudo-échantillon (61) incluant une première caractéristique en utilisant un premier générateur entraîné (411),
le premier générateur entraîné (411) étant construit par l'intermédiaire d'un apprentissage machine en utilisant une pluralité de premiers ensembles de données d'apprentissage (51), chacun de la pluralité de premiers ensembles de données d'apprentissage (51) incluant une combinaison d'un premier échantillon (511) de données d'image incluant une première caractéristique et une première étiquette (512) indiquant un type de la première caractéristique,
le premier générateur entraîné (411) étant entraîné par l'intermédiaire de l'apprentissage machine pour générer, à partir de la première étiquette (512), un pseudo-échantillon (515) correspondant au premier échantillon (511) pour chacun de la pluralité de premiers ensembles de données d'apprentissage (51), dans lequel la première étiquette (512) indique un type d'un produit (RA),
l'ordinateur étant configuré pour générer le premier pseudo-échantillon (61) incluant la première caractéristique en fournissant une première valeur d'entrée (221) correspondant à la première étiquette (512) au premier générateur entraîné (411) ;
la génération d'un second pseudo-échantillon (62) incluant une seconde caractéristique en utilisant un second générateur entraîné (421),
le second générateur entraîné (421) étant construit par l'intermédiaire d'un apprentissage machine en utilisant une pluralité de seconds ensembles de données d'apprentissage (52), chacun de la pluralité de seconds ensembles de données d'apprentissage (52) incluant une combinaison d'un second échantillon (521) des données d'image incluant une seconde caractéristique différente de la première caractéristique et une seconde étiquette (522) indiquant un type de la seconde caractéristique, dans lequel la seconde étiquette indique un type de défaut,
le second générateur entraîné (421) étant entraîné par l'intermédiaire de l'apprentissage machine pour générer, à partir de la seconde étiquette (522), un pseudo-échantillon (525) correspondant au second échantillon (521) pour chacun de la pluralité de seconds ensembles de données d'apprentissage (52),
l'ordinateur étant configuré pour générer le second pseudo-échantillon (62) incluant la seconde caractéristique en fournissant une seconde valeur d'entrée (223) correspondant à la seconde étiquette (522) au second générateur entraîné (421) ; et
la génération d'un nouvel échantillon (65) des données d'image en synthétisant le second pseudo-échantillon généré (62) avec le premier pseudo-échantillon généré (61), le nouvel échantillon (65) montrant le produit (RA) et un défaut du type spécifié ;
dans lequel le nouvel échantillon (65) est utilisé comme un échantillon d'entraînement pour entraîner un modèle d'apprentissage machine pour détecter un défaut dans une image de produit capturée avec une caméra.
